# EUROPEAN PATENT APPLICATION

(11) **EP 2 541 300 A1**
(43) Date of publication of application: **02.01.2013**
(21) Application number: 11814759.4
(22) Date of filing: 08.08.2011
(51) Int. Cl.: G02B 21/32, B25J 7/00

(54) **MANIPULATOR SYSTEM AND METHOD FOR MANIPULATING MICROSCOPIC OBJECT TO BE MANIPULATED**

(30) Priority: 30.11.2010 JP 2010266118; 06.08.2010 JP 2010177173; 06.08.2010 JP 2010177142
(71) Applicant: NSK Ltd., Tokyo 141-8560 (JP)
(72) Inventor: TANAKA Nobuaki, Fujisawa-shi Kanagawa 251-8501 (JP)
(74) Representative: Weser, Wolfgang
(86) International application number: PCT/JP2011/068048
(87) International publication number: WO 2012/018136

(57) **Abstract**

A manipulator system and a manipulation method of a micromanipulation target object, which are capable of automatically executing a variety of operations about a micromanipulation target object such as an ovum that have hitherto required a skilled technique, are disclosed. A manipulator system includes: a microscope unit observing a micromanipulation target object; a pair of manipulators being electrically drivable in X-, Y- and Z-axis three directions for manipulating the micromanipulation target object; a sample stage receiving a placement of the micromanipulation target object and being electrically drivable in X-Y axis plane directions; a control unit controlling the drive of the manipulators and the drive of the sample stage; and a manipulation unit driving the manipulators and the sample stage via the control unit, wherein a manipulation tool is fitted to the manipulator, the control unit gets stored with positional information of the manipulation tool with respect to a plurality of regions set for the micromanipulation target object, and at least one of relative movements between the regions of the manipulation tool by the sample stage and/or the manipulator is automatically conducted based on the stored positional information.

## Description

### [Technical Field]

The present invention relates to a manipulator system which manipulates a micro object such as a cell.

### [Background Art]

Such a micromanipulation system (refer to, e.g., Patent document 1) is known in the field of a biotechnology that a micro target object like an ovum undergoes a micromanipulation such as injecting a sperm and a DNA (deoxyribo nucleic acid) solution into the ovum and a cell under an observation of a microscope. A micro needle (capillary) is manipulated by use of a micromanipulator within a view field of the microscope, thus performing the micromanipulation such as a gene recombination manipulation and a microscopic insemination manipulation over an analyte.

Non-patent document 1 describes a microinjection method of injecting a minute quantity of DNA directly into an anterior nuclei of a fertilized ovum, the description being such that the ovum before the injection manipulation is put into an upper part of a drop, and the ovum after the injection manipulation is transferred to a lower part of the drop, thus distinguishing from a not-yet-manipulated ovum. Non-patent document 2 describes the micromanipulation system including an ovum cell rotary mechanism configured to dispose four electrodes along the periphery of the ovum cell, apply out-of-phase voltages to the electrodes and rotate the ovum by generating an electric rotation field. Non-patent document 3 gives an in-depth description of an ICSI (Intra-Cytoplasmic Sperm Injection) procedure.

Such a manipulator (refer to, e.g., Patent document 2) is known in the field of the biotechnology as to perform the manipulation over the micro target object like the cell such as injecting a nucleus and the sperm into the ovum cell under the observation of the microscope. A micromanipulator 1000 disclosed in Patent document 2 includes, as in FIG. 41, a holder block 1300, a moving table 1400, a piezoelectric element 1500, a moving stage 1600 and a stepping motor 1700. A pipette 1100 is fitted to a pipette holder 1200, and a glass-made injection capillary 1110 for injecting the nucleus and the sperm into the cell such as the ovum, is connected to the tip of the pipette 1100.

The holder block 1300 is secured to the moving table 1400, and the moving table 1400 is linearly movable along a guide rail 1900 provided on the moving stage 1600. The stepping motor 1700 is installed at the moving stage 1600, and a driving force of the stepping motor 1700 is transferred to the moving table 1400 via an unillustrated screw mechanism etc. With this configuration, the moving table 1400 is linearly moved along the guide rail 1900 to move the holder block 1300, thereby linearly moving the pipette 1100 and the injection capillary 1110 to desired positions via the holder block 1300 and the pipette holder 1200. The piezoelectric element 1500 is configured to include a piezo element which causes a distortion when the voltage is applied, and is connected directly to the holder block 1300. When a pulse voltage is applied to the piezoelectric element 1500, the injection capillary 1110 makes micro-vibrations.

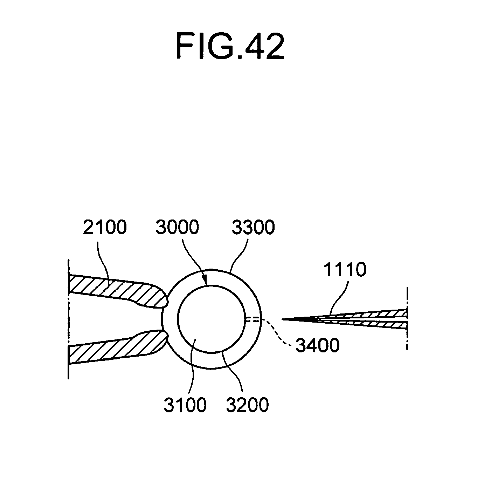

An operation of the injection capillary 1110 based on the micromanipulator 1000 will be described with reference to FIG. 42. The moving table 1400 moves the injection capillary 1110 in a direction AA, and the piezoelectric element 1500 causes the micro-vibrations of the injection capillary 1110. As in FIG. 42, a perforated hole 3400 is thereby formed through a cell membrane 3200 covering a cytoplasm 3100 of the cell 3000 and through a clear zone 3300 which protects the cell 3000 in the periphery of the cell membrane 3200. Next, the injection capillary 1110 passes through the perforated hole 3400 and enters the cell 3000 with the aid of the moving table 1400, whereby the nucleus or the sperm is injected into the cell 3000 from the injection capillary 1110. After the injection, the moving table 1400 is moved in a direction A' opposite to the direction AA, thereby removing the injection capillary 1110 from the cell 3000. Note that a holding capillary 2100 holds the cell 3000 on the occasion of the manipulation described above.

The perforating manipulation using the injection capillary 1110 described above is carried out by driving the piezoelectric element 1500, and the injection capillary 1110 is removed from the cell 3000 by driving the manipulator 1000.

Further, on the occasion of using the manipulator performing the micromanipulation over the micro target object such as the cell described above, microscope images are collected and displayed on a display of a personal computer (PC) etc, and the manipulation is conducted while observing the microscope images on the display. Alternatively, an operator performs the manipulation while observing a target sample through an eyepiece of the microscope.

Further, Patent document 3 discloses a liquid-operated remote control micromanipulator apparatus configured so that the operator can remote-control in micro-motion a micro-tool such as a hyaline electrode under the microscope with a dial by dint of a liquid pressure such as an oil pressure. Still further, Patent document 4 discloses a manipulator system applied to the cell manipulation, in which the operator manipulates a joystick while looking through the eyepiece of the microscope.

### [Documents of Prior Arts]

### [Patent Documents]

[Patent document 1] Japanese Patent Application Laid-Open Publication No.2005-258413
[Patent document 2] Japanese Patent Application Laid-Open Publication No.2004-325836
[Patent document 3] Japanese Patent Application Publication No.3341151
[Patent document 4] International Publication WO2004/015055A1

### [Non-patent Documents]

[Non-patent document 1] "New Gene Engineering Handbook" revised edition Vol.4, Yodosha Co., Ltd., pp.248 - 253.
[Non-patent document 2] "Micromanipulation System", Medical Science Digest Vol. 28, Fourth Issue in 2002, pp.35 - 37.
[Non-patent document 3] "Manipulation Manual of Embryo of Murine", Third Edition, Kindai Publishing Co., Ltd., pp.549-559.

### [Disclosure of the Invention]

### [Problems to be solved by the Invention]

When changing a display magnification of the microscope image displayed on the PC display described above and a microscope magnification, a must-do procedure is to change a display setting on the display or change the magnification of an objective lens of the microscope. Therefore, each time a necessity of changing the magnification arises, an operation for changing the magnification is required, resulting in hindrance against a quick manipulation process of the manipulator.

Further, as in Patent document 3, in the case of manipulating the manipulator including an actuator driven by the liquid pressure or an air pressure, the pressure is transferred via a hose establishing a connection between the manipulator and an interface to be manipulated, however, if the hose for transferring the pressure gets elongated, there is a possibility that a malfunction occurs in the operation, and hence the remote control is hard to perform. Moreover, if distanced far, the remote control cannot be conducted. Still further, if required to install the manipulator in a clean bench, the manipulator cannot be remote-controlled and has to be therefore manipulated in such a way that the operator puts the upper limb into the clean bench, resulting in a large load on the operator. Moreover, in the majority of conventional manipulators, the joystick etc is installed in a location where the microscope is installed, the operator performs the manipulation while looking through the eyepiece, however, a problem is that this manipulation entails a skilled technique for using the joystick because of being conducted without visual observation, and another problem in terms of the manipulation is the vibrations propagated to the microscope when manipulating the joystick.

In the case of conducting the micromanipulation such as the gene recombination manipulation and the microscopic insemination manipulation by use of the capillary within the view field of the microscope, the manipulation of setting the capillary to a predetermined position before and after manipulating the target object (the ovum, the cell, etc) requires the skilled technique accustomed to a basic manipulation of the manipulator.

The microinjection method of the Non-patent document 1 is that the ovum after being manipulated is moved in a lower part of the drop, while the not-yet-manipulated ovum is subsequently fetched from the upper part in order to prevent the already-manipulated ovum and the not-yet-manipulated ovum from being mixed in a culture medium where the injection manipulation is conducted, however, this method has a necessity of getting accustomed to the basic manipulation of the manipulator itself and therefore has a problem that manipulation efficiency declines if manipulated by an unaccustomed operator.

The ovum cell rotary mechanism in Non-patent document 2 is configured to newly provide an electrode function and rotate the ovum by generating the electric field in the periphery of the ovum to be manipulated, and, according to a result thereof, though there is an obstacle neither in fertility nor in potency, the use thereof entails newly introducing facilities.

It is a first object of the present invention, which was devised in view of the problems inherent in the prior arts described above, to provide a manipulator system and a manipulation method of a micromanipulation target object that are capable of automatically executing a variety of manipulations over a micromanipulation target object such as an ovum, which have hitherto required the skilled technique.

As described above, a manipulation of removing an injection capillary from the cell such as the ovum is a human manipulation and is required to be done quickly in a direction opposite to an injecting direction, however, such a quick manipulation depends on a level of performance of the operator, and hence there is a problem that a man-made error is easy to occur in the manipulation of removing the injection capillary from the cell. Further, the same problem occurs in each of the manipulations such as perforation and injection by the injection capillary.

It is a second object of the present invention, which was devised in view of the problems inherent in the prior arts described above, to provide a manipulator system and a manipulation method of a micromanipulation target object that are capable of performing the operations for the manipulations surely, accurately and repeatedly on the occasion of conducting the capillary-based injection manipulation over the micro target object such as the cell.

### [Means for Solving the Problems]

A manipulator system according to the present embodiment includes, as a basic configuration: microscope means observing a micromanipulation target object; a pair of manipulators being electrically drivable in X-, Y- and Z-axis three directions for manipulating the micromanipulation target object; control means controlling the drive of the manipulators; and manipulation means driving the manipulators via the control means.

Namely, to accomplish the first object described above, a manipulator system according to the embodiment includes: microscope means observing a micromanipulation target object; a pair of manipulators being electrically drivable in X-, Y- and Z-axis three directions for manipulating the micromanipulation target object; a sample stage receiving a placement of the micromanipulation target object and being electrically drivable in X-Y axis plane directions; control means controlling the drive of the manipulators and the drive of the sample stage; and manipulation means driving the manipulators and the sample stage via the control means, wherein a manipulation tool is fitted to the manipulator, the control means gets stored with positional information of the manipulation tool with respect to a plurality of regions set for the micromanipulation target object, and at least one of relative movements between the regions of the manipulation tool by the sample stage and/or the manipulator is automatically conducted based on the stored positional information.

According to this manipulator system, at least one of the relative movements between the regions (, e.g., between culture mediums and between drops on a Schale) of the manipulation tool is automatically conducted based on the stored positional information, and hence it is feasible to omit a time-consuming operation of adjusting the position of the manipulation tool after the movement and to manipulate the manipulation tool in the same position at all times. The manipulations over the micromanipulation target object such as the ovum, which have hitherto required the skilled technique, can be automatically executed.

In the manipulator system, it is preferable that when the manipulation makes the relative movement, the sample stage makes the relative movement between the regions, while the manipulator retreats the manipulation tool.

Further, the manipulator system is configured, it is preferable, so that the storage of the positional information is executed by manipulating the manipulation means. The storage operation can be thereby easily executed during the manipulation.

A manipulation method of a micromanipulation target object, executed by using the manipulator system, includes: moving a manipulation tool fitted to a manipulator automatically between a plurality of culture mediums provided for the micromanipulation target object; manipulating the manipulation tool in the culture medium after being moved; and returning thereafter the manipulation tool automatically to the original culture medium.

According to this manipulation method, the manipulation tool is automatically moved from a certain culture medium to another culture medium, then returns to the original culture medium after the manipulation in the former culture medium, and it is therefore possible to eliminate the necessity for the time-consuming operation of adjusting the position of the manipulation tool and to always manipulate the manipulation tool in the same position.

Another manipulator system according to the embodiment includes: microscope means observing a micromanipulation target object; a pair of manipulators being electrically drivable in X-, Y- and Z-axis three directions for manipulating the micromanipulation target object; control means controlling the drive of the manipulators; and manipulation means driving the manipulators via the control means, wherein the control means gets stored with positional information of a manipulation tool when the manipulation tool fitted to the manipulator performs a first manipulation over the micromanipulation target object for a manipulation conducted afterward by the manipulation tool.

According to this manipulator system, the positional information of the manipulation tool with respect to the micromanipulation target object in the first manipulation is stored, and hence, after moving the manipulation tool for another manipulation, it is feasible to automatically return the manipulation tool to the position when in the first manipulation and to easily execute the manipulation afterward. The manipulations over the micromanipulation target object such as the ovum, which have hitherto required the skilled technique, can be automatically executed.

In the manipulator system, it is preferable that the control means automatically controls the movement for a second manipulation of the manipulation tool and focusing of the microscope means after the movement.

Further, it is preferable that the control means executes, after the second manipulation, the control so that the manipulation tool automatically returns to the first manipulation position on the basis of the stored positional information and performs focusing of the microscope means.

According to the embodiment, still another manipulation method of a micromanipulation target object, executed by using the manipulator system, includes: perforating a clear zone of an ovum as a micromanipulation target object with a tip of a manipulation tool fitted to a manipulator; automatically returning thereafter the manipulation tool to a clear zone perforating position after the manipulation tool has moved and conducted a sampling manipulation of a sperm; and performing an injection manipulation of the sperm.

According to the manipulation method of the micromanipulation target object, the position of perforating the clear zone of the ovum is stored, the manipulation tool is automatically returned to the stored clear zone perforating position after the sperm sampling manipulation conducted thereafter, and the sperm injection manipulation can be easily performed.

Still another manipulator system according to the embodiment includes: microscope means observing a micromanipulation target object; a pair of manipulators being electrically drivable in X-, Y- and Z-axis three directions for manipulating the micromanipulation target object; control means controlling the drive of the manipulators; and manipulation means driving the manipulators via the control means, wherein an electrode means for perforating the micromanipulation target object is disposed at the tip of the manipulation tool fitted to the manipulator.

According to the manipulator system, owing to the electrode means disposed at the tip of the manipulation tool, it is feasible to execute the perforating manipulation over the micromanipulation target object, thereby enabling a micro-perforation to be done with a small damage.

According to the manipulator system, it is preferable that the microelectrode as the electrode means and the injection capillary are disposed in a side-by-side relation at the tip of the manipulation tool. After the perforating manipulation using the microelectrode, the manipulation can be done by the injection capillary simply by moving the manipulation tool in parallel.

According to the embodiment, yet another manipulation method of a micromanipulation target object, executed by use of the manipulator system, includes: perforating a clear zone of an ovum as a micromanipulation target object with a microelectrode disposed at the tip of the manipulation tool fitted to the manipulator; and performing thereafter the injection manipulation of a sperm by the injection capillary disposed in the side-by-side relation with the microelectrode.

According to the manipulation method of the micromanipulation target object, after the clear zone of the ovum has been perforated by the microelectrode disposed at the tip of the manipulation tool, the injection capillary disposed in the side-by-side relation with the microelectrode performs the injection manipulation over the sperm, and the injection manipulation can be executed easily and surely through the micro perforated hole formed with the small damage.

Yet yet another manipulator system according to the embodiment includes: microscope means observing a micromanipulation target object; a pair of manipulators being electrically drivable in X-, Y- and Z-axis three directions for manipulating the micromanipulation target object; a sample stage receiving a placement of the micromanipulation target object and being electrically drivable in X-Y axis plane directions; control means controlling the drive of the manipulators and the drive of the sample stage; and manipulation means driving the manipulators and the sample stage via the control means, wherein the control means controls the drive of the manipulator and the drive of the sample stage so as to automatically make a movement to a replacing position for replacing the capillary provided at the tip of the manipulation tool fitted to the manipulator and a movement of the capillary to under a view field of the microscope.

According to the manipulator system, the movement to the replacing position for replacing the capillary and the return movement of the capillary to under the view filed of the microscope, are automatically made, and hence the capillary can be returned to under the view filed of the microscope with high reproducibility after moving to the replacing position.

In the manipulator system, it is preferable that a switch operation unit is disposed for the sequence manipulation in the vicinity of the microscope means, thereby enhancing operability thereof.

To accomplish the second object described above, the manipulator system is configured, it is preferable, so that the manipulator has a structure of a nano-positioner and can conduct the injection into the micro target object by performing a micro-motion of the capillary provided at the tip of the manipulation tool, the manipulation means includes a manipulation unit manipulated by an operator for instructing the control means to perform the motion of the capillary, and the manipulation unit includes a turn manipulation unit which turns at least a portion of the manipulation unit, and the capillary performs at least a part of the injection manipulation by turning the turn manipulation unit.

According to the manipulator system, the manipulation unit for giving the instruction to manipulate the capillary is provided with the turn manipulation unit, and at least a part of the injection manipulation is performed by turning the turn manipulation unit, whereby a man-made error is restrained from occurring in the manipulation for the injection into the micro target object such as the cell and the ovum, and the manipulation can be conducted surely, precisely and repeatedly.

In the manipulator system, the injection manipulation of the capillary includes an operation of perforating the micro target object, an operation of injection into the micro target object and an operation of removing the capillary from the micro target object. For example, the injection into the micro target object can be done by turning the turn manipulation unit, whereby the manipulator can be driven by the single manipulation unit while driving the injector, and the injection manipulation is further facilitated.

Further, it is preferable that the manipulator system is configured so that at least one turn manipulation unit is provided, and the operation of injection into the micro target object and the operation of removing the capillary from the micro target object are conducted by manipulating the turn manipulation unit and a different manipulation unit, separately. Note that at least the two manipulation units are disposed in the side-by-side relation, thereby improving the operability.

To accomplish the second object described above, the manipulator system is configured, it is preferable, so that the manipulator has a structure of a nano-positioner and can conduct the injection into the micro target object by performing a micro-motion of the capillary provided at the tip of the manipulation tool, the manipulation means includes a manipulation unit manipulated by an operator for instructing the control means to perform the motion of the capillary, and the manipulation unit includes a turn manipulation unit which turns at least a portion of the manipulation unit, and the operation of the injection into the micro target object is performed by turning the turn manipulation unit.

According to the manipulator system, the manipulation unit for giving the instruction to manipulate the capillary is provided with the turn manipulation unit, and, when injection manipulation based on the capillary, the injector is manipulated by turning the turn manipulation unit, whereby the injector and the manipulator can be manipulated by the single manipulation unit, and the injection manipulation over the micro target object such as the cell and the ovum can be conducted easily, surely, precisely and repeatedly.

In the manipulator system, it is preferable that the turn manipulation unit is disposed in the vicinity of the manipulation unit. The turn manipulation unit can be easily turned while manipulating the manipulation unit, thereby improving the operability.

Moreover, the manipulator system can be configured so that the manipulator includes a coarse-motion unit which coarsely drives the capillary and a micro-motion unit which minutely drives the capillary, and the control means changes over the coarse-motion and the micro-motion of the capillary on the basis of the manipulation of the manipulation unit.

Note that the manipulation unit described above can be configured to include a so-called pointing device and the turn manipulation unit, and the instruction to manipulate the capillary can be given by manipulating this pointing device.

According to still another embodiment, a manipulation method of a micromanipulation target object, executed by use of the manipulator system including the turn manipulation unit, includes: performing an injection manipulation.

According to the manipulation method of the micromanipulation target object, the injection manipulation can be surely conducted by the capillary, a part of the injection manipulation at this time is performed by turning the turn manipulation unit, whereby the man-made error is restrained from occurring in the manipulation for the injection into the micro target object, and the manipulation can be conducted surely, precisely and repeatedly.

Note that the manipulator system further includes a microscope capable of observing the tip of each capillary and the micro target object, and a display unit (display) configured to include a CRT, a liquid crystal panel, etc for displaying the microscope image on the basis of an image signal given from the microscope, and can be configured to execute the button manipulation by operating the pointing device such as the mouse on the screen of the display unit while displaying the part of the manipulation unit on the display unit.

### [Effect of the Invention]

According to the present invention, it is possible to provide the manipulator system and the manipulation method of the micromanipulation target object that are capable of automatically executing the variety of manipulations over the micromanipulation target object such as the ovum, which have hitherto required the skilled technique.

Further, it is feasible to provide the manipulator system and the manipulation method of the micromanipulation target object that are capable of performing the operations for the manipulations surely, accurately and repeatedly on the occasion of conducting the capillary-based injection manipulation over the micro target object such as the cell.

### [Brief description of the Drawings]

[FIG. 1] A view schematically illustrating a configuration of a manipulator system in a first embodiment.
[FIG. 2] A front view of a piezoelectric actuator usable for the manipulator system in FIG. 1.
[FIG. 3] A sectional view taken along the line A-A in FIG. 2.
[FIG. 4] A perspective view of the piezoelectric actuator in FIG. 2.
[FIG. 5] A perspective view illustrating a state before introducing the manipulator in FIG. 1 into an operating location of the microscope.
[FIG. 6] A perspective view illustrating a state when introducing the manipulator in FIG. 1 into the operating location of the microscope.
[FIG. 7] A block diagram illustrating main components of a control system based on a personal computer (controller) 43 in FIG. 1.
[FIG. 8] A perspective view illustrating a specific example of a joystick in FIGS. 1 and 7.
[FIG. 9] A diagram schematically illustrating a view field of the microscope on the basis of a microscope unit 12 in FIG. 1 as well as showing respective tip positions of capillaries 25, 35 and a manipulation target ovum, and explaining manipulation steps (a) through (e) of replacing the manipulation target ovum.
[FIG. 10] A diagram schematically illustrating the view field of the microscope on the basis of the microscope unit 12 in FIG. 1 as well as showing the respective tip positions of the capillaries 25, 35 and the manipulation target ovum, and explaining the respective manipulation steps (a) through (e) of positioning the manipulation target ovum.
[FIG. 11] A view illustrating examples of a microscopic image and a control screen that are displayed on the display unit 45 in FIG. 7 for explaining the second embodiment.
[FIG. 12] A view, similar to FIG. 11, illustrating an example of selecting a template image in the microscopic image in FIG. 11.
[FIG. 13] A view, similar to FIG. 11, depicting an example of storing the template image selected in FIG. 12.
[FIG. 14] A view, similar to FIG. 11, depicting an example of a created template image.
[FIG. 15] An explanatory view of an arithmetic example of a positional relation in the microscopic image.
[FIG. 16] An explanatory flowchart of steps of creating the template image in the manipulator system in the second embodiment.
[FIG. 17] An explanatory flowchart of steps after creating the template image in FIG. 16.
[FIG. 18] An explanatory flowchart of a specific example of the arithmetic step in FIGS. 16 and 17.
[FIG. 19] An explanatory diagram of a third embodiment.
[FIG. 20] A view schematically illustrating a configuration of the manipulator system according to a fourth embodiment.
[FIG. 21] A block diagram illustrating main components of the control system of the personal computer (controller) for controlling the manipulator system in FIG. 20.
[FIG. 22] A perspective view illustrating a specific example of the joystick in FIG. 21.
[FIG. 23] A schematic plan view illustrating a plurality of culture mediums B1 - B3 within a Schale placed on the sample stage in FIG. 20 and also depicting respective states in which the fields of view of the microscope exist at a culture medium B1(a), a culture medium B2(b) and a culture medium B3(c).
[FIG. 24] A side view schematically illustrating positional relations (a) - (c) between the capillaries and the plurality of culture mediums in the Schale when moved by operating a lever of the joystick in FIG. 20.
[FIG. 25] A side view schematically illustrating the positional relations (a) - (f) between the capillaries and the plurality of culture mediums within the Schale in the fourth embodiment.
[FIG. 26] A view illustrating the positional relations (a) - (h) between the respective capillaries fitted to the manipulators in the fifth embodiment and the micromanipulation target object.
[FIG. 27] A diagram illustrating the respective states (a) - (d) after completion of sperm sampling in FIG. 26.
[FIG. 28] A view illustrating the positional relations (a) - (f) between the capillaries fitted to the respective manipulators in a sixth embodiment and the micromanipulation target object.
[FIG. 29] A block diagram illustrating main components of the control system of the personal computer (controller) 143 for controlling the manipulator system of a seventh embodiment.
[FIG. 30] A view illustrating an example of a switch operation unit disposed in the manipulator system of the seventh embodiment.
[FIG. 31] A view depicting respective manipulation examples (a) - (e) of the switch operation unit in FIG. 30.
[FIG. 32] An explanatory view of moving operations (a) - (d) to the capillary replacing position by the manipulator in the seventh embodiment.
[FIG. 33] An explanatory view of return operations (a) - (d) to the original position from the capillary replacing position in FIG. 32.
[FIG. 34] A schematic view of a light source unit of the manipulator system in the seventh embodiment as viewed from the side surface (from the side of a manipulator 16 in FIG. 20).
[FIG. 35] A schematic view illustrating a configuration of the manipulator system according to an eighth embodiment.
[FIG. 36] A sectional view illustrating an example of a micro-motion mechanism added to the X- and Y-axis table 36 and the Z-axis table 38 in FIG. 35.
[FIG. 37] A block diagram illustrating main components of the control system of the controller 43 in FIG. 35.
[FIG. 38] A perspective view illustrating a specific example of the joystick in FIGS. 35, 37.
[FIG. 39] A diagram schematically illustrating a view field of the microscope by use of the microscope unit 12 in FIG. 35 as well as being an explanatory diagram of respective steps (a) - (d) for the injection into the ovum.
[FIG. 40] A diagram schematically illustrating a screen of a display unit 44 in FIG. 35 for explaining an example of using a mouse in replace of the joystick in FIGS. 37 and 38.

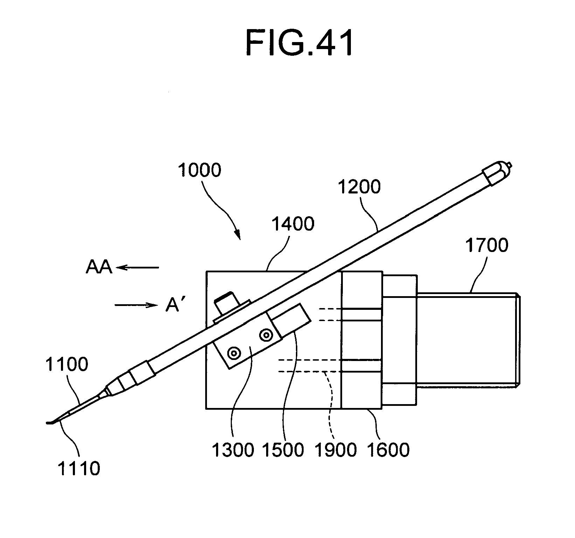

[FIG. 41] A side view illustrating a configuration of a conventional manipulator.
[FIG. 42] An explanatory diagram of a manipulation of the manipulator in FIG. 41.
[FIG. 43] A block diagram illustrating main components of the control system of the controller 43 in FIG. 35 according to a ninth embodiment.
[FIG. 44] A diagram illustrating an example of sliced screens on the display unit in FIG. 43.
[FIG. 45] A perspective view illustrating a specific example of the joystick in FIG. 43.
[FIG. 46] A perspective view schematically illustrating a configuration of the manipulator system according to a tenth embodiment.
[FIG. 47] A perspective view schematically illustrating a configuration of an electrically-driven triaxial manipulator for injection in FIG. 46.
[FIG. 48] A sectional view of a nut rotary actuator 170 in FIG. 47 as viewed when cut by a plane parallel with the flat surface of a θ-stage 164.
[FIG. 49] A perspective view of the nut rotary actuator 170 in FIGS. 47 and 48.
[FIG. 50] A perspective view illustrating the sample stage 110 in FIG. 46.
[FIG. 51] An explanatory block diagram of main components of the PC-based control system in the manipulator system 500 in FIGS. 46 - 50.
[FIG. 52] A perspective view illustrating an example of the joystick in FIG. 51.
[FIG. 53] A view illustrating one example of a controller screen displayed on a display unit 433 of the PC 430 in FIG. 51.
[FIG. 54] An explanatory conceptual diagram of the manipulator system that is remote-controllable via a network according to an eleventh embodiment.
[FIG. 55] An explanatory conceptual diagram of the manipulator system according to a modified example in FIG. 54.
[FIG. 56] An explanatory conceptual diagram of the manipulator system that is remote-controllable via the network according to the eleventh embodiment.
[FIG. 57] An explanatory conceptual diagram of the manipulator system according to a modified example in FIG. 56.
[FIG. 58] An explanatory block diagram of the main components of the control system of the manipulator system according to a twelfth embodiment.
[FIG. 59] A plan view illustrating an example of a wireless interface usable in the manipulator system in FIG. 58.

### [Mode for Carrying out the Invention]

Modes for carrying out the present invention will hereinafter be described by use of the drawings.

### <First Embodiment>

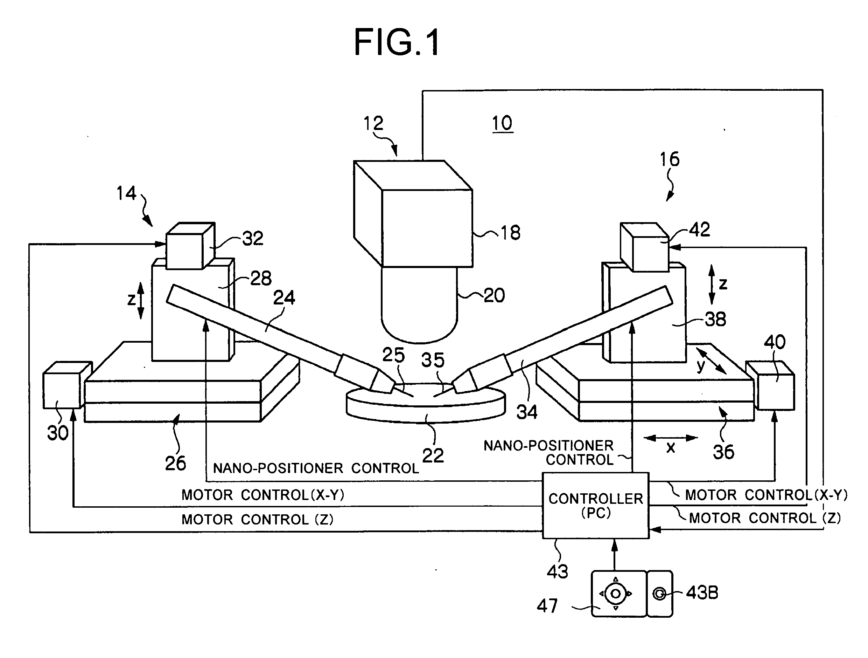

FIG. 1 is a view schematically illustrating a configuration of a manipulator system in a first embodiment. In FIG. 1, a manipulator system 10, which is defined as a system for artificially manipulating a sample under observation of a microscope, includes a microscope unit 12, a manipulator 14 and another manipulator 16, in which the manipulators 14, 16 are disposed in separation on both sides of the microscope unit 12.

The microscope unit 12 includes a camera 18 serving as an image capturing element, a microscope 20 and a base 22 as a sample base. A structure is that the microscope 20 is disposed just above this base 22. Note that the microscope 20 and the camera 18 take an integral structure, and, though an illustration is omitted, there is provided a light source which irradiates light beams toward the base 22.

A sample (unillustrated) is to be placed on the base 22. In this state, the sample on the base 22 is irradiated with the light beams from the microscope 20, and, when the light beams reflected by cells on the base 22 enter the microscope 20, an optical image related to the cell is, after being enlarged by the microscope 20, captured by the camera 18, thereby enabling the sample to be observed based on the image captured by the camera 18.

As depicted in FIG. 1, the manipulator 14 defined as a triaxial manipulator having an X-axis, a Y-axis and a Z-axis is configured by including a pipette 24, an X- and Y-axis table 26, a Z-axis table 28, a driving device 30 that drives the X- and Y-axis table 26, and a driving device 32 that drives the Z-axis table. A capillary 25 serving as a capillary chip is fitted to a tip of the pipette 24.

The pipette 24 is joined to the Z-axis table 28, the Z-axis table 28 is so disposed on the X- and Y-axis table 26 as to be movable up and down, and the driving devices 30, 32 are connected to a controller 43. Note that the controller 43 may be configured by a personal computer (PC).

The X- and Y-axis table 26 is structured to move along the X-axis or the Y-axis by dint of a driving force of the driving device 30, while the Z-axis table 28 is structured to move along the Z-axis (in a direction along a vertical axis) by dint of the driving force of the driving device 32. The pipette 24 jointed to the Z-axis table 28 is configured to move in a three-dimensional space as a movement area according to the movements of the X- and Y-axis table 26 and the Z-axis table 28 and to hold the cell etc on the base 22.

The manipulator 16 classified as an orthogonal triaxial manipulator includes a pipette (an injection pipette) 34, an X- and Y-axis table 36, a Z-axis table38, a driving device 40 which drives the X-and Y-axis table 36 and a driving device 42 which drives the Z-axis table 38, in which the pipette 34 is joined to the Z-axis table 38, the Z-axis table 38 is so disposed on the X- and Y-axis table 36 as to be movable up and down, and the driving devices 40, 42 are connected to the controller 43. A capillary (a glass capillary) 35 is fitted to a tip of the pipette 34.

The X- and Y-axis table 36 is structured to move along the X-axis or the Y-axis by dint of the driving force of the driving device 40, while the Z-axis table 38 is structured to move along the Z-axis (in the direction along the vertical axis) by dint of the driving force of the driving device 42. The pipette 34 jointed to the Z-axis table 38 is configured to move in the three-dimensional space as the movement area according to the movements of the X- and Y-axis table 36 and the Z-axis table 38 and to artificially manipulate the sample on the base 22. Thus, the manipulators 14, 16 are configured substantially in the same way, and the discussion will hereinafter be made by exemplifying the manipulator 16 to which the pipette 34 is joined.

The X- and Y-axis table 36 is structured to move along the X-axis or the Y-axis by dint of the driving force of the driving device 40 (motor), while the Z-axis table 38 is structured to move along the Z-axis (in the direction along the vertical axis) by dint of the driving force of the driving device 42 (motor), in which the pipette 34 equipped with a needle (capillary) to be inserted into an insertion target cell on the base 22 is joined to the table 38.

That is, the X- and Y-axis table 36 and the Z-axis table 38 move in the three-dimensional space as the movement area embracing the cell on the base 22 by the driving forces of the driving devices 40, 42 and are constructed as coarse adjustment mechanisms (triaxial movement tables) which are coarsely driven (moved) to an insertion position for inserting the needle into the cell (sample) on the base 22 from the tip side of the pipette 34.

Further, a joint portion between the Z-axis table 38 and the pipette 34 is equipped with a function as a nano-positioner. The nano-positioner is configured to support the pipette 34 so that the pipette 34 is unrestrictedly movable in its installation direction and to perform micro-drive of the pipette 34 along the longitudinal direction (the axial direction).

Specifically, the joint portion between the Z-axis table 38 and the pipette 34 is equipped with a micro-motion mechanism 44 as the nano-positioner.

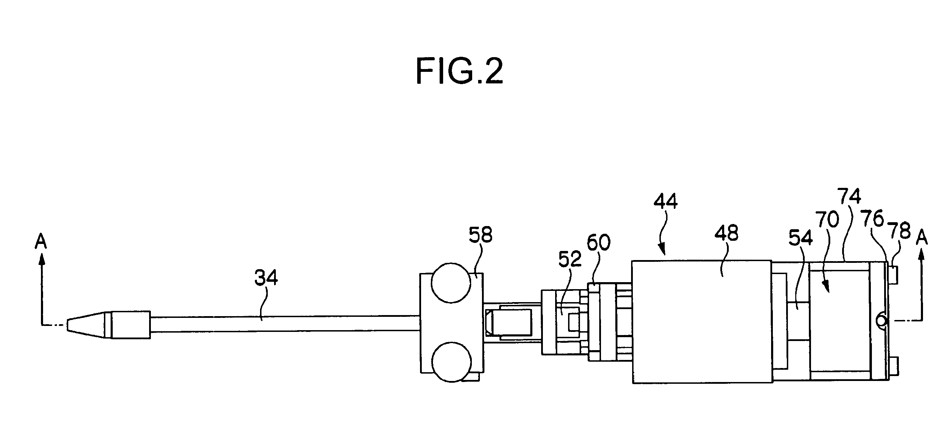

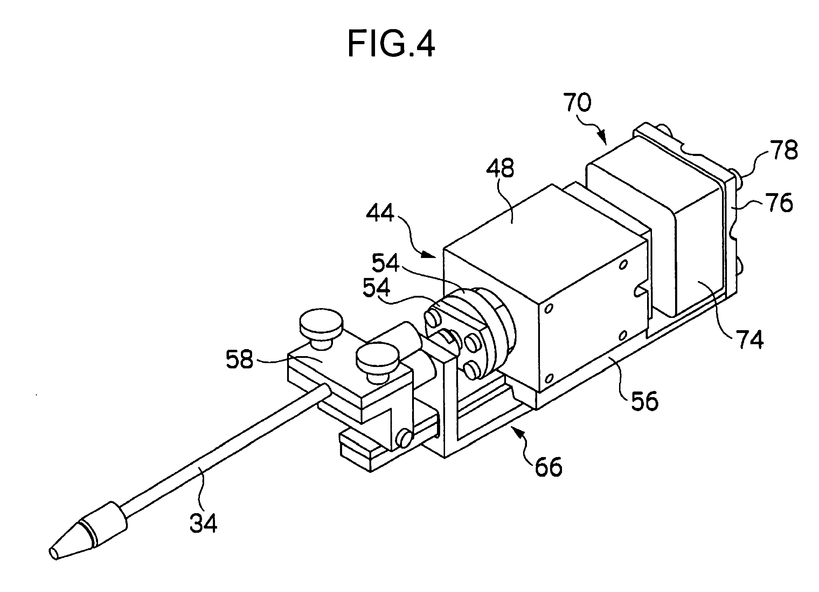

The micro-motion mechanism 44 includes, as depicted in FIGS. 2 to 4, a housing 48 building up a body of a piezoelectric actuator, and a screw shaft 52 formed with a screw portion along an outer periphery and a hollow rotary shaft 54 surrounding the screw shaft 52 are inserted into the housing 48 formed substantially in a cylindrical shape with the pipette 34 being set as a driven target. A bottom portion of the housing 48 is fixed to a base 56.

A proximal end of the pipette 34 is joined via a jig 58 to a front end of the screw shaft 52, a ball screw nut (BS nut) 60 defined as a screw element, which is screw-connected to a screw portion formed on an outer periphery of the screw shaft 52, is fitted to a middle portion of the screw shaft 52, and a slider 62A is connected to between the jig 58 and the screw shaft 52. The slider 62A is disposed in a direction substantially orthogonal to the base 56 and is joined to a linear guide 66 with a notch 64 being interposed therebetween. The linear guide 66 is disposed on the side of a bottom portion of the base 56 and is joined to the base 56 movably along the axial direction of the screw shaft 52 via a bearing 68.

To be specific, the linear guide 66 is configured to reciprocate the slider 62A supporting the front end of the screw shaft 52 along the base 56 in synchronization with the movement of the screw shaft 52 in the axial direction. On this occasion, the linear guide 66 slidably supports a portion of the screw shaft 52 via the slider 62A, which portion is closer to the pipette 34 than the ball screw nut 60, and hence a linear motion of the screw shaft 52 can be transferred to the pipette 34.

The ball screw nut 60 is fixed to a stepped portion 54a at one end (front end) of the rotary shaft 54 in the axial direction and is screw-connected to the screw portion on the outer periphery of the screw shaft 52, thus supporting unrestrictedly the screw shaft 52 to make the reciprocations (linear motions) along the axial direction thereof. Namely, the ball screw nut 60 is configured as an element for converting the rotary motion of the rotary shaft 54 into the linear motion of the screw shaft 52.

The other end of the rotary shaft 54 in the axial direction is joined to a rotary portion within a hollow motor 70. On a bottom side of a housing 74 of the hollow motor 70, a bolt 78 is fixed to the base 56 via a rubber washer 76 serving as an elastic member. When the hollow motor 70 is driven, the rotary shaft 54 is rotated, then the rotary motions of the rotary shaft 54 are transferred to the screw shaft 52 via the ball screw nut 60, and the screw shaft 52 makes the linear motions along the axial direction thereof. Note that a connection between the motor 70 and the rotary shaft 54 may involve using coupling.

On the other hand, bearings 80, 82 are housed adjacent to a stepped portion 54a of the rotary shaft 54 with an inner race spacer 84 being interposed therebetween. The bearings 80, 82 are respectively equipped with inner races 80a, 82a, outer races 80b, 82b and balls 80c, 82c inserted in between the inner races and the outer races; the inner races 80a, 82a are fitted to the outer peripheral surface of the rotary shaft 54; and the outer races 80b, 82b are fitted to the inner peripheral surface of a housing 48, thereby supporting the rotary shaft 54 rotatably. The bearings 80, 82 are fixed to the rotary shaft 54 by lock nuts 86 with the inner race spacer 84 being interposed therebetween. The bearing 80 abuts on the stepped portion 54a and an annular spacer 90 within the housing 48, whereby an axial movement of the rotary shaft 54 is regulated. An annular piezoelectric element 92 and the annular spacer 90 are disposed between the outer race 82b of the bearing 82 and a cover 88 of the housing 48.

Further, preloads are applied to the bearings 80, 82 and the piezoelectric element 92 by adjusting a length of the spacer 90 and closing the cover 88.

To be specific, when adjusting the length of the spacer 90 and closing the cover 88, fastening forces, i.e., preloads corresponding to positions thereof are applied as pressing forces acting in the axial direction to the outer races 80b, 82b of the bearings 80, 82, and simultaneously the preload is applied also to the piezoelectric element 92. The predetermined preloads are thereby applied to the bearings 80, 82 and the piezoelectric element 92, and a gap 94 between the outer races of the bearings 80, 82 is formed as a distance therebetween in the axial direction.

The piezoelectric element 92 is connected to the controller 43 serving as a control circuit via a lead wire (unillustrated) and is configured as one element of a piezoelectric actuator which stretches and contracts along the longitudinal direction (the axial direction) of the rotary shaft 54 in a way that corresponds to a voltage given from the controller 43. Namely, the piezoelectric element 92 is configured to stretch and contract along the axial direction of the rotary shaft 54 in response to an applied voltage from the controller 43, thereby making the micromovement of the rotary shaft 54 along the axial direction. When the rotary shaft 54 makes the micromovement along the axial direction, this micromovement is transferred to the pipette 34 via the screw shaft 52, and it follows that the microadjustment of the position of the pipette 34 is made.

In the configuration described above, on the occasion of driving the injection manipulator 16, after the injection pipette 34 has been made close to the cell on the base 22 and then positioned by roughly driving the X- and Y-axis table 36 and the Z-axis table 38, the micro-drive of the pipette 34 is done by use of the micro-motion mechanism 44.

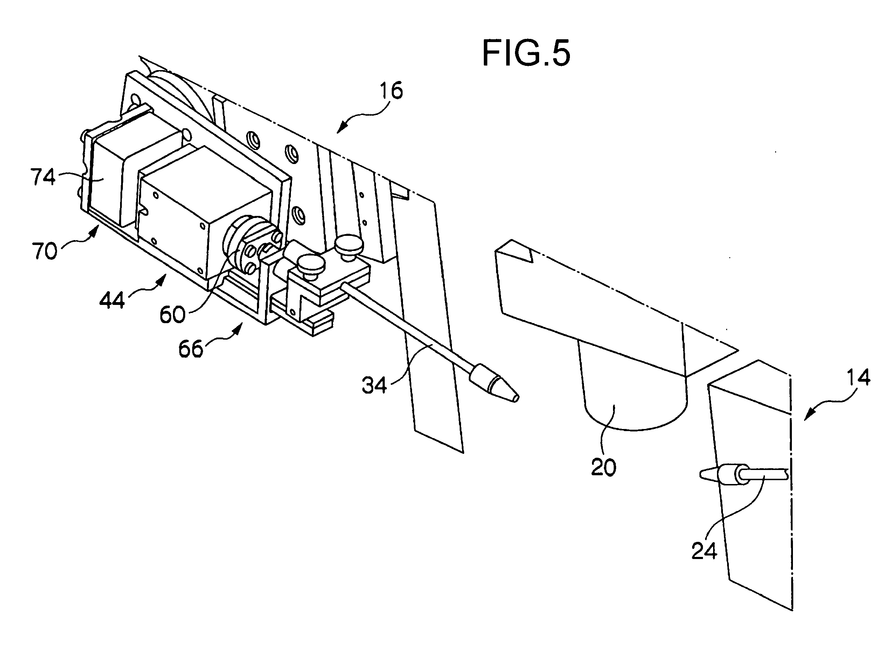

Specifically, on the occasion of setting a glass capillary serving as the capillary 35 to the pipette 34, as illustrated in FIG. 5, the manipulators 14, 16 are driven to become such a state that the pipette 34 is retreated from the base 22 disposed in a operation area of the microscope. On the occasion of setting the glass capillary 35 to the pipette 34, a sufficient operation space is thereby acquired.

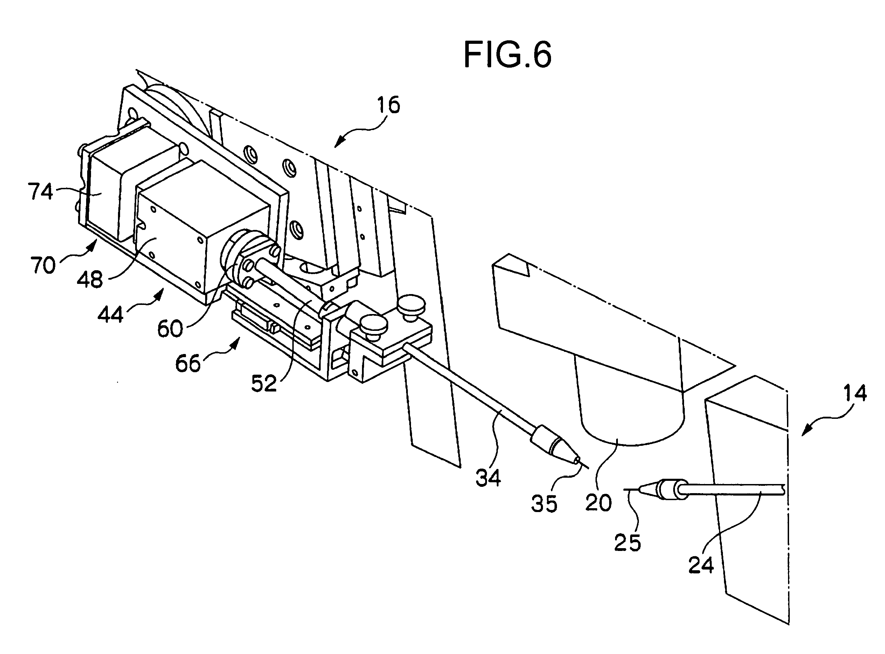

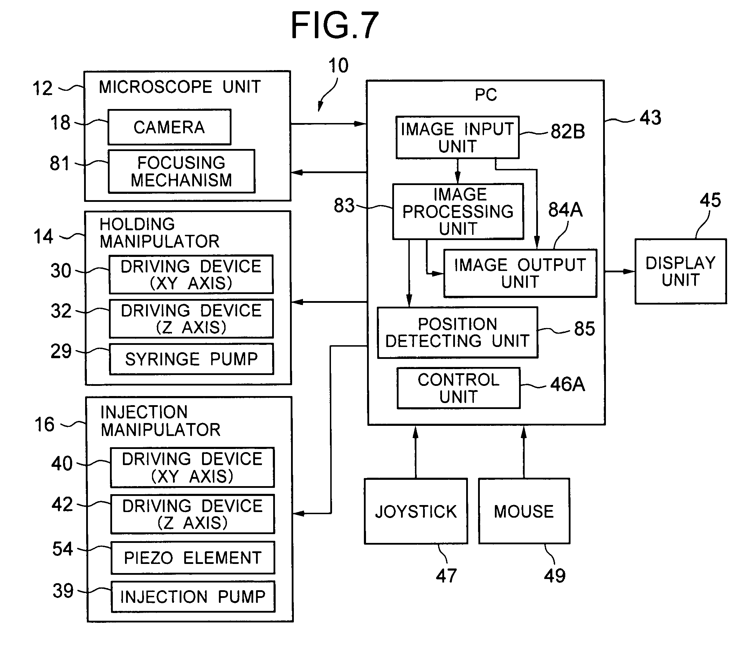

After fitting the glass capillary 35 to the pipette 34, the manipulators 14, 16 are driven based on an instruction given from the controller 43, and, as depicted in FIG. 6, the pipette 34 fitted with the glass capillary 35 is moved onto the base 22 defined as the operation area of the microscope. An operation method at this time can involve using a method of employing a joystick 47, a button 43B and a mouse 49 (FIG. 7).

When moving the glass capillary 35 to the operation area of the microscope, in the case of the first operation (for the first time), a view field magnification of the microscope is decreased, and, immediately when confirming the glass capillary 35 existing within the view field of the microscope 20 by driving the actuator, the drive of the actuator is stopped.

Thereafter, the glass capillary 35 is moved to an optimum position within the view field of the microscope 20 by driving the actuator in a way that makes use of image processing of the controller 43, and then the drive of the actuator is stopped. At this time, a moving quantity of the actuator driven on the occasion of the first operation is stored in the controller 43. Hereat, the moving quantity or the moved position may be stored in the form of X-, Y- and Z-coordinates from a predetermined reference position. Further, if required at this time, the X-, Y- and Z-drive systems may also be driven. Moreover, along with this, a position of an objective lens in a state where the objective lens of the microscope 20 comes in focus may be stored as coordinates from the predetermined reference position.

Next, the manipulator 16 is manipulated, and, if a Schale or the glass capillary 35 needs replacing, there is performed the operation for retreating the glass capillary 35 from the operation area of the microscope by driving the actuator. At this time, the glass capillary 35 may be driven to the setting position or the predetermined reference position stored in the controller 43 by operating the button 43B and may also be retreated to an arbitrary position by use of the joystick 47.

On the other hand, in the case of moving the glass capillary 35 to the operation area of the microscope, the controller 43 is still stored with the position that is set first time, and hence the manipulator 16 can easily adjust the position of the glass capillary 35.

Further, even if the glass capillary 35 needs replacing during a series of cell manipulating operations, the glass capillary 35 can be set without removing the pipette 34 from the manipulator 16, thereby enabling the operation efficiency to be improved.

In the case of using the capillary taking a uniform shape as the glass capillary 35, the efficiency can be more improved by using the manipulator 16 according to the present invention than by the conventional manipulator.

Further, even when the glass capillary 35 has variations in shape, the pipette 34 can be made to perform the linear reciprocating motions by driving the actuator (the screw shaft 52), and it is therefore feasible to make the microadjustment of the position of the glass capillary 35.

Moreover, when the glass capillary 35 is positioned in a cell inserting position, a voltage for injection is applied to the piezoelectric element 92 to conduct the micro-drive of the micro-motion mechanism 44, whereby the injecting operation can be made by the pipette 34. On this occasion, a weak spring element is not disposed between the piezoelectric element 92 and the jig 58 for supporting the pipette 34, and, since the bearing defined as a high-rigidity spring element is employed, a high responsiveness can be obtained.

A voltage waveform of the voltage applied to the piezoelectric element 92 can involve using a sine wave, a square wave and a triangular wave. Further, as a method of applying the voltage to the piezoelectric element 92, the operator presses the button 43B, during which the piezoelectric element 92 may be driven by consecutively outputting the signal waveforms and may also be driven by using burst waveforms.

In the first embodiment, a displacement quantity between the inner race 80a and the outer race 80b of the bearing 80 in the bearings 80, 82, i.e., a displacement quantity that is one-half as small as a displacement of the piezoelectric element 92, is set as a displacement quantity of the pipette 34, and it therefore follows that a voltage for the micro-motion, which is obtained by adding a control voltage for giving a displacement that is twice the displacement quantity of the micro-motion and an initial setting voltage, is applied to the piezoelectric element 92.

For example, when a stretch 2x occurs in the piezoelectric element 92, a pressing force based on this stretch is added to a preload before performing the micro-motion control, thereby pressing the outer race 82b of the bearing 82, moving the outer race 80b of the bearing 80 in the axial direction and absorbing the axial stretch of the piezoelectric element 92 as the gap 94 between the outer races of the bearings 80, 82 is further narrowed by 2x.

A displacement of this gap 94 is caused according as the bearings 80, 82 are displaced on a per-x basis in the axial direction with resilient deformation and the outer race 80b of the bearing 80 is displaced by 2x together in the axial direction.

Reversely when the piezoelectric element 92 gets contracted by 2x, the pressing force decreases, then the resilient deformation of each of the bearings 80, 82 is reduced on the per-x basis, and it follows that the outer race 80b of the bearing 80 is displayed by 2x together in the axial direction, thereby absorbing the contracted portion of the piezoelectric element 92.

Thus, the displacement x of the gap 94 is absorbed separately by the bearings 80, 82, and hence, when the forces for pressing the bearings 80, 82 each other are balanced, the inner races 80a, 82a of the bearings 80, 82 are displaced by x in the axial direction together with the rotary shaft 54. The pipette 34 joined to the rotary shaft 54 via the screw shaft 52 is thereby displaced by x in the axial direction. That is, the displacement quantity, which is one-half as small as 2x of the piezoelectric element 92, becomes the micro-motion displacement quantity of the pipette 34, and the pipette 34 is thus inserted into an insertion position. After the pipette 34 has been positioned in the insertion position, the injection voltage is applied to the piezoelectric element 92, at which time it follows that the pipette 34 performs the injecting operation.

According to the first embodiment, the rotary motion of the rotary shaft 54 with the drive of the hollow motor 70 is converted into the linear motion via the ball screw nut 60 and is thus transferred to the screw shaft 5, the pipette 34 is driven to make the rough movement along the axial direction thereof by dint of the linear motion of the screw shaft 52 as the hollow motor 70 is driven to make the rough movement, and the pipette 34 is driven to make the micro-motion along the axial direction thereof by dint of the linear motion of the screw shaft 52 with the micro-motion of the micro-motion mechanism 44, thereby enabling the pipette 34 to make the linear motion simply by fitting the glass capillary 35 to the pipette 34, and making the time-consuming operation unnecessary when moving the pipette 34 toward the base 22 disposed in the operation area of the microscope and when retreating the pipette 34 from the base 22. Moreover, the setting position information etc is stored in the controller 43, and the positioning operation can be automatically conducted based on this information, thereby enabling the more efficient operation to be attained.

Next, the control by the personal computer (controller) 43 of the manipulator system 10 in FIG. 1 will hereinafter be described with reference to FIG. 7. FIG. 7 is a block diagram illustrating main components of the control system of the personal computer (controller) 43 in FIG. 1.

The personal computer 43 in FIGS. 1 and 7 includes hardware resources such as a CPU (Central Processing Unit) as an arithmetic means, and a hard disk, a RAM (Random Access Memory) and a ROM (Read Only Memory) as storage means, and outputs a drive instruction so that the CPU carries out a variety of arithmetic operations on the basis of predetermined programs, and a control unit 46A performs a variety of control according to arithmetic results. To be specific, the control unit 46A controls a focusing mechanism 81 of a microscope unit 12 in FIG. 1, drive devices 30, 32 of the manipulator 14, a syringe pump 29, drive devices 40, 42 of the manipulator 16, an injection pump 39 and a piezoelectric element 92 of the micro-motion mechanism 44, and outputs the drive instructions thereto through drivers and amplifiers provided according to the necessity.

Further, in addition to the keyboard serving as an information input means, the joystick 47, the mouse 49 and the button 43B (FIG. 1) are connected to the personal computer 43, and further a display unit 45 configured by including a CRT or a liquid crystal display is connected to the personal computer 43, in which a microscope image captured by the camera 18 and a variety of control screens are displayed on the display unit 45.

Moreover, the control unit 46A is configured to automatically drive the manipulators 14, 16 in a predetermined sequence. The control unit 46A sequentially outputs the drive instructions thereto on the basis of the arithmetic results of the CPU through the predetermined programs, and such sequential drives are thereby carried out, in which in the case of manipulating a multiplicity of ova on the base 22, the manipulators 14, 16 are configured to perform an operation for distinguishing already-manipulated ova from pre-manipulating ova.

Further, the personal computer 43 includes: an image input unit 82B to which to input an image signal of the view field of the microscope that is captured by the camera 18 through the microscope 20; an image processing unit 83 that executes the image processing about the image signal given from the image input unit 82B; an image output unit 84A that outputs image information before and after the image processing to the display unit 45; and a position detecting unit 85 for detecting a position of a nucleus of the manipulation target ovum of which the image is captured by the camera 18, a position of the holding capillary 25 and a position of the injection capillary 35 on the basis of the image information after the image processing, in which the respective units 82 - 85 are controlled by the control unit 46A.

The image processing unit 83 executes, e.g., an edge extraction process and pattern matching in order to detect the position of the detection target; the position detecting unit 85 detects, based on a result of this process, the position of the nucleus of the ovum and the positions of the capillaries 25, 35; and the drives of the capillaries 25, 35 are controlled based on the detected positions thereof or information on these detected positions or position information that is preset or set during the operation.

Furthermore, the microscope image of the micromanipulation target such as the ovum and items of information on the arithmetic results are displayed including the images, captured by the camera 18, of the capillaries 25, 35 on the display unit 45.

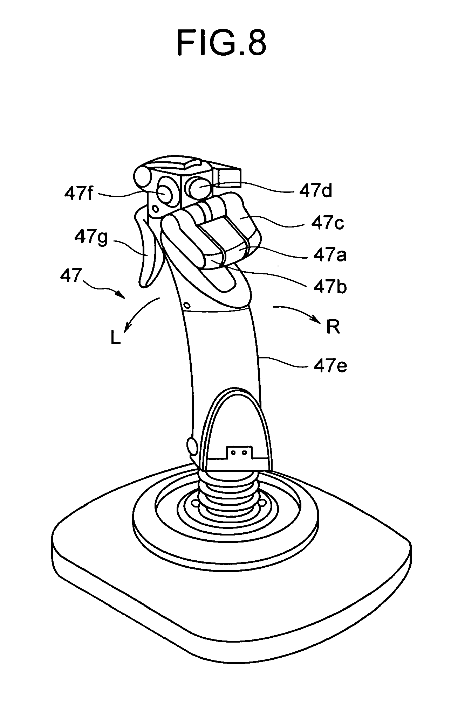

The respective operations of the microscope unit 12 and the manipulators 14, 16 in FIGS. 1 and 7 are controlled by the control unit 46A in FIG. 7 on the basis of the input information given through the operation of the joystick 47. In the first embodiment, the joysticks 47 are prepared on a one-by-one basis for the holding manipulator 14 and the injection manipulator 16. FIG. 8 shows a perspective view illustrating a specific example of the joystick in FIGS. 1 and 7. Note that the microscope unit 12 and the manipulators 14, 16 may be operated by one single joystick and may also be operated by three or more joysticks.

As in FIG. 8, the joystick 47 includes: a body unit (handle) 47e that is erected from a base plate and can be operated in the way of being inclined to a right side R and a left side L and being also twisted while being grasped by an operator; first, second and third push button switches 47a, 47b, 47c disposed in a side-by-side relation in an upper portion thereof; a multi-way hat switch 47d such as a 4-way or 8-way hat switch disposed in a still further upper portion thereof; and a trigger switch 47g disposed on the side opposite to the push button switches 47a - 47c.

The push button switches 47a - 47c, the multi-way hat switch 47d, the body unit 47e and the trigger switch 47g of the joystick 47 in FIGS. 1 and 7 are each assigned an operation function of driving the focusing mechanism 81 of the microscope unit 12, the manipulators 14, 16 in the X-, Y- and Z-directions, the syringe pump 29, the injection pump 39 and the piezoelectric element 92. For instance, the manipulators 14, 16 can be driven in the X-and Y-directions by tilting the body unit 47e toward the right side R and the left side L while pulling the trigger switch 47g and can be driven in the Z-direction by twisting the body unit 47e.

Further, with respect to the holding manipulator 14, the focusing mechanism 81 is driven to enable the microscope 20 to be focused by pressing an upward/downward button of the multi-way hat switch 47d; the manipulation target object such as the ovum can be rotated on the X-Y plane and the Y-Z plane by pressing a rightward/leftward button; and, when pressing one of the push button switches 47b, 47c serving to adjust the syringe, a suction pressure (negative pressure) of the holding capillary 25 by the syringe pump 29 can be adjusted. Further, for example, the manipulators 14, 16 can be sequentially driven by use of the push button switch 47a. Moreover, the controller 43 can be also stored with the position information of the respective portions related to the focusing of the microscope 20 as the moving quantity or the coordinates.

Further, with respect to the injection manipulator 16, the micro-motion on the X-Y plane can be controlled based on the motor drive by using the multi-way hat switch 47d, the push button switches 47b, 47c serve to adjust the syringe, and the push button switch 47a serve to control an ON/OFF operation of perforation drive.

The manipulator 14 in FIGS. 1 and 7 is driven by operating the switches of the joystick 47 in FIG. 8, then the holding capillary 25 holds the ovum etc on the base 22, and the suction pressure (negative pressure) for holding the ovum is controlled.

Furthermore, the manipulator 16 is driven by operating the switches of the joystick 47; a tip of the injection capillary 35 is displaced linearly in the injecting direction; a predetermined solution is injected toward the ovum from the injection capillary 35 inserted into the ovum by driving the injection pump 39; if further required, a perforation voltage is applied to the piezoelectric element 92 during or after the drive of the capillary 35; the piezoelectric element 92 is thereby driven; an operation for perforating the ovum by making a minute quantity of movement (micromovement) in a position where the injection capillary 35 gets close to or abuts on the ovum; and the predetermined solution is injected into the ovum from the injection capillary 35 inserted into the ovum by driving the injection pump 39. Thereafter, the injection capillary 35 is driven so as to be removed from the position within the ovum.

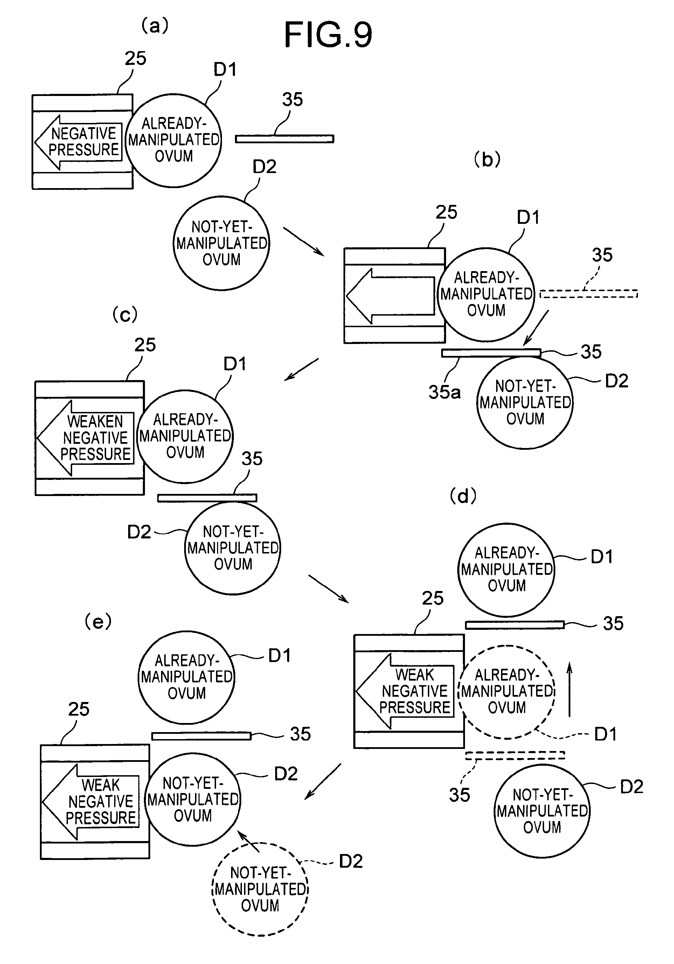

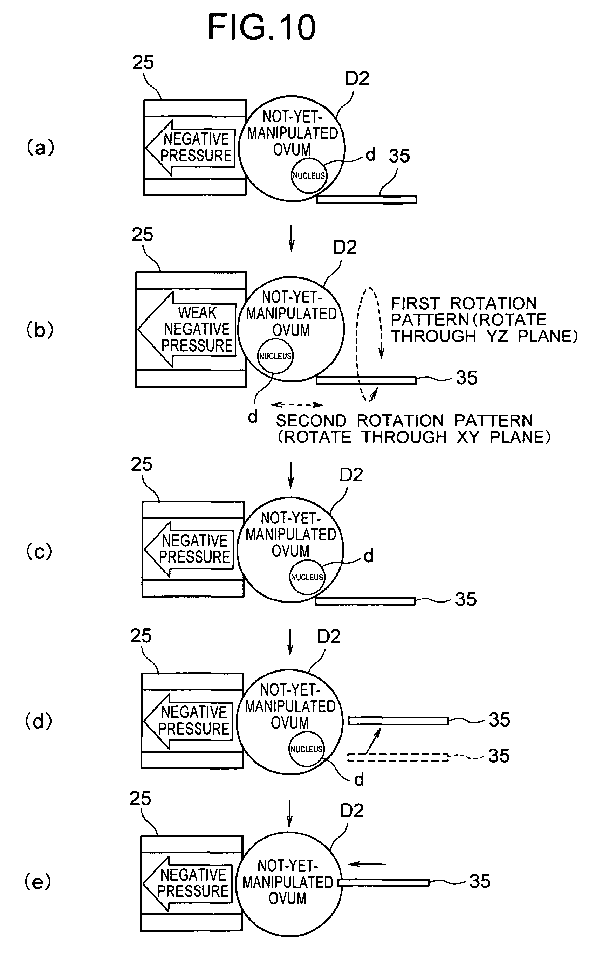

Next, the operations of the manipulator system 10 in FIGS. 1 - 8 will be described with further reference to FIGS. 9 and 10.

FIG. 9 is a diagram schematically illustrating the view field of the microscope on the basis of the microscope unit 12 in FIG. 1 as well as showing the respective tip positions of the capillaries 25, 35 and the manipulation target ovum and is also the diagram for explaining manipulation steps (a) through (e) of replacing the manipulation target ovum. FIG. 10 is a diagram similarly showing the respective tip positions of the capillaries 25, 35 and the manipulation target ovum and is also the diagram for explaining the respective manipulation steps (a) through (e) of positioning the manipulation target ovum.

For example, when performing a DNA microinjection with respect to a multiplicity of ova on the base 22 in FIG. 1, it is required to replace the ova sequentially by moving the ova in a way that distinguishes between an ovum already undergoing the injection manipulation and a not-yet-manipulated ovum and setting the not-yet-manipulated ovum afresh, however, such an ovum replacing step is automatically executed by the manipulator system 10 in sequence drive as follows.

FIG. 9(a) illustrates a state in which the holding capillary 25 holds by a predetermined negative pressure an already-manipulated ovum D1 that finishes receiving the injection manipulation via the injection capillary 35, and this injection capillary 35 is removed from the already-manipulated ovum D1. In this state, when switching ON the trigger switch 47g of the joystick 47 in FIG. 8, the manipulators 14, 16 are sequentially driven as below.

To be specific, the control unit 46A recognizes, based on a detection result of the position detecting unit 85 in FIG. 7, a positional relation between the injection capillary 35 and the holding capillary 25 in the status quo depicted in FIG. 9(a).

Next, as in FIG. 9(b), the injection capillary 35 is moved from a position of a broken line in FIG. 9(b) to a predetermined position of a solid line by driving the injection manipulator 16. As for this predetermined position, for instance, a tip 35a of the injection capillary 35 is set in the vicinity of a lower part in the drawing at the tip of the holding capillary 25, and the injection capillary 35 is positioned between a not-yet-manipulated ovum D2 and the already-manipulated ovum D1, thereby distinguishing between the not-yet-manipulated ovum D2 and the already-manipulated ovum D1.

Next, as in FIG. 9(c), during or after the execution of the moving operation in FIG. 9(b), a pressure state of the negative pressure of the holding capillary 25 is changed to a positive pressure to a predetermined degree to weaken the negative pressure by controlling the syringe pump 29 in FIG. 7, thus slackening the holding force on the ovum. It is desirable that this operation is performed to attain not a pressure state of complexly releasing the ovum but a pressure state of such an extent as to lightly hold the ovum.

Subsequently, as in FIG. 9(d), the injection capillary 35 is moved upward in the drawing from a position of the broken line in FIG. 9(d) to a position of the solid line by driving the injection manipulator 16. At this time, the loosely held already-manipulated ovum D1 is released from the holding capillary 25 and moved to the position of the solid line from the position of the broken line in FIG. 9(d) as the injection capillary 35 moves.

Then, as in FIG. 9(e), the pressure state of the holding capillary 25 is under the weak negative pressure, and hence the not-yet-manipulated ovum D2, which exists in the lower part of the drawing and is manipulated next, is automatically moved to the position of the solid line from the position of the broken line in FIG. 9(e) and held by the holding capillary 25. At this time, the injection capillary 35 is positioned between the already-manipulated ovum D1 and the not-yet-manipulated ovum D2, and a partitioning function is exhibited so as not to mix the already-manipulated ovum D1 and the not-yet-manipulated ovum D2 together, whereby these ova can be prevented from being mixed.

As described above, the already-manipulated ovum D1, which finishes undergoing the injection manipulation of the injection capillary 35, is released from the holding capillary 25 and then moved, while the holding capillary 25 holds the next not-yet-manipulated ovum D2 and can set this ovum D2, thereby enabling the already-manipulated ovum to be automatically replaced with the not-yet-manipulated ovum. Besides, the already-manipulated ovum D1 is partitioned by the injection capillary 35 and can be thus prevented from being mixed with the not-yet-manipulated ovum D2.

Next, as in FIG. 10(a), the injection capillary 35 is moved to the predetermined position by driving the injection manipulator 16. This predetermined position is, e.g., in the vicinity of the lower part, in a direction indicated by 4 o'clock - 5 o'clock of a timepiece, of the not-yet-manipulated ovum D2. In this state, when a nucleus d of the not-yet-manipulated ovum D2 can be confirmed in the predetermined position as a microscopic image on the display unit 45, the holding force of the holding capillary 25 is strengthened by controlling the syringe pump 29, thus surely holding the not-yet-manipulated ovum D2.

When the not-yet-manipulated ovum D2 is surely held as described above, it is desirable that the nucleus d to be injected can be confirmed by way of the microscopic image in the direction of 3 o'clock of the timepiece. Namely, the predetermined position of the nucleus d is in the direction of 3 o'clock of the timepiece. A reason for this is that a holding axis becomes coaxial with an injection axis by setting the injecting location in the direction of 3 o'clock of the timepiece, thereby facilitating the injection by the operator. Further, when the nucleus d of the not-yet-manipulated ovum D2 is positioned in the direction of 9 o'clock, there is a possibility that the injection capillary 35 abuts on the holding capillary 25 and gets broken off when injecting, and it is therefore preferable to be set in the direction of 3 o'clock.

Moreover, as in FIG. 10(b), if the nucleus d cannot be confirmed in the predetermined position (in the direction of 3 o'clock) in the not-yet-manipulated ovum D2, the control unit 46A automatically controls the injection capillary 35 to rotate the not-yet-manipulated ovum D2 with a first rotation pattern on the Y-Z plane in FIG. 10(b) or with a second rotation pattern on the X-Y plane. At this time, the negative pressure caused by the holding capillary 25 remains weak, then the rotating operation is performed in such a way that the injection capillary 35 flips the not-yet-manipulated ovum D2 with the first rotation pattern or that the injection capillary 35 pokes the not-yet-manipulated ovum D2 with the second rotation pattern, the control unit 46A determines, based on the detection result of the nucleus d that is given by the position detecting unit 85 in regard to the image information given from the camera 18, which direction the not-yet-manipulated ovum D2 is rotated in, and this rotating operation continues till the nucleus d can be confirmed in the predetermined position. Hereat, the focusing mechanism 81 of the microscope unit 12 is operated by a predetermined switch of the joystick 47 for every rotating operation and is driven while confirming the position of the nucleus d of the not-yet-manipulated ovum D2 on the display unit 45.

In the way described above, as in FIG. 10(c), after positioning the nucleus d of the not-yet-manipulated ovum D2 in the predetermined position, focusing with the image information being set as a determination value is carried out in a way that drives the Z-axis of the injection manipulator 16 fitted with the injection capillary 35 to move up and down so that a focal point of the nucleus d gets coincident with a focal point of the injection capillary 35, thereby setting the injection capillary 35 in a position in the Z-axis direction. Further, after setting the nucleus d of the not-yet-manipulated ovum D2 in the predetermined position, the holding force of the holding capillary 25 is strengthened by controlling the syringe pump 29, thereby surely holding the not-yet-manipulated ovum D2.

Next, as in FIG. 10(d), the injection manipulator 16 is moved to the position of the solid line from the position of the broken line in FIG. 10(d) on the X-Y plane by driving the X-Y axes of the injection manipulator 16, thereby setting the injection capillary 35 in a position in the X- and Y-axis directions.

Upon completing setting the injection capillary 35 in the injection-manipulatable position in the manner described above, the operator operates the switch of the joystick 47 in FIG. 8 while seeing the position of the nucleus d of the not-yet-manipulated ovum D2 on the display unit 45, whereby the injection manipulation is conducted by driving the injection pump 39 in the way of inserting the injection capillary 35 into the not-yet-manipulated ovum D2 by driving the injection manipulator 16 as in FIG. 10(e).

Upon finishing the injection manipulation described above, the injection capillary 35 is removed from the ovum by driving the injection manipulator 16, thereby coming to the state in FIG. 9(a).

In the way described above, after setting the not-yet-manipulated ovum D2 at the holding capillary 25 (FIG. 9(e)), the position of the nucleus d of the not-yet-manipulated ovum D2 is confirmed and, if necessary, adjusted, and consequently the injection capillary 35 can be automatically set to the injection-manipulatable position in the sequence drive.

As described above, according to the first embodiment, the respective operations in FIGS. 9(a) - 9(e) and FIGS. 10(a) - 10(e) can be automatically executed through the sequence drive, thereby enabling the operator to set the ovum and the injection capillary 35 without any compacted operations, reducing the load on the operator and also enabling the operator other than a skilled technical expert to use the manipulator system without performing the skillful manipulation.

Note that the respective operations in FIGS. 9(a) - 9(e) and FIGS. 10(a) - 10(e) can be set to facilitate the operations of the operator when injecting a sperm into the ovum other than the BNA microinjection, and the manipulation method is effective in this case also.

When performing a gene recombination manipulation and a microscopic insemination manipulation, the operation of setting in the predetermined position before and after manipulating the manipulation target object such as the cell and the ovum has hitherto entailed the skilled technique accustomed to the basic operation of the manipulator, however, according to the manipulator system in the first embodiment, the electrically-driven manipulator is sequentially driven to facilitate these operations, the operating process can be done without the skilled technique, the same operation as hitherto manually operated is automatically performed, and hence the operator can operate at high efficiency without any sense of discomfort.

### <Second Embodiment>

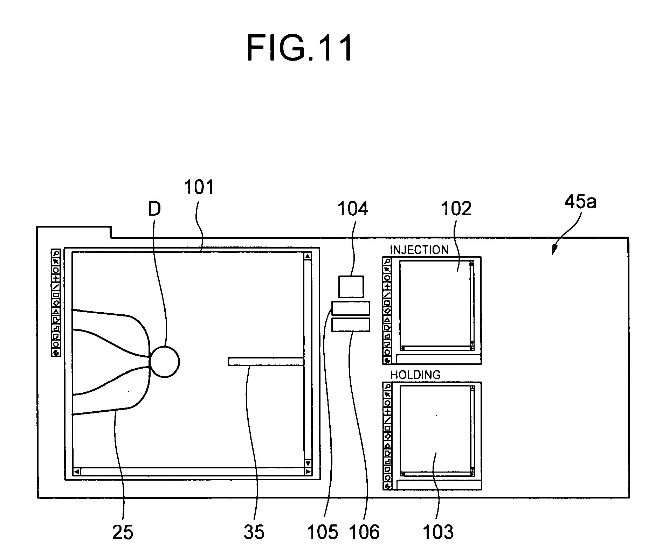

The manipulator system according to a second embodiment will hereinafter be described with reference to FIGS. 11 - 18. The manipulator system according to the second embodiment basically has the same configuration as the manipulator system illustrated in FIGS. 1 - 8 has, in which the cell and the ovum can be replaced automatically by pushing the button of the joystick in the same way as in FIGS. 9 and 10, however, this manipulator system improves the automation efficiency by making use of template images.

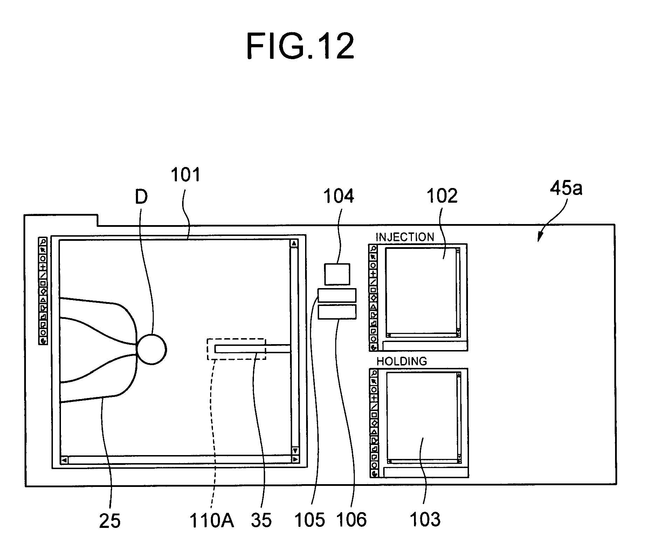

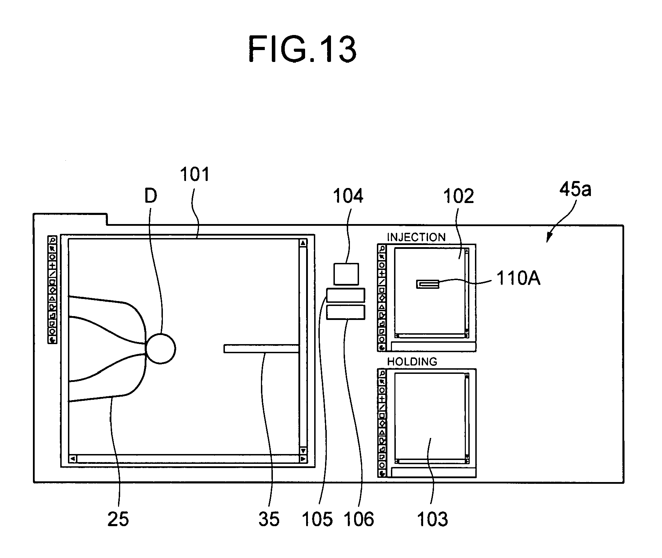

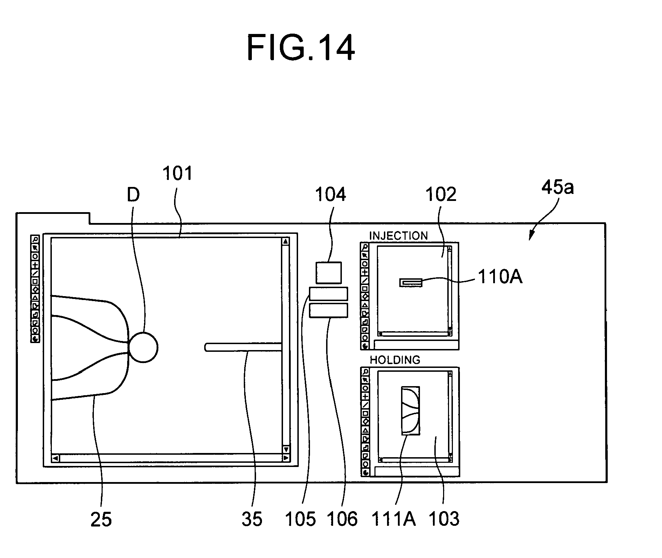

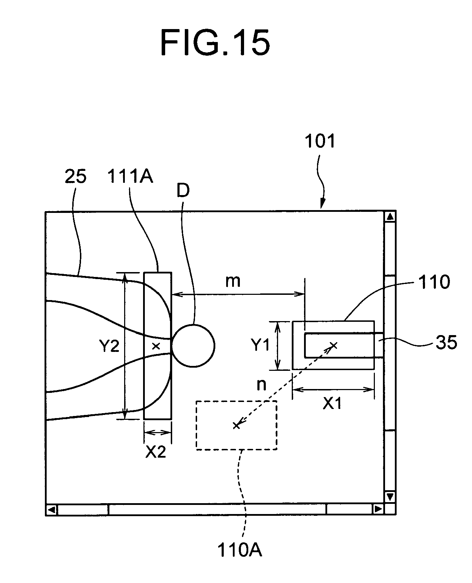

FIG. 11 is view illustrating examples of a microscopic image and a control screen that are displayed on the display unit 45 in FIG. 7 for explaining the second embodiment. FIG. 12 is a view, similar to FIG. 11, illustrating an example of selecting the template image in the microscopic image in FIG. 11. FIG. 13 is a view, similar to FIG. 11, depicting an example of storing the template image selected in FIG. 12. FIG. 14 is a view, similar to FIG. 11, depicting an example of a created template image. FIG. 15 is an explanatory view of an arithmetic example of the positional relation in the microscopic image.

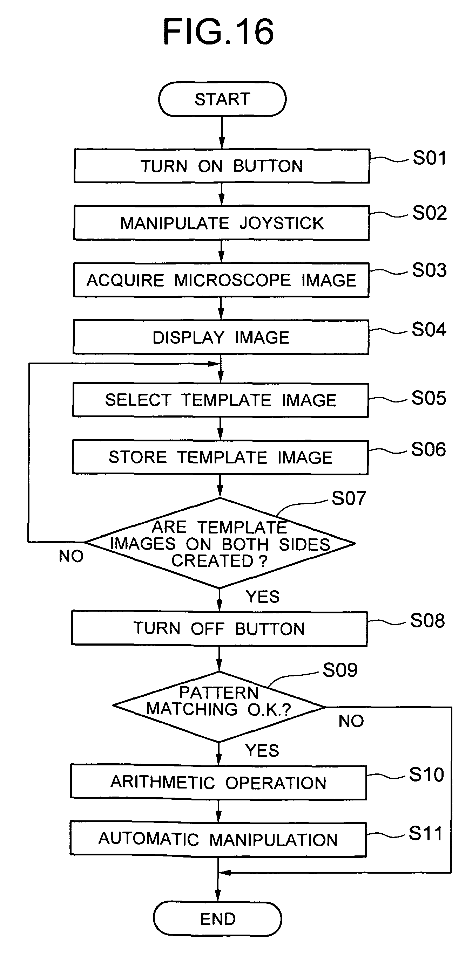

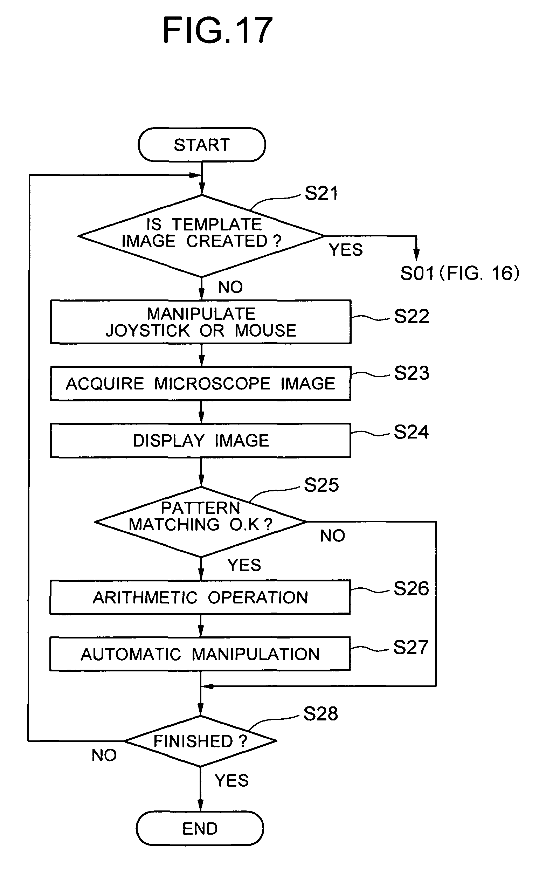

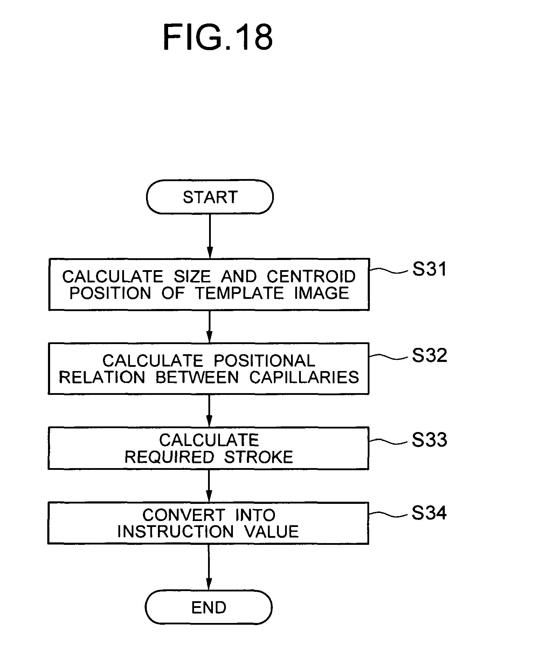

FIG. 16 is an explanatory flowchart of steps of creating the template image in the manipulator system in the second embodiment. FIG. 17 is an explanatory flowchart of steps after creating the template image in FIG. 16. FIG. 18 is an explanatory flowchart of a specific example of the arithmetic step in FIGS. 16 and 17.

The manipulator system in the second embodiment is configured to enable a template image creation screen 45a as in FIGS. 11 - 14 to be displayed on the display unit 45 in FIG. 7. Components displayed on this screen 45a are a microscope screen unit 101 for displaying the microscopic image captured by the camera 18 at a predetermined magnification, a template image display unit 102 for displaying the template image on the injection side, a template image display unit 103 for displaying the template image on the holding side, a template image creation requirement/non-requirement button 104 provided as an input means as to whether the template image is created or not in order to select the requirement or non-requirement for creating the template image, an injection-side button 105 and a holding-side button 106. Note that the template image creation screen 45a can be displayed by operating, e.g., the mouse 49 on the display unit 45 in FIG. 7.

The ovum replacing operation in the second embodiment involves, as in FIG. 9, (a) measuring the positional relation between the injection capillary 35 and the holding capillary 25, (b) moving the injection capillary 35, (c) decreasing the negative pressure by the injection capillary 35, (d) moving the injection capillary 35, and increasing the negative pressure by the holding capillary 25 after (e) moving the not-yet-manipulated ovum D2, in which these operations are automatically executed by pushing the respective buttons on the joystick 47, and steps S01 - S10 of creating the template images in FIG. 9(a) will be described with reference to FIG. 16.

To start with, the screen 45a in FIG. 11 is displayed on the display unit 45 in FIG. 7, and thereafter the template image creation requirement/non-requirement button 104 in FIG. 11 is clicked ON (creation required) by operating the mouse 49 (S01).

Next, the microscopic image is acquired from the camera 18 fitted to the microscope 20 (S03) by pushing, e.g., a button 47f allocated on the joystick 47 (S02), and the acquired microscopic image is displayed on the microscope screen unit 101 in FIG. 11 (S04). As in FIG. 11, the holding capillary 25 holding the ovum D and the injection capillary 35 are displayed in enlargement on the microscope screen unit 101.

Subsequently, as in FIG. 12, an injection-side template image 110A (indicated by a rectangle of the broken line in FIG. 12) for pattern matching is dragged and thus selected by the mouse 49 (S05).

Next, an injection-side button 105 in FIG. 13 is clicked by operating the mouse 49, thereby storing the selected template image 110A on a storage means such as a hard disk (S06). The stored template image 110A is displayed on the template image display unit 102 as in FIG. 13.

Next, if the holding-side template image is not created (S07), through the same steps S05 and S06 described above, a holding-side template image 111A (FIG. 14) is selected, and a holding-side button 106 is clicked by operating the mouse 49, thereby storing the selected template image 110A described above. The thus-stored template image 111A is, as in FIG. 14, displayed on the template image display unit 103.

After the template images 110A, 111A on both sides have been created in the manner described above, the template image creation requirement/non-requirement button 104 is clicked OFF (not created) by operating the mouse 49 (S08), an analysis based on the pattern matching is automatically executed (S09), then the arithmetic operation such as calculating coordinate values is executed if detecting the same (or approximate) portions as the template images 110A, 111A in the microscopic images displayed on the microscope screen unit 101 (S10), the positional relation between the injection capillary 35 and the holding capillary 25 as in FIG. 9(a) is measured, and the operation initiated from FIG. 9(b) is automatically started (S11).

Incidentally, if the same (or approximate) portions as the template images 110A, 111A cannot be detected by the pattern matching in step S09, the automatic operation does not start, and, in this case, for instance, a measure such as acquiring again the template images is executed.

Next, an operation from the second time onward after creating the template images as described above will hereinafter be described with reference to FIG. 17.

At first, it is determined whether the creation of the template image is required or not (S21), and, if required, the process loops back to step S01 in FIG. 16, in which the steps described above are repeated.

Subsequently, if necessary for creating the template image, the button 47f on the joystick 47 or the mouse 49 are operated (S22), thereby sequentially executing, in the same way as in FIG. 16, automatically acquiring the microscopic image (S23), displaying this image (S24), making an analysis based on the pattern matching (S25), performing the arithmetic operation such as calculating the coordinate values etc (S26) and starting the automatic manipulation (S27).

If the next ovum replacing operation remains unexecuted and the operation is not yet finished (S28), the process loops back to step S21, in which the steps described above are iterated. Further, if the same (or approximate) portions as the template images cannot be detected by the pattern matching in step S25 also, the process loops back to step S21, in which the measure such as acquiring again the template images is taken.

Next, the arithmetic steps S10, S26 in FIGS. 16 and 17 will be described with reference to FIGS. 15 and 18.

To begin with, the data of the coordinate values etc related to the template images are measured when creating the template images in steps S05 and S06 in FIG. 16 and stored in the controller 43 or in the storage means such as the hard disk built in or connected to the controller 43. Then, as in FIG. 15, a crosswise length X1 and a vertical length Y1 of the template image 110A and a crosswise length X2 and a vertical length Y2 of the template image 111A are calculated based on the data of the coordinate values etc, and centroid positions (indicated by "x" in FIG. 15) of the respective template images 110A, 111A, which are given as a result of the pattern matching in steps S09, S25, are calculated (S31).

Next, a positional relation m (FIG. 15) between the injection capillary 35 and the holding capillary 25 is calculated from a result of the pattern matching that uses the two template images 110A, 111A described above (S32).

Subsequently, a required stroke quantity of the injection capillary 35 for performing the moving operation in FIG. 9(b) is calculated based on the positional relation m (S33). That is, there is calculated the stroke quantity in such a case that the template image 11A of the injection capillary 35 in FIG. 15 moves in an arrow direction n as indicated by the broken line.

Conducted next is a conversion into a command value for the injection manipulator 16 to move the injection capillary 35 by the stroke quantity (S34). With the thus-converted command value, the injection capillary 35 can move as in FIG. 9(b).

As described above, according to the operation in the second embodiment (FIGS. 16 - 18), in the case of repeatedly carrying out the same ovum replacing operation as in FIG. 9, the manipulators 14, 16, the syringe pump 29, the injection pump 39, etc can be automatically driven simply by pushing once the buttons on the joystick 47, and hence there is no necessity of skillfully manipulating the manipulator and the injector as hitherto been done.

Namely, according to the conventional microinjection method disclosed in the non-patent document 1, the already-manipulated ovum is moved upwardly of a drop so that the already-manipulated ovum and the not-yet-manipulated ovum are not mixed in a drop of culture medium in which to perform the injection manipulation, subsequently the not-yet-manipulated ovum is taken from under, however, this method entails a necessity of getting accustomed to the basic operation of the manipulator itself and has a problem that the operation efficiency declines when an unaccustomed operator manipulates, and, by contrast, according to the second embodiment, it is feasible to automatically perform the ovum replacing operation easily and accurately and to prevent the operation efficiency from declining even when the unaccustomed operator manipulates.

Moreover, when the manipulator system of the second embodiment automatically performs the ovum replacing operation, the operator creates the template image as the necessity arises, then makes the analysis on the personal computer (controller) 43 through the pattern matching, and drives the manipulators 14, 16 on the basis of the result thereof, thereby enabling the automation efficiency to be improved. That is, the next analytic/arithmetic operation based on the pattern matching can be executed by employing the previously created template images, and the automation efficiency of the manipulator system in the second embodiment can be improved by making use of the template images.

Further, if the way of how the capillaries 25, 35 are viewed varies as the ovum replacing operation is repeated, the determination is made in step S21 in FIG. 17, and the process loops back to step S01 in FIG. 16, in which the template image can be created again by setting ON the template image creation requirement/non-requirement button 104, and the template image can be updated each time. Thus, the template image can be created as limited to the case where the operator determines the creation to be necessary. As a result, it is possible to prevent misrecognition when conducting the pattern matching and non-detection through the pattern matching.

As described above, the modes for carrying out the present invention have been discussed so far, however, the present invention is not limited to those modes, and the modes can be modified in a variety of forms within the scope of the technical idea of the present invention. For example, the sequence drive described above is started from the state as in FIG. 9(a), however, the present invention is not limited to this state, and the sequence drive may be initiated from other states, e.g., from after the injection manipulation in FIG. 10(e) and executed from the operation of removing the injection capillary 35 from the ovum. Further, the manipulations in FIGS. 9(a) - 9(e) are sequentially driven, while the manipulations in FIGS. 10(a) - 10(e) may be manually driven.

Moreover, the focusing mechanism 81 in FIG. 7 may be configured to perform the focusing operation automatically. Further, the focusing mechanism 81 may also be configured to perform the focusing operation based on positional information of the focal points stored beforehand or during the manipulations. Furthermore, the manipulation method according to the second embodiment is suitable for the cell manipulation, the gene recombination manipulation and the micromanipulation such as the microscopic insemination manipulation, and it is preferable that this manipulator system is applied to an electronic device inspection/analysis apparatus etc for the cells, the ova, etc.

Further, for instance, the operations in FIGS. 16 - 18 are not confined to the manipulator system in the second embodiment but can be applied to any system equipped with the camera for capturing the microscopic image into the electrically-driven manipulator that can be driven in the XYZ directions, and therefore the manipulator taking other types are also available.

### <Third Embodiment>

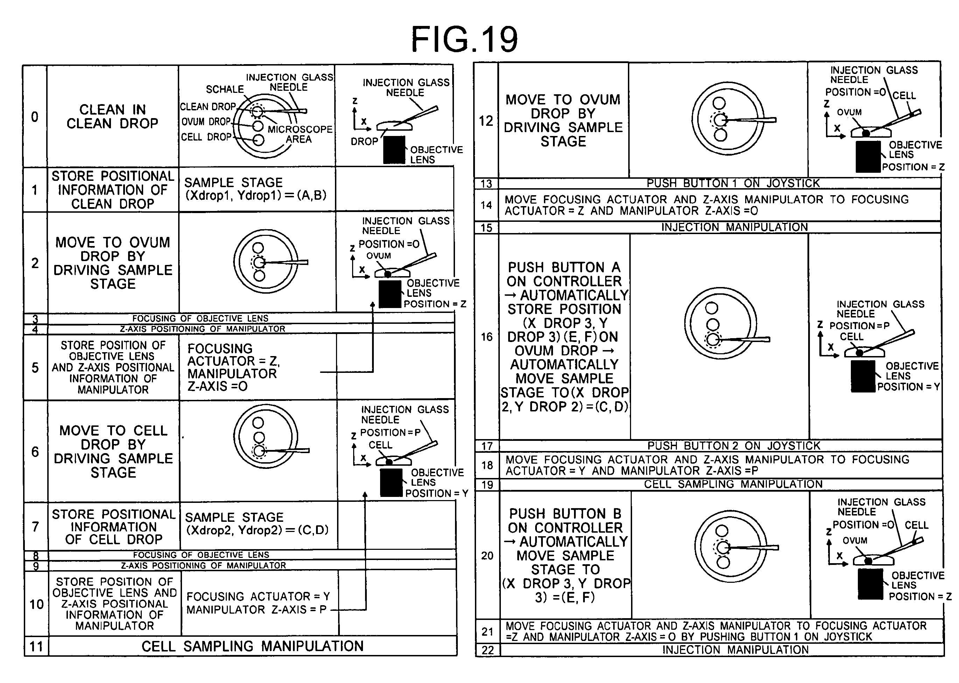

Next, a third embodiment illustrated in FIG. 19 will be described. FIG. 19 illustrates the manipulations and the operations of the injection needle and the focusing mechanism sequentially and hardwarewise in such a case that one Schale includes a plurality of drops. The manipulators, the microscope, etc used for these manipulations and operations are the same as those in the first and second embodiments, and hence their descriptions are omitted.

FIG. 19 illustrates a type including three drops such as a cleaning drop, an ovum drop and a cell drop. The specific manipulations and operations in this case are given as below.

To begin with, a glass needle is mounted on the manipulator. Next, the manipulations and the operations are started from step 0.
Step 0: A sample stage is driven to move the cleaning drop to under the view field of the microscope, in which the injection glass needle is cleaned.
Step 1: Positional information of this sample stage is stored in the controller.
Step 2: The sample stage is driven to move the drop containing the ovum to under the view field of the microscope.
Step 3: A focusing actuator is driven by operating the joystick to focus on the ovum.
Step 4: The manipulator is driven by operating the joystick to bring the injection glass needle into the focus.
Step 5: The positional information of the focusing actuator and the injection manipulator is saved.
Step 6: The sample stage is driven to move the drop containing a cell and a sperm to under the view field of the microscope.
Step 7: The positional information of this sample stage is stored in the controller.
Step 8: The focusing actuator is driven by operating the joystick to focus on the cell (sperm).
Step 9: The manipulator is driven by operating the joystick to bring the injection glass needle into the focus.
Step 10: The positional information of the focusing actuator and the injection manipulator is saved in the controller.
Step 11: A handling manipulation of the cell (sperm) is carried out to hold the cell within the injection glass needle.
Step 12: The sample stage is driven to move the drop containing the ovum to under the view field of the microscope, and the first injection manipulation is performed.
Step 13: A predetermined button on the joystick is pressed.
Step 14: The focusing actuator and the Z-axis manipulator are driven to move to the positions specified by the positional information stored in step 5.
Step 15: The ovum is held and then released after the second injection manipulation.
Step 16: The sample stage is automatically driven to move to the position specified by the positional information stored in step 7 by pressing the predetermined button on the controller screen, and the drop containing the cell (sperm) is moved. Further, the positional information before this operation is stored.
Step 17: The predetermined button on the joystick is pressed.
Step 18: The focusing actuator and the Z-axis manipulator are driven to move to the positions specified by the positional information stored in step 10.
Step 19: The handling of the cell (sperm) is carried out.
Step 20: The sample stage is automatically driven to move to the position specified by the positional information stored in step 16 by pressing the predetermined button on the controller screen.
Step 21: The focusing actuator and the Z-axis manipulator are driven to focus on the ovum by pressing the predetermined button on the joystick.
Step 22: The ovum is held, and the third injection manipulation is conducted. The ovum is released after the end. In the case of performing the injection manipulation four times or more, the steps 17 - 22 are iterated.

In the case of desiring to clean the injection glass needle during the repetitive injection manipulation described above, the process automatically shifts to the clean drop upon pressing the predetermined button on the controller screen and, after finishing cleaning, shifts to the ovum drop by pressing the predetermined button (the same operations as those in steps 16, 17).

The positional information stored during the first injection manipulation is repeatedly used by the method described above, thereby making it possible to easily perform the injection manipulation, the positioning of the focal point when in the sampling manipulation and the Z-axis positioning of the manipulator.

Further, the drop-to-drop movement can be made simply by operating the button, and the positional adjustment may not be visually conducted by driving the sample stage for every injection manipulation. Moreover, if desired to adjust again the stored positional information during the manipulation, the positions may be again stored after adjusting the positions.

Moreover, the operations are assigned to the variety of buttons on the joystick, and it is feasible to drive the focusing actuator and the Z-axis of the manipulator simply by operating the joystick and also to drive these components only by the controller in a way that assigns the operations to the buttons etc of the controller. Furthermore, the focusing actuator and the Z-axis of the manipulator may also be moved to and returned from (the positions specified by) the stored positional information in linkage with the operation of driving the sample stage.

Herein, the manipulator in the third embodiment corresponds to the manipulators 14, 16 in the first and second embodiments or a fourth embodiment, the sample stage corresponds to the base 22, and the glass needle corresponds to the injection capillary 35, the microscope corresponds to the microscope 20, the controller corresponds to the controller 43, the joystick corresponds to the joystick 47, the focusing actuator corresponds to an actuator included in the focusing mechanism 81 (a focusing mechanism 124 in the fourth embodiment), and the Z-axis manipulator corresponds to the manipulators 14, 16 including the driving devices 40, 42.

As described above, the manipulator system is configured to store at least two points, i.e., the position of the objective lens and the Z-axis position of the manipulator and to enable come-and-go motions to be easily made between the two positions by operating the joystick and/or the button of the controller, whereby a further efficient operation can be done.

Furthermore, the manipulator system is configured to drive the objective lens and the manipulator in linkage on the occasion of the motions based on operating the joystick and/or the button of the controller, whereby the further efficient operation can be done. Moreover, the manipulator system can be configured to store the positional information of the respective drops such as the ovum drop, cell (sperm) drop and the clean drop, to drive the sample stage on the basis of the positional information and to enable the come-and-go motions to be easily made between the respective drops.

### <Fourth Embodiment>

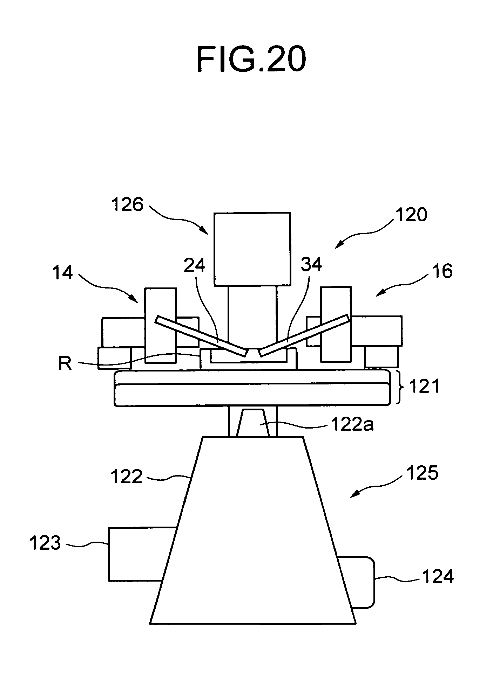

Next, the manipulator system according to a fourth embodiment will be described with reference to FIGS. 20 - 25. The manipulator system according to the fourth embodiment has basically the same configuration as the manipulator systems in FIGS. 1 - 8 have but is configured to dispose the sample stage and build up the microscope as an inverted microscope.

FIG. 20 is a view schematically illustrating a configuration of the manipulator system according to the fourth embodiment.

As in FIG. 20, a manipulator system 120 according to the fourth embodiment, which is defined as the system for artificially manipulating the sample, i.e., the micromanipulation target object, under the observation of the microscope, includes a pair of manipulators 14, 16, a sample stage 121, a microscope unit 125 and a light source unit 126.

The microscope unit 125 includes a microscope 122 configured to include an objective lens 122a etc and having a microscopic function, a camera 123 serving as an image capturing element, and a focusing mechanism 124 capable of automatically performing the focusing operation. The microscope 122, with the objective lens 122a being located under a Schale R containing an observation target sample, is configured as the inverted microscope.

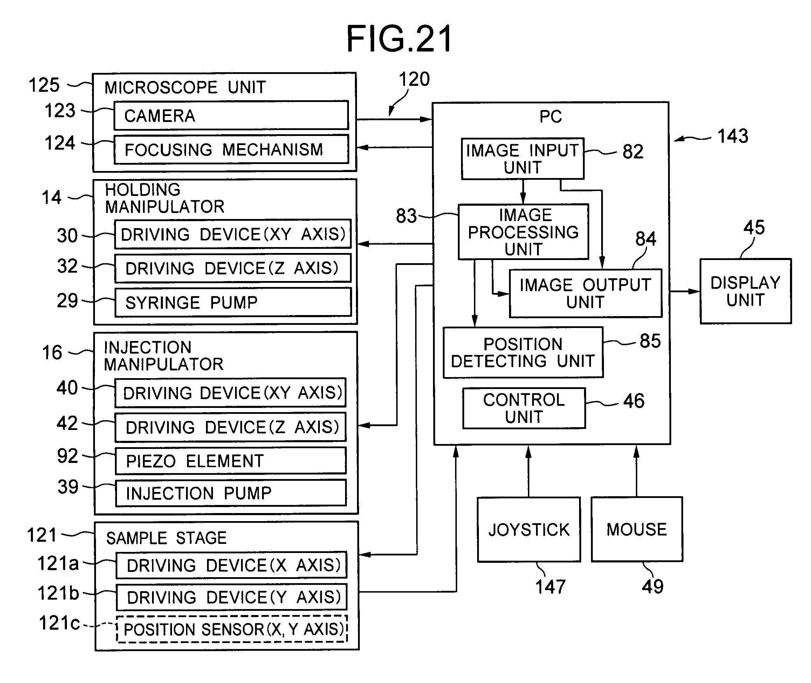

The sample stage 121, on which the Schale R composed of a translucent material such as a glass material is placed, is configured to include an X- and Y-axis table so that the stage 121 can be driven by the electric power in the X- and Y-axis plane directions and is movable along the Y-axis as driven by a driving device 121a (FIG. 21) and along the Y-axis as driven by a driving device 121b (FIG. 21).

Further, the light source unit 126 is disposed to be located just above the Schale R on the sample stage 121, and irradiates the sample within the Schale R with the light beam.

The sample within the Schale R is irradiated with the light beam emitted from the light source unit 126, the light beam penetrating the sample within the Schale R enters the microscope 122, at which time an optical image of the cell is enlarged at a predetermined magnification by the microscope 122 and is thereafter captured by the camera 123, and the sample based on the image captured by the camera 123 can be thus observed. At this time, the sample within the Schale R can be set in a position suited to the observation by driving the sample stage 121 in the X- and Y-axis plane directions.

The manipulators 14, 16 are configured in the same way as in FIGS. 1 - 6 and disposed on the right and left sides of the sample stage 121, in which the pipettes 24, 34 defined as manipulation tools extend from both sides with respect to the Schale R disposed just under the light source unit 126, and the capillaries 25, 35 constructed by the glass needles fitted to the tips of the pipettes 24, 34 can perform the predetermined manipulations about the micromanipulation target sample within the Schale R.

Next, the control by the personal computer (controller) 143 of the manipulator system 120 in FIG. 20 will be described with reference to FIG. 21. FIG. 21 is a block diagram illustrating main components of the control system of the personal computer (controller) 143 in FIG. 20.

The personal computer (controller) 143 in FIG. 21, though having basically the same configuration as the personal computer 43 in FIG. 7 has, controls driving the driving devices 121a, 121b constructed to include the actuators for the sample stage 121, thereby moving the sample stage 121 in the X- and Y-axis directions.

The controller 143 drives the capillary 25 of the pipette 24 fitted to the manipulator 14 and the capillary 35 of the pipette 34 fitted to the manipulator 16 by controlling the sample stage 121, then sets the capillaries 25, 35 in predetermined positions, and, hereat, gets stored with the moving quantity of the actuator driven on the occasion of the operation thereof. At this time, the moving quantity or the moved position may be stored as X- and Y-coordinates from the predetermined reference position. For example, the controller 143 gets stored with second positions of the capillaries 25, 35, whereby the capillaries 25, 35 can be, after moving to the first positions or the third positions distanced from the second positions, returned to the second positions in response to an operation instruction given from the joystick 147.

Note that the respective positions of the capillaries 25, 35 are defined as relative positions to specified positions within the Schale R, and the sample stage 121 moves the Schale R placed hereon in the X-and Y-axis plane directions, thereby moving the capillaries 25, 35 relatively between the respective positions.

Further, the sample stage 121 may include, as indicated by the broken line in FIG. 21, a position sensor 121c constructed of an encoder etc for detecting the X- and Y-axis directional positions of the X- and Y-axis table. The controller 143 gets stored with the X-Y coordinate information obtained by the position sensor 121c which detects the respective positions of the capillaries 25, 35, and the sample stage 121 moves the capillaries 25, 35 to the first, second and third positions under the control of the controller 143 on the basis of the X-Y coordinate information.

In the manipulator system 120 according to the fourth embodiment, the manipulators 14, 16 fitted to the inverted microscope 122 and the sample stage 121 are driven by operating the joystick 147 while confirming the image captured by the camera 123 on the display unit 45 of the controller 143.

When performing the injection manipulation by the manipulator system 120, the sample stage 121 is driven in the state where the Schale is set on the sample stage 121, and the positional information of other culture mediums is stored in the controller 143. This position storing operation can be done also during the injection manipulation, and the stored positions can be changed each time.

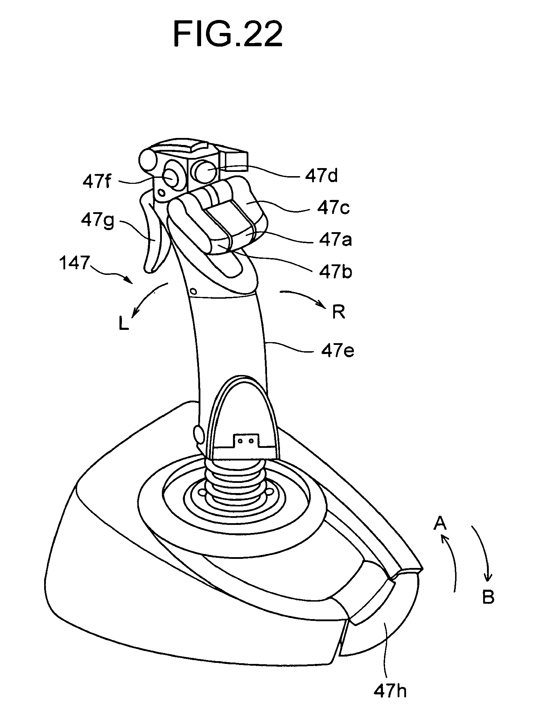

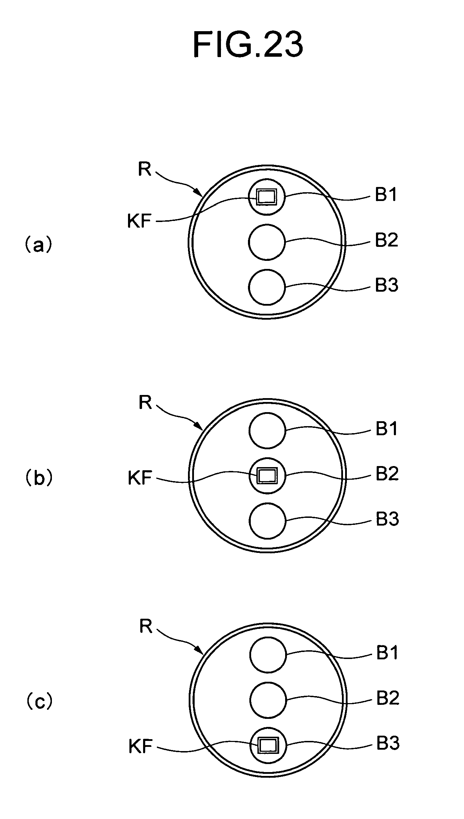

Next, the joystick 147 as a manipulation means connected to the controller in FIG. 21 and an operation example thereof will be described with reference to FIGS. 22, 23.

FIG. 22 is a perspective view illustrating a specific example of the joystick in FIG. 21. FIG. 23 is a schematic plan view illustrating a plurality of culture mediums B1 - B3 within the Schale placed on the sample stage in FIG. 20 and also depicting respective states in which the fields of view of the microscope exist at a culture medium B1(a), a culture medium B2(b) and a culture medium B3(c).

As depicted in FIG. 22, the joystick 147 has basically the same configuration as the configuration illustrated in FIG. 8 but has a lever 47h at a lower portion thereof. The lever 47h rotates in a direction A in FIG. 22 and a direction B opposite to the direction A and can be changed over to an upper end position up to which the lever rotates in the direction A, a lower end position up to which the lever rotates in the direction B and an intermediate position therebetween. The lever 47h has changeover switches of which the upper end position, the intermediate position and the lower end position correspond to the first position, the second position and the third position of the capillaries 25, 35.

Namely, the sample stage 121 is driven to the previously stored position by moving up and down the lever 47h of the joystick 147. For instance, the plurality of culture mediums B1 - B3 is formed on the Schale R in an arrangement as in FIGS. 23(a) - 23(c), in which case the culture medium B1 is moved to under a view field KF of the microscope by driving the sample stage 121 when the lever 47h is rotated upward in the direction A and is thus set in the upper end position, then the culture medium B3 is moved to under the view field KF of the microscope when the lever 47h is rotated down in the direction B and is thus set in the lower end position, and the culture medium B2 is moved to under the view field KF of the microscope when the lever 47h is set in the intermediate position. In the case of the original position to which the culture medium B2 is to be returned, the lever 47h is set in the intermediate position from the upper end position or the lower end position, the culture medium can be returned to the original position.

Incidentally, as for the plurality of culture mediums on the Schale R, e.g., the culture medium B1 can be set for cleaning, the culture medium B2 for the ovum, and the culture medium B3 for the cell (sperm).

The operation of the lever 47h of the joystick 147 enables the movements among the culture mediums B1 - B3 without using any other manipulation means in the way of being kept holding in hand the joystick 147 for manipulating the manipulators 14, 16, makes it unnecessary to perform the operation of changing the magnification of the objective lens in order to search for the positions of the culture mediums when moving from one culture medium to another culture medium, and enables any operator to easily conduct the manipulation for the movements among the culture mediums.

As described above, when the capillaries 25, 35 move between the culture mediums, the capillaries are retreated upward in linkage with driving the sample stage 121 in order to prevent the already-manipulated ovum and the not-yet-manipulated ovum from being mixed in such an occasion that the micromanipulation target ovum in the culture medium is brought into contact with the capillary (glass needle).

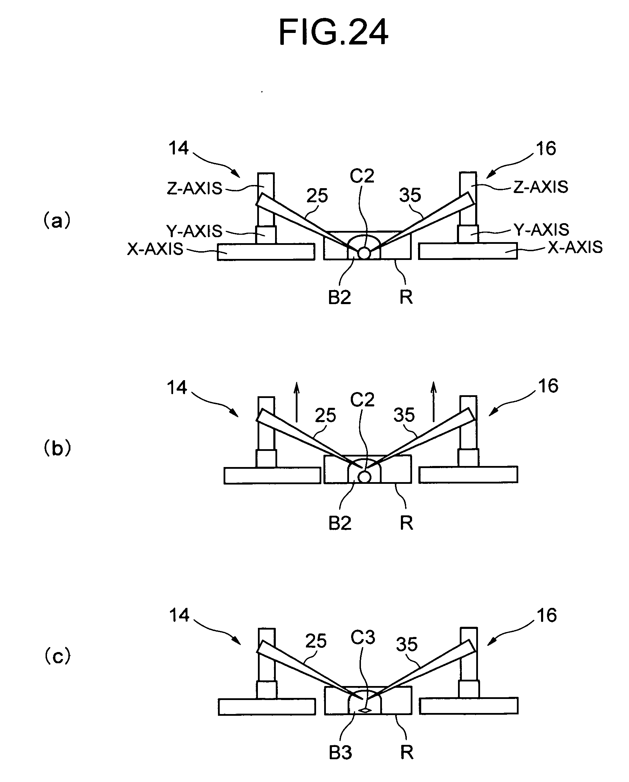

The retreat motion when the capillary moves between the plurality of culture mediums formed within the Schale R on the sample stage 121 in FIG. 20, will be described with reference to FIG. 24.

FIG. 24 is a side view schematically illustrating positional relations between the capillaries and the plurality of culture mediums in the Schale when moved by operating the lever 47h of the joystick 147 in FIG. 20; FIG. 24(a) depicts a manipulation position to manipulate the manipulation target object in the culture medium B2; FIG. 24(b) illustrates a moving position in the Z-axis direction; and FIG. 24(c) depicts a moving position of the culture medium B3, respectively.

For example, in the case of moving the capillaries 25, 35 from the culture medium B2 in the Schale R in FIG. 23(b) to the culture medium B3 in FIG. 23(c), as in FIG. 24(a), the capillaries 25, 35 are in the predetermined positions for performing the predetermined manipulations over a micromanipulation target object C2 within the culture medium B2 in the Schale R in FIG. 23(b), and, when lowering the lever 47h of the joystick 147 down to the lower end position from the intermediate position, the controller 143 gets stored with respective X, Y and Z positions, within the culture medium B2, of the manipulators 14, 16 and X and Y positions of the sample stage 121.

Next, as in FIG. 24(b), the manipulators 14, 16 retreat the capillaries 25, 35 by moving the capillaries by a predetermined quantity upward in the Z-axis direction.

Subsequently, as in FIG. 23(c), the sample stage 121 moves the Schale R so that the capillaries 25, 35 move to the culture medium B3 in FIG. 23(c) from the culture medium B2 in FIG. 23(b).

Next, the manipulator 16 moves the injection capillary 35 by the predetermined quantity downward in the Z-axis direction, and the operator performs the necessary manipulations over a micromanipulation target object C3 within the culture medium B3 by operating the joystick 147.

Subsequently, when setting the lever 47h in the intermediate position, the manipulators 14, 16 and the sample stage 121 return to the above-stored predetermined positions for the culture medium B2 in FIG. 24(a) through the motions opposite to those described above.

As described above, the capillaries 25, 35, when moved to the culture medium B3 from the culture medium B2, are retreated upward in the Z-axis direction beforehand, the micromanipulation target object C2 (e.g., the ovum) in the culture medium B2 and the capillaries 25, 35 can be prevented from coming into contact with each other, and it is therefore feasible to prevent the already-manipulated ovum and the not-yet-manipulated ovum from being mixed. Note that the capillaries 25, 35 may be retreated to get away from each other in the X-axis direction (the crosswise direction in the drawing) before moving.

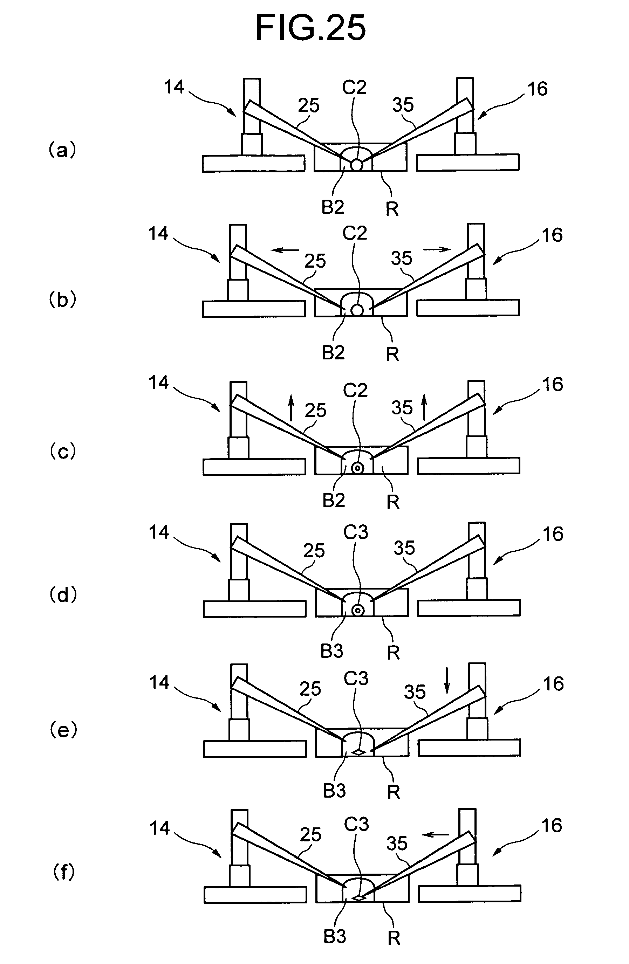

Next, such an operation that the manipulator system 120 in FIGS. 20 - 22 moves the capillaries 25, 35 between the plurality of culture mediums in the Schale R, will be described with reference to FIG. 25.

FIG. 25 is a side view schematically illustrating the positional relations between the capillaries and the plurality of culture mediums within the Schale in the fourth embodiment; FIG. 25(a) depicts a position stored when in the manipulation position to manipulate the manipulation target object in the culture medium B2; FIG. 25(b) illustrates a moving position in the X-axis direction; FIG. 25(c) illustrates a moving position in the Z-axis direction; FIG. 25(d) illustrates a moving position in another culture medium; FIG. 25(e) depicts a moving position of the injection capillary in the Z-axis direction; and FIG. 25(f) illustrates a manipulation position of the injection capillary, respectively.

The manipulator system 120 performs the moving operation in the following predetermined sequence after the capillaries 25, 35 have been, as in FIG. 25(a), moved to the predetermined positions to conduct the predetermined manipulations over the micromanipulation target object C2 within the culture medium B2 in the Schale R by operating the joystick 147 and when lowering the lever 47h of the joystick 147 down to the lower end position from the intermediate position.

To begin with, the controller 143 gets stored with the respective X, Y and Z positions of the manipulators 14, 16 in the predetermined positions to perform the predetermined manipulations in FIG. 25(a) and the X and Y positions of the sample stage 121.

Next, as in FIG. 25(b), the manipulators 14, 16 move the capillaries 25, 35 by the predetermined quantity to get away from each other in the X-axis direction and further move the capillaries by the predetermined quantity upward in the Z-axis direction as in FIG. 25(c). Thus, the capillaries 25, 35 are, before moving to the next culture medium, retreated in the X- and Z-axis directions.

Next, as in FIG. 25(d), the capillaries 25, 35 are moved to the next culture medium B3 in the Schale R by driving the sample stage 121. Subsequently, as in FIG. 25(e), the manipulator 16 moves the injection capillary 35 by the predetermined quantity downward in the Z-axis direction.

Subsequently, as in FIG. 25(f), the manipulator 16 moves the injection capillary 35 by the predetermined quantity leftward in the X-axis direction of the drawing, while the operator performs the necessary manipulations over the micromanipulation target object C3 in the culture medium B3 by operating the joystick 147. For instance, if the micromanipulation target object C3 is the sperm, the sperm undergoes sampling through a sampling manipulation of the capillary 35 and is held by the capillary 35.

Subsequently, when the lever 47h is set in the intermediate position, the manipulators 14, 16 and the sample stage 121 return to the above-stored predetermined positions for the culture medium B2 in FIG. 25(a) through the motions opposite to those described above. Then, for example, if the micromanipulation target object C2 is the ovum, the sperm is injected from the capillary 35 into the ovum held by the capillary 25 in the culture medium B2.

In the way described above, the capillaries 25, 35 can be moved to the predetermined positions in the culture medium B3 for the next manipulation from the predetermined positions in the culture medium B2. At this time, the sample stage 121 and the manipulators 14, 16 are in linkage with each other, and the movement at a comparatively long distance from one culture medium to another culture medium is carried out by the sample stage 121, while the movement at a comparatively short distance for the retreat is carried out by the manipulators 14, 16.

Further, if stored with the X, Y and Z positions of the manipulators 14, 16 just before driving the sample stage 121, after moving to one culture medium to another culture medium, a time-consuming operation of adjusting the positions of the capillaries 25, 35 can be omitted by driving the manipulators 14, 16 to the stored X, Y and Z positions. With the use of such a function, the operator can operate the capillaries 25, 35 in the same positions at all times without making the adjusting operation by largely driving the manipulators 14, 16.

Further, also when the capillaries 25, 35 are moved between the culture medium B2 and the culture medium B1 similarly to the movement described above, the lever 47h is rotated upward up to the upper end position, thereby enabling the operation to be done likewise in the sequence in FIG. 24 or 25.

Conventionally, on the occasion of the injection manipulation as in the non-patent document 3, particularly in the case of injecting the cell, i.e., the sperm into the ovum cell, the culture mediums for applications different from the ovum, the cell and the clean exist in the Schale, however, the operator has to get the capillaries to come and go between these culture mediums corresponding to contents of the manipulations, on which occasion the magnification of the microscope is decreased because of a difficulty to grasp the positional relations among all the culture mediums due to an enlarged area under the view field of the microscope, and the operator drives the sample stage to make the movement between the culture mediums. That is, the following problems arise when the conventional manipulator carries out the injection manipulation.

(1) A state of the whole Schale cannot be grasped under the view field at the magnification of the microscope through which the injection manipulation is performed. Therefore, the movement between the culture mediums in the Schale entails decreasing the magnification of the microscope and, after grasping the positional relation, having to operate the sample stage.

(2) On the occasion of manually driving the sample stage and making the movement between the culture mediums, the return to the location of the injection manipulation before being moved involves having to memorize the position thereof, and the unaccustomed operator might lose sight of the original manipulation position.

(3) On the occasion of moving between the culture mediums, there is a possibility that the manipulation target object in the culture medium comes into contact with the glass needle (capillary) when driving the sample stage, as a result of which the already-manipulated object and the not-yet-manipulated object are mixed, and the sample stage has to be operated to prevent the glass needle performing the injection manipulation from interfering with the manipulation target object. Hence, there is a case of requiring the operation of adjusting again the position of the glass needle after moving between the culture mediums, and the manipulation gets difficult only with the simple operation of the sample stage.

The fourth embodiment aims at providing the manipulator system capable of easily moving between the culture mediums without changing the magnification of the microscope, and having neither a necessity for the operator to seek out the want-to-shift culture medium nor a necessity of adjusting again the position even when moving between the drops and between the culture mediums.

According to the manipulator system 120 in the fourth embodiment, the sample stage 121 and the manipulators 14, 16 are operated in the predetermined sequence by operating the lever 47h of the joystick 147, and the capillaries 25, 35 can be moved between the plurality of culture mediums and between the plurality of drops, thereby enabling the movement between the culture mediums to be easily made without conducting the operation to change the magnification of the microscope into the low magnification and eliminating the necessity for the operator to seek out the want-to-shift culture medium and drop. Further, on the occasion of moving between the culture mediums and between the drops, the capillaries 25, 35 defined as the glass needles performing the injection manipulations are, after being automatically retreated so as not to interfere with the manipulation target object, returned to the original positions, thereby eliminating the necessity of readjusting the positions of the capillaries 25, 35 even when moving between the culture mediums and between the drops and thereby facilitating the operations. Further, as in FIG. 19, the movements of the glass needles (the capillaries) among the three drops such as the clean drop, the ovum drop and the cell drop can be realized with the simple operations.

The series of operations are executed in linkage with the sample stage 121 and the manipulators 14, 16 by operating the lever and can be therefore realized with the simple operations.

### <Fifth Embodiment>

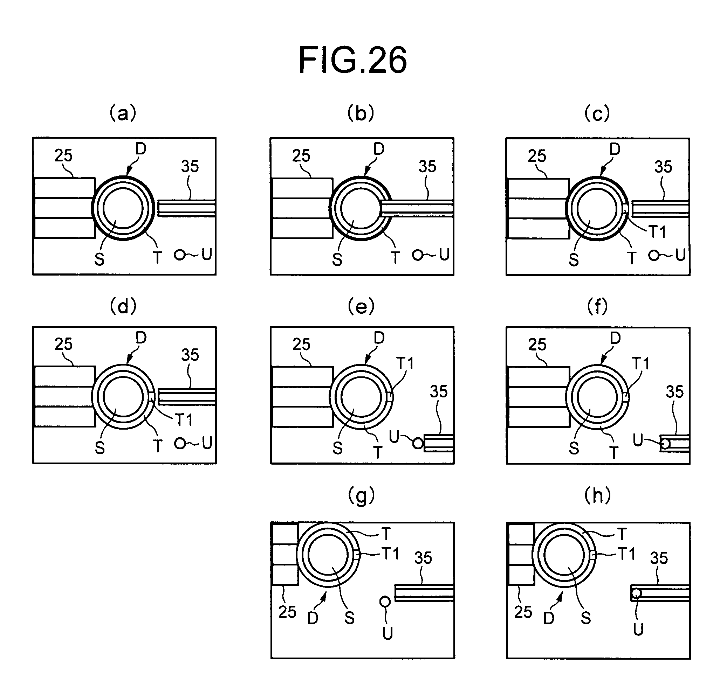

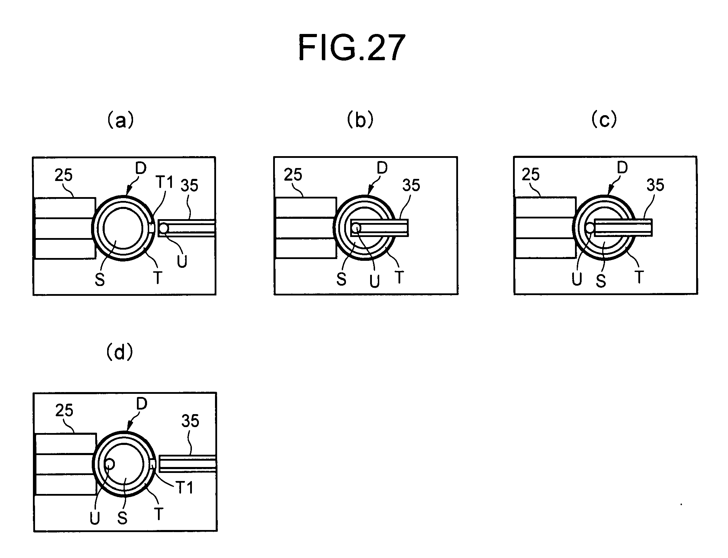

Next, the manipulator system according to a fifth embodiment will be described with reference to FIGS. 26 and 27.

The manipulator system according to the fifth embodiment basically has the same configuration as the configuration in FIGS. 20 - 22, and is configured to drive the manipulators 14, 16 each fitted to the inverted microscope 122 and the sample stage 121 by operating the joystick 147 and the mouse 49 while confirming the image captured by the camera 123 on the display unit 45 of the controller 143, to make, after sampling the sperm by manipulating the movements in the X- Y- and Z-axis directions of the manipulators performing the injection manipulations, the automatic return to the clear zone perforated position in response to the instruction given by the operator and to automatically adjust the position of the focal point.

FIG. 26 is a view illustrating the positional relations between the respective capillaries fitted to the manipulators in the fifth embodiment and the micromanipulation target object; FIG. 26(a) illustrates a state where the injection capillary moves close to the ovum held by the holding capillary; FIG. 26(b) illustrates a state where the injection capillary perforates the clear zone of the ovum; FIG. 26(c) depicts a state in which the injection capillary is removed from the ovum after perforating the clear zone; FIG. 26(d) illustrates a state of changing to a sperm sampling mode; FIG. 26(e) depicts a state where the injection manipulator performs the manipulation for the sperm sampling; FIG. 26(f) illustrates a state of completing the sperm sampling; FIG. 26(g) depicts a state in which the sample stage is driven and thus moved to an easy-for-sampling position when sampling the sperm; and FIG. 26(h) illustrates a state the sampling is completed after the movement.

FIG. 27(a) illustrates a state of changing to an injection mode after completing the sperm sampling in FIG. 26; FIG. 27(b) depicts a state in which the injection capillary pierces a cytoplasm of the ovum from the clear zone perforated position; FIG. 27(c) illustrates a state in which the injection capillary injects the sperm into the cytoplasm from the clear zone perforated position; and FIG. 27(d) depicts a state where the injection capillary is removed from the ovum.

At first, as in FIG. 26(a), similarly to FIGS.9(a) and 10(a), the holding capillary 25 holds the ovum D under the negative pressure by operating the holding manipulator 14. Note that a position indicated by the bold line in FIG. 26(a) is an in-focus Z-axis (vertical) position, and this is the same in the following drawings throughout.

Next, as in FIG. 26(b), the injection capillary 35 is moved to the injection position by operating the manipulator 16, and, after perforating a clear zone T of the ovum D by driving a piezoelectric element 92 in FIG. 21, as in FIG. 26(c), the injection capillary 35 is temporarily removed from the ovum D. At this time, the clear zone T of the ovum D is formed with a perforated hole T1.

Subsequently, as in FIG. 26(d), the mode is changed to the sperm sampling mode by operating the controller 143, and at this time, though starting the sperm sampling manipulation, the controller 143 gets stored with the position of the focusing mechanism 124, the X-, Y- and Z-axis positions of the injecting/holding manipulators 14, 16 and the X- and Y-axis positions of the sample stage 121. This storage is executed in a way that lowers the lever 47h of the joystick 147 in, e.g., FIG. 22 down to the lower end position.

Thereafter, as in FIG. 26(d), the Z-axis of the focusing mechanism 124 and the Z-axis of the manipulator 16 are automatically driven till the microscope focuses on the sperm U. A height from the bottom of the Schale up to the clear zone perforated position is substantially fixed, and hence this position involves using a position calculated from the in-focus position on the ovum D on the controller 143.

Next, as in FIG. 26(e), the sperm U undergoes sampling by operating the injection.capillary 35 through the movements of the injection manipulator 16 in the X-, Y- and Z-axis directions. Then, as in FIG. 26(f), the sperm U to be sampled is held in the vicinity of the tip of the injection capillary 35, thus completing the sperm sampling.

When sampling this sperm, as in FIG. 26(g), the holding manipulator 14 is driven to move by the same moving quantity in the X- and Y-axis directions in synchronization with driving the sample stage 121, then the sampling manipulation is carried out, and, as in FIG. 26(h), the sampling of the sperm U is thus completed.

Next, as described above, after the injection capillary 35 has held the sperm U, as in FIG. 27(a), the mode is changed to the sperm injection mode by operating the controller 143. Then, the injection manipulator 16 is automatically driven in the X-, Y- and Z-axis directions by operating the controller 143, whereby the injection capillary 35 returns to the clear zone perforated position stored in FIG. 26(d), and simultaneously the focusing mechanism 124 is likewise driven to move to the stored position.

At this time, as in FIG. 26(g), if the sample stage 121 is also driven, the holding manipulator 14 and the sample stage 121 are moved to the previously-stored positions. Thus, the X- and Y-axes of the sample stage 121 and the holding manipulator 14 are synchronously driven by the same predetermined moving quantity during the sperm sampling manipulation, and hence, after sampling the sperm, the injection capillary 35, when returning to the clear zone perforated position, can be prevented from deviating from the perforated hole T1.

Next, as in FIG. 27(b), the injection capillary 35 perforates a cytomembrane through the perforated hole T1 and pierces the cytoplasm S by driving the piezoelectric element 92.

Subsequently, as in FIG. 27(c), the injection capillary 35 injects the sperm U into the cytoplasm S. Next, as in FIG. 27(d), the injection capillary 35 is removed from the ovum D.

In the way described above, after perforating the clear zone T of the ovum D, the capillary automatically returns to the perforated position after sampling the sperm U and can inject the sperm into the cytoplasm S of the ovum D.

Conventionally, in the ICSI (Intra-Cytoplasmic Sperm Injection) manipulation as disclosed in the non-patent document 3, after the sperm to be injected has been held within the injection capillary, the clear zone of the ovum is perforated, and the injection manipulation is carried out. At this time, in the manipulation of injecting the sperm into the cytoplasm, such a problem arises that the held sperm is caught by and adhered to the inside of the glass needle of the injection capillary. Further, on the occasion of injecting the sperm, the injection of an extra solution results in a possibility of causing a decrease in fetal development rate afterward. To avoid this problem, the sperm position in the glass needle is controlled and thus manipulated by skillfully manipulating the injector, however, this method entails the skilled technique. Namely, when the conventional manipulator performs the injection manipulation, the same problems arise as the problems (1) - (3) explained in the fourth embodiment.

The fifth embodiment aims at providing the manipulator system capable of restraining the difficulty of the sperm sampling manipulation down to the minimum, restraining the injection of the extra substance other than the sperm down to the minimum when injecting the sperm into the cytoplasm, and improving the fetal development efficiency.

In the fifth embodiment, as described above, the sperm is held within the injection capillary after perforating the clear zone of the ovum, and thereafter the sperm is injected into the cytoplasm. The method such as this is employed for the ICSI (Intra-Cytoplasmic Sperm Injection) of a rat, however, in the case of performing the manipulation manually, after sampling the sperm in the position where the clear zone is perforated to (about) 10 µm or under, such a difficult exists that the position of the injection capillary has to be surely shifted to the perforated position. Such being the case, in the fifth embodiment, immediately before performing the manipulation of sampling the sperm after perforating the clear zone, the X-, Y- and Z-axis positions of the injection manipulator 16 are stored, then the injection capillary is automatically returned to the stored position after conducting the sperm sampling manipulation, and the focusing is also automatically carried out.

According to the fifth embodiment, the injection manipulator 16, after the controller 143 has got stored with the X-, Y- and Z-axis positions of the injection manipulator 16 after perforating the clear zone of the ovum and when the operator gives the sperm sampling instruction, automatically moves the injection capillary to the sperm sampling position and executes focusing.

After sampling the sperm by operating the injection manipulator 16, upon the instruction of the operator, the injection capillary is automatically returned to the stored clear zone perforated position, and besides the position of the focal point is automatically adjusted, thereby enabling the difficulty of the sperm sampling manipulation to be restrained to the minimum, the injection of the extra substance other than the sperm to be restrained to the minimum when injecting the sperm into the cytoplasm, and the fetal development efficiency to be improved.

### <Sixth Embodiment>

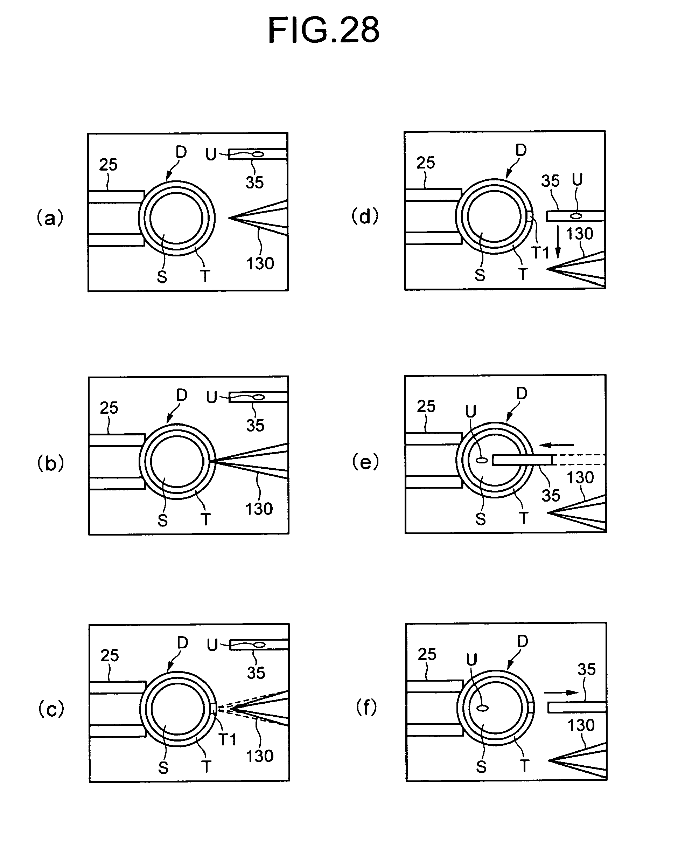

Next, the manipulator system according to a sixth embodiment will be described with reference to FIG. 28.

The manipulator system according to the sixth embodiment basically has the same configuration as the configuration in FIGS. 20 - 22, and is configured to include the electrically-driven sample stage 121, the electrically-driven focusing mechanism 124, the two manipulators 14, 16 and the microscope unit 125 mounted with the camera 123, in which one manipulator 14 is equipped with the manipulation tool (the holding capillary) capable of holding the manipulation target object, the other manipulator 16 is provided with a microelectrode and the glass needle (the injection capillary), the hold tool holds the micromanipulation target object such as the ovum, the clear zone of the of the manipulation target object is perforated by applying the microelectrode, and thereafter injection capillary performs the injection manipulation.

FIG. 28 is a view illustrating the positional relation between the capillaries fitted to the respective manipulators in the sixth embodiment and the micromanipulation target object; FIG. 28(a) depicts a state where the holding capillary holds the ovum defined as the micromanipulation target object, and the electrode and the injection capillary are close to each other; FIG. 28(b) depicts a state where the clear zone of the ovum is perforated by the electrode; FIG. 28(c) illustrates a state where a hole is formed by perforating the clear zone; FIG. 28(d) illustrates a state in which the injection capillary is driven and enabled to manipulate the perforated ovum; FIG. 28(e) illustrates a state of how the injection capillary performs the injection; and FIG. 28(f) depicts a state where the injection manipulation is finished.

In the sixth embodiment, the manipulator system in FIGS. 20 and 21 is employed, as in FIG. 28(a), the tip of the holding manipulator 14 is fitted with the holding capillary 25 for holding the ovum, and the tip of the injection manipulator 16 is fitted with the injection capillary 35 and a microelectrode 130 having a pointed tip.

The microelectrode 130 is used for perforating the clear zone T of the ovum D and is connected to an amplifier for applying the voltage and to a signal generator. The injection capillary 35 is connected to the injector. The microelectrode 130 and the injection capillary 35 are installed in a side-by-side relation at the tip of the manipulator 16.

At first, as in FIG. 28(a), the holding manipulator 14 holds the ovum D that is manipulated by the holding capillary 25.

Next, as in FIG. 28(b), the injection manipulator 16 is driven to get the tip of the microelectrode 130 close to the ovum D, and the clear zone T of the ovum D is perforated by applying the voltage to the microelectrode 130. At this time, the tip of the microelectrode 130 may or may not touch the ovum D.

Subsequently, as in FIG. 28(c), after the clear zone T has been perforated by the microelectrode 130, the injection manipulator 16 is driven to retreat the microelectrode 130 in the right direction in FIG. 28. A hole T1 is formed by perforating the clear zone T of the ovum D.

Next, as in FIG. 28(d), the injection capillary 35 is moved in parallel by driving the injection manipulator 16 and is set in the position for manipulating the ovum D. the tip of the injection capillary 35 holds the sperm U.

Subsequently, as in FIG. 28(e), upon driving the injection manipulator 16, the tip of the injection capillary 35 pierces the ovum through the hole T1 perforated in the clear zone T to perform the injection manipulation, thus injecting the sperm U into the cytoplasm S.

Next, as in FIG. 28(f), the injection capillary 35 is retreated in the right direction in FIG. 28, thus completing the injection manipulation.

Note that the tip of the injection capillary 35 holds the sperm U, however, it is preferable that this manipulation is prepared before the clear zone is perforated by the microelectrode 130. Further, it is preferable that a distance between the injection capillary 35 and the microelectrode 130 is set equal to or larger than a diameter of at least one piece of ovum so as not to cause the interference between the injection capillary 35 and the microelectrode 130 during each manipulation.

A method of perforating the clear zone of the ovum has hitherto taken mainly two ways, i.e., a case of using the piezoelectric actuator and a case of using a laser beam. In the case of using the piezoelectric actuator, instantaneous vibrations are given to the glass needle, and the clear zone is perforated by making use of a pressure difference caused inside the glass needle. In the case of using the laser beam, the laser beam impinges on the ovum from the perpendicular direction, and this impinging region is perforated in a slit-like shape.

In the conventional piezoelectric actuator prior to the apparatus according to the present invention, however, the cytoplasm is damaged by the glass needle simultaneously with perforating the clear zone as the case may be, and the manipulation entails the skilled technique. In the case of using the laser beam, though the clear zone can be easily perforated, it follows that the clear zone is perforated not as the small hole but as the slit-shaped hole. Therefore, a large cut line exists in the ovum, and a load on the ovum increases.

The sixth embodiment aims at providing the manipulator system capable of perforating the clear zone of the ovum to form a small hole to the greatest possible degree while restraining the damage to the cytoplasm in the manipulation of perforating the clear zone of the ovum.

The sixth embodiment involves using neither the piezoelectric actuator nor the laser beam for perforating the clear zone but the microelectrode for perforating the clear zone as described above. In the case of requiring the injection manipulation such as the ICSI (Intra-Cytoplasmic Sperm Injection), the injection capillary is fitted in side-by-side relation with the microelectrode fitting portion of the manipulator. This capillary is manipulated by the manipulator, and, after the perforation manipulation has been done by the microelectrode, the injection manipulation is carried out.

According to the sixth embodiment, the microelectrode-based perforation manipulation can reduce the vibrations acting on the ovum when in perforation as compared with the hitherto-used piezoelectric actuator and can prevent the cytoplasm from being broken and killed by the glass needle when perforating the clear zone.

Further, as hitherto done prior to the apparatus according to the present invention, if using the laser beam for perforating the clear zone, the ovum is perforated in the slit-like shape with the large damage, however, by contrast, according to the sixth embodiment, the micro-perforation can be attained by use of the inexpensive microelectrode without employing the expensive laser apparatus, whereby the small hole can be opened with a low damage. Thus, after being perforated, the injection manipulation can be carried out easily and surely via the micro-hole formed with the low damage simply by moving the manipulation tool in parallel.

### <Seventh Embodiment>

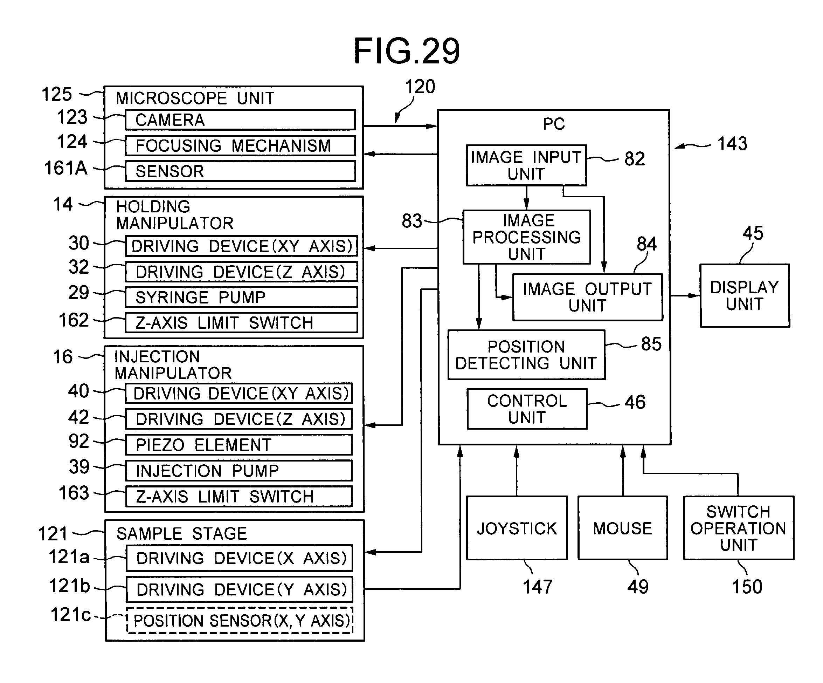

Next, the manipulator system according to a seventh embodiment will be described with reference to FIGS. 29 - 34.

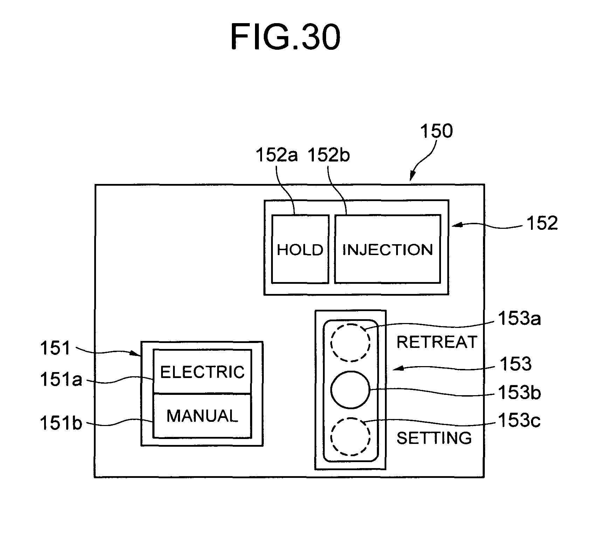

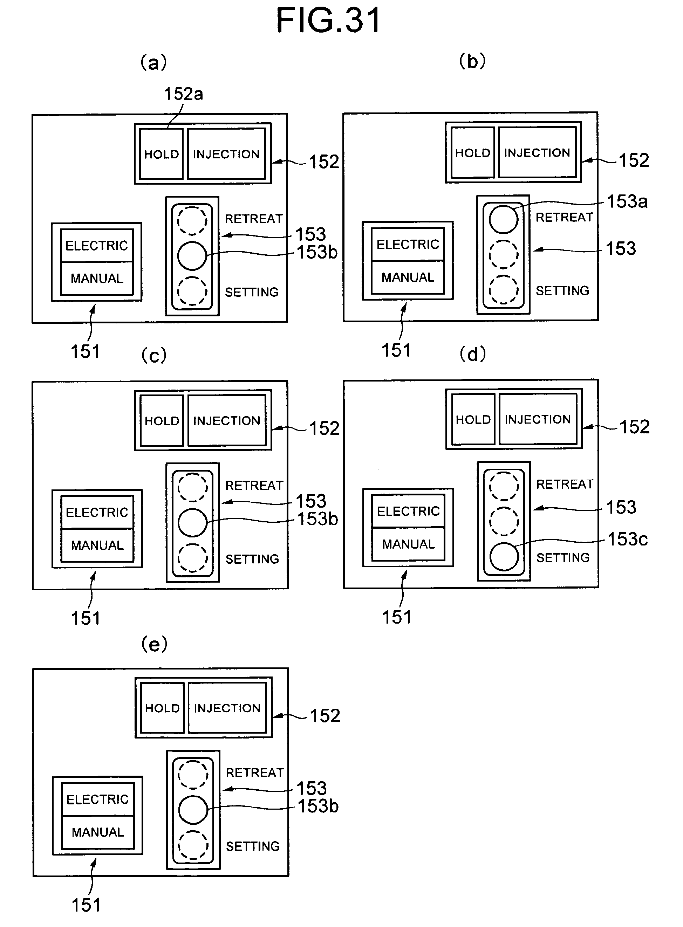

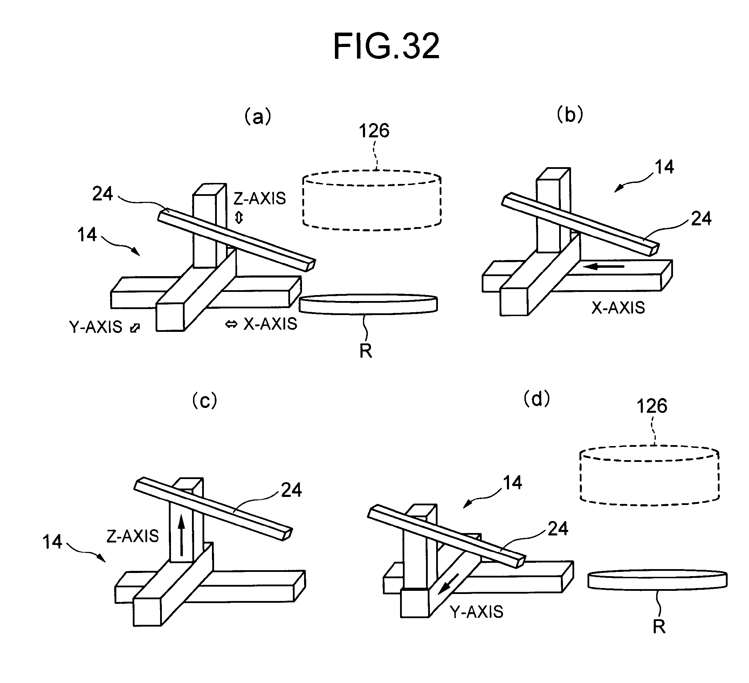

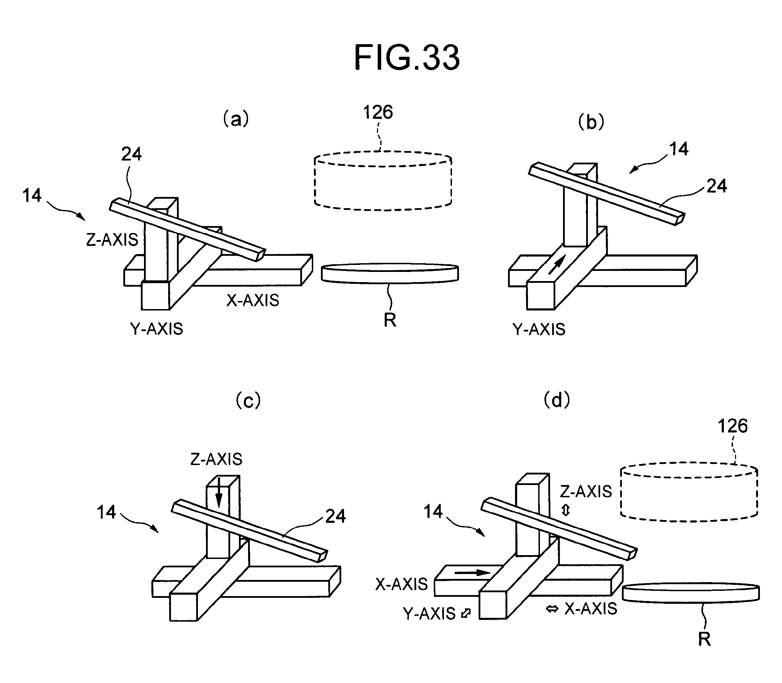

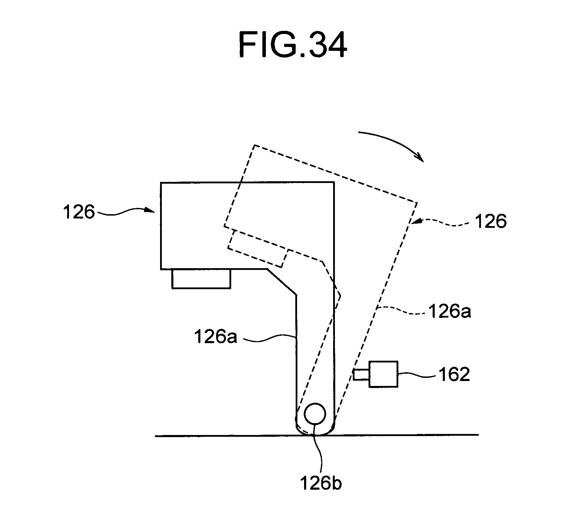

FIG. 29 is a block diagram illustrating main components of the control system of the personal computer (controller) 143 for controlling the manipulator system of the seventh embodiment. FIG. 30 is a view illustrating an example of a switch operation unit disposed in the manipulator system of the seventh embodiment. FIG. 31 is a view depicting respective manipulation examples (a) - (e) of the switch operation unit in FIG. 30. FIG. 32 is an explanatory view of moving operations (a) - (d) to the capillary replacing position by the manipulator in the seventh embodiment. FIG. 33 is an explanatory view of return operations (a) - (d) to the original position from the capillary replacing position in FIG. 32. FIG. 34 is a schematic view of the light source unit of the manipulator system in the seventh embodiment as viewed from the side surface (from the side of the manipulator 16 in FIG. 20).

The manipulator system according to the seventh embodiment basically has the same configuration as the configuration in FIGS. 20 - 22, and is configured to include the inverted microscope fitted with the electrically-driven manipulators 14, 16 and electrically-driven sample stage 121 that are mounted on the inverted microscope, in which the glass needle (capillary) is moved to the position enabling the glass needle to be easily fitted and replaced through the switch operation by operating the joystick 147 while confirming the image captured by the camera mounted on the microscope on the display unit 45 of the controller 143, and can be automatically returned to the original position under the view field of the microscope after being replaced. The personal computer (controller) 143 in FIG. 29 is basically the same as the computer but is configured to receive inputs of the signals of a switch operation unit 150, a sensor 161A and Z-axis limit switches 162, 163.

In the seventh embodiment, in the position of the capillary under the view field of the microscope, the Z-axis limit switches 162, 163 illustrated in FIG. 29 are disposed on the Z-axes (vertical directions) of the manipulators 14, 16, then the coordinates from the positions where the limit switches 162, 163 respond are grasped, and the coordinate information thereof is inputted to and stored in the controller 143. The limit switch 162 is disposed upwardly of the Z-axis as in, e.g., FIG. 32(a). The limit switch 163 is similarly disposed.

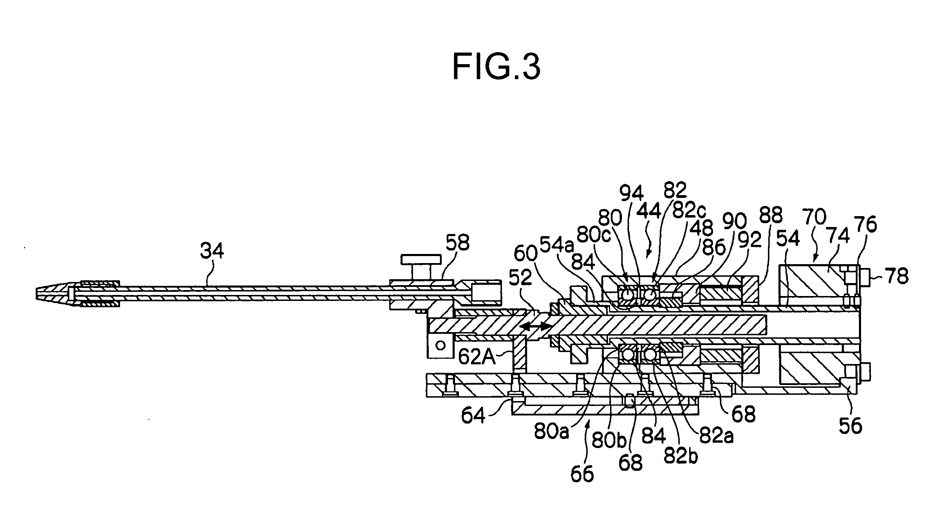

The light source unit 126 of the inverted microscope in FIG. 20 is configured to retreat with a tilt while rotating about a shaft 126b in a way that falls down in the arrow direction in order to ensure the operation space for replacing the capillary as indicated by the broken line in FIG. 3. After inclining the light source unit 126, the capillary is replaced. As in FIG. 34, the contact type sensor 161A depicted in FIG. 29 is provided in the vicinity of a leg portion 126a of the light source unit 126 and detects, if the light source unit 126 is not inclined, this state, and the manipulators 14, 16 are controlled not to execute the capillary replacing operation. As a result, the light source unit 126 can be prevented from coming into contact with the capillary due to a mis-operation. Note that the sensor 161A may also be a noncontact type sensor such as an optical sensor configured to include a photo micro-sensor and a light shielding screen.

As illustrated in FIG. 30, the switch operation unit 150 is disposed in the manipulator system and installed in the vicinity of the microscope installing location. The switch operation unit 150 is equipped with an electric/manual changeover switch 151, a drive shaft changeover switch 152 which changes over the holding and injection manipulators 14, 16, and a retreat setting operation changeover switch 153. The switches are each of an ON/OFF push button changeover type, in which the switch 151 has an electric push button 151a and a manual push button 151b; the switch 152 has a hold push button 152a and an injection push button 152b; and the switch 153 has a retreat push button 153a, a neutral push button 153b and a setting push button 153c.

The capillary can be moved to the position for the replacement by operating the respective switches 151 - 153 of the switch operation unit 150. The movement up to the position for replacing the capillary from under the view field of the microscope can be done as follows.

As indicated by the broken line in FIG. 34, the light source unit 126 in FIG. 20 is manually tilted. Next, as in FIG. 31(a), the manipulator 14 or 16 desired to be driven is selected by the drive shaft changeover switch 152 in a way that pushes the push button 151a of the electric/manual changeover switch 151. For example, the holding manipulator 14 is selected by pushing the hold button 152a, and the process stands by till magnetic excitation of a motor through the electric push button 151a comes to an ON status.

Next, the neutral button 153b of the electric/manual changeover switch 151 is kept ON in FIG. 31(a), however, for instance, as in FIG. 31(b), when selecting the retreat button 153a, the holding manipulator 14 starts the retreat operation. The retreat operation will be described with reference to FIG. 32.

As in FIG. 32(a), from the state where the capillary provided at the tip of the pipette 24 fitted to the holding manipulator 14 is positioned at the Schale R containing the manipulation target object, the capillary is retreated by the predetermined quantity in the X-axis direction in order for the capillary not to interfere as in FIG.32(b) by driving the holding manipulator 14.

Subsequently, as in FIG. 32(c), the pipette (capillary) is moved upward in the Z-axis direction to the position where the limit switch 162 (FIG. 29) responds.

Next, as in FIG. 32(d), the fitting portion of the pipette 24 is moved by the predetermined quantity toward the near side of the operator through the driving in the Y-axis direction. After the movement described above, as in FIG. 31(c), the neutral button 153b is turned ON.

In the way described above, the holding manipulator 14 moves the capillary provided at the tip of the pipette 24 in the respective X-, Y- and Z-axis directions, and, after moving to the replacement position, the capillary is fitted and replaced.

Next, as in FIG. 31(d), when turning ON the setting push button 153c of the retreat setting operation changeover switch 153, the holding manipulator 14 moves the capillary provided at the tip of the pipette 24 to under the view field of the microscope.

To be specific, the X-, Y- and Z-axes of the holding manipulator 14 move in the Y-axis direction as in FIG. 33(b) from the state of being in the capillary replacing position in FIG. 33(a), move subsequently in the Z-axis direction as in FIG. 33(c), and move next in the X-axis direction as in FIG. 3(d). At this time, the moving quantities of the X- and Y-axes are the same as those in FIGS. 32(b) and 32(d), but the moving directions are reversed. The Z-axis moves downward by the setting predetermined quantity from the position of the upward limit switch 163. Thus, the holding manipulator 14 can set the capillary 25 back to under the view field of the microscope with a high reproducibility.

Next, as in FIG. 31(e), the neutral push button 153b of the retreat setting operation changeover switch 153 is turned ON, and the light source unit 126 is raised up and returned to the original position indicated by the solid line in FIG. 34, at which time the present program comes to an end.

Note that a micro-adjustment of the position of the capillary is, if necessary, made after switching OFF the magnetic excitation of the motor by the electric/manual changeover switch 151. Further, the injection manipulator 16 can also move the capillary to the capillary replacing position and can return the capillary to the position under the view field of the microscope in the same procedure.

Further, in the seventh embodiment, though the manipulators are driven one by one in the working example described above, both of the manipulators may be simultaneously driven. On this occasion, if the moving quantities in the X- and Y-axis directions are set to differentiate from each other, the operating positions for replacing and fitting the capillary can be shifted, resulting in no hindrance in the operation.

Further, on the occasion of driving the manipulator in the X-, Y- and Z-axis directions, when starting and finishing the program running to perform the series of operations, the positional information stored on the controller 143 is to be reset after the recognition of the Z-axis upper limit switch. Moreover, the driving (of the manipulator) in the Z-axis direction is executed invariably after conducting the operation of recognizing at first the upper limit switch 162 (FIG. 29). With this recognition, the capillary can be avoided being broken due to the mis-operation of, e.g., the switch.

Conventionally, on the occasion of fitting the capillary to the manipulator and aligning the capillary in the position under the view field of the microscope, the operation is carried out by ensuring the operation space facilitating the fitting of the capillary by largely moving the manipulator, however, at this time such a problem exists that it is difficult to align the capillary to return to under the view field of the microscope because of manually operating the manipulator in many cases.

The seventh embodiment aims at providing the manipulator system capable of easily realizing the fitting and replacing operations of the capillary by reducing the manual operations of the manipulator by the operator to the greatest possible of degree, and also aims at realizing, through the sequence drive, the two types of operations such as the fitting/replacing the capillary and resetting the capillary under the view field of the microscope.

There has hitherto existed a problem that the capillary was, after being replaced, hard to return to the original position by manually moving the manipulator by a proper quantity, however, by contrast with this problem, the seventh embodiment enables the capillary replacing operation to be done in the same position with the high reproducibility, eliminates the necessity of manually largely moving the manipulator when adjusting the position of the capillary to under the view field of the microscope, further enables the capillary to be moved vicinal to the original position under the view field of the microscope with the high reproducibility, and facilitates the operation.

As discussed above, it is feasible to realize the manipulator system enabling the manipulator to make the come-and-go motions of the capillary between the easy-for-replacing/fitting position and the position under the view field of the microscope through the series of sequence operations.

### <Eighth Embodiment>

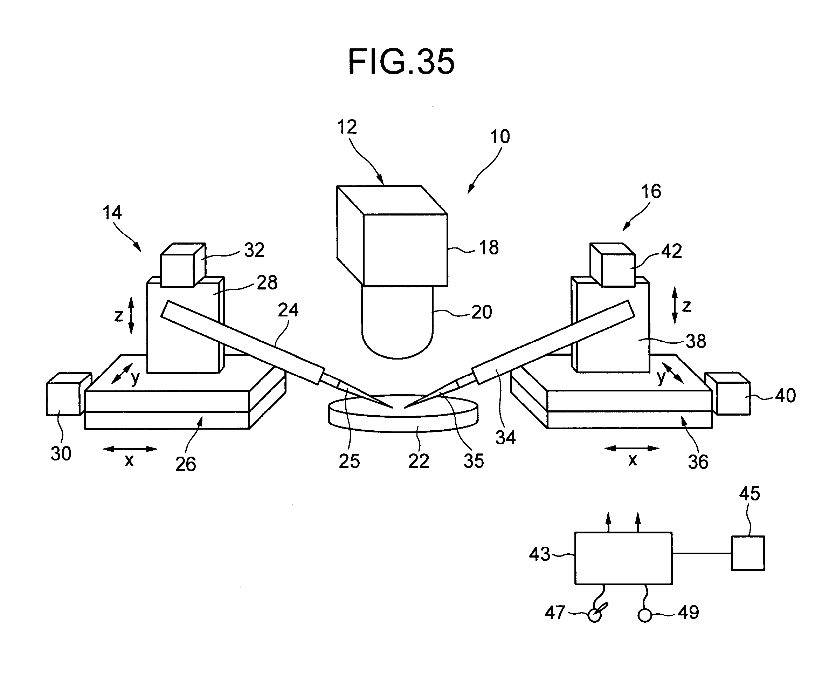

FIG. 35 is a schematic view illustrating a configuration of the manipulator system according to an eighth embodiment.

In FIG. 35, the manipulator system 10, which is defined as the system for artificially manipulating the micromanipulation target object such as the cell under observation of the microscope, includes the microscope unit 12, the holding manipulator 14 and the injection manipulator 16, in which the manipulators 14, 16 are disposed on the right and left sides of the microscope unit 12.

The microscope unit 12 includes the camera 18, the microscope 20 and the base 22, in which the microscope 20 is disposed upwardly of the base 22, and the camera 18 is connected to the microscope 20. The micromanipulation target object such as the cell can be placed on the base 22, and the cell (unillustrated) on the base 22 is irradiated with the light beam from the microscope 20. When the light beam reflected from the cell on the base 22 enters the microscope 20, an optical image of the cell is enlarged by the microscope 20 and is thereafter captured by the camera 18, and the image captured by the camera 18 is displayed on the display unit 45, whereby the cell can be observed.

The holding manipulator 14 defined as the triaxial manipulator is configured by including the holding pipette 24, the X- and Y-axis table 26, the Z-axis table 28, the driving device 30 that drives the X-and Y-axis table 26, and the driving device 32 that drives the Z-axis table. The holding pipette 24 is connected to the Z-axis table 28, and the Z-axis table 28 is so disposed on the X- and Y-axis table 26 as to be movable up and down. The X- and Y-axis table 26 is structured to move along the X-axis or the Y-axis by dint of a driving force of the driving device 30, while the Z-axis table 28 is structured to move along the Z-axis (in the direction along the vertical axis) by dint of the driving force of the driving device 32.

The holding pipette 24 jointed to the Z-axis table 28, of which the tip is fitted with the holding capillary 25, is configured to move in the three-dimensional space as the movement area according to the movements of the X- and Y-axis table 26 and the Z-axis table 28 and to hold the cell etc on the base 22 by the holding capillary 25.

The injection manipulator 16 classified as the orthogonal triaxial manipulator includes the injection pipette 34, the X- and Y-axis table 36, the Z-axis table 38, the driving device 40 which drives the X- and Y-axis table 36 and the driving device 42 which drives the Z-axis table 38, in which the injection pipette 34 is joined to the Z-axis table 38, the Z-axis table 38 is so disposed on the X- and Y-axis table 36 as to be movable up and down, and the driving devices 40, 42 are connected to the controller 43.

Note that the manipulators 14, 16 are configured to drive the X- axis, the Y-axis and the Z-axis in this sequence from downward in FIG. 35, however, the embodiment is not limited to this configuring sequence (an arrangement mode), and the configuration may adopt other sequences, in which, e.g., the pipettes 24, 34 may be joined to the X-axis table and the Y-axis table.

The X- and Y-axis table 36 is structured to move along the X-axis or the Y-axis by dint of the driving force of the driving device 40, while the Z-axis table 38 is structured to move along the Z-axis (in the direction along the vertical axis) by dint of the driving force of the driving device 42. The tip of the injection pipette 34 jointed to the Z-axis table 38 is fitted with the injection capillary 35 that takes a needle-like shape and is inserted into the cell etc on the base 22.

The X- and Y-axis table 36 and the Z-axis table 38 move in the three-dimensional space as the movement area embracing the cell etc on the base 22 by the driving forces of the driving devices 40, 42 and are constructed as coarse adjustment mechanisms (triaxial movement tables) which are coarsely driven (moved) to the insertion position for inserting the injection capillary 35 into the cell on the base 22.

Further, these tables 36, 38 are equipped with a function as a nano-positioner in addition to the function as the moving table, the nano-positioner being configured to support the injection pipette 34 so as to enable the pipette 34 to reciprocate and to perform the micro-drive of the pipette 34 along the longitudinal direction (the axial direction).

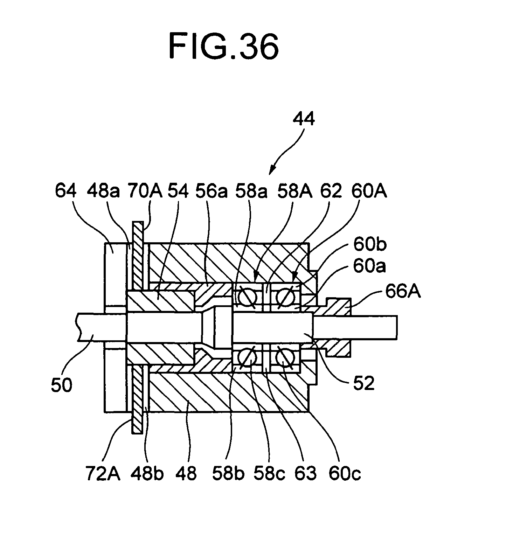

Specifically, the micro-motion mechanism 44 as the nano-positioner illustrated in FIG. 2 is added (built in) to the X- and Y-axis table 36 and the Z-axis table 38. FIG. 36 is a sectional view illustrating an example of the micro-motion mechanism added to the X-and Y-axis table 36 and the Z-axis table 38 in FIG. 35.

The micro-motion mechanism 44 in FIG. 36 includes the housing 48 building up the body of the piezoelectric actuator, a screw shaft 50 is inserted into the housing 48 formed substantially in the cylindrical shape, a cylindrical piezoelectric element 54 and a cylindrical spacer 56a are accommodated on the outer peripheral side of the screw shaft 50, and bearings 58A, 60A are fixed to the screw shaft 50 by a lock nut 66a and thus accommodated with an inner race spacer 62 being interposed therebetween.

The bearings 58A, 60A are respectively equipped with inner races 58a, 60a, outer races 58b, 60b and balls 58c, 60c inserted in between the inner races 58a, 60a and the outer races 58b, 60b; the inner races 58a, 60a are fitted to the outer peripheral surface of the screw shaft 50 via the inner race spacer 62; and the outer races 58b, 60b are fitted to the inner peripheral surface of the housing 48, thereby supporting the screw shaft 50 rotatably. The bearing 58A abuts on the spacer 56a fitted to the inner peripheral surface of the housing 48 to fasten the cover 64 via the piezoelectric element and is thereby given a preload. One end side of the housing 48 is formed with holes 48a, 48b through which to pass signal lines for applying the voltage to the piezoelectric element. As for adjusting the preload, the pressing force is adjusted by adjusting a length of the spacer 56a, and the proper preloads are given to the bearings 58A, 60A. The predetermined preloads are thereby applied to the bearings 58A, 60A, and a gap 63 between the outer races of the bearings 58A, 60A is formed as a distance therebetween in the axial direction.

The piezoelectric element 54 is connected to the controller 43 in FIG. 35 via lead wires 70A, 72A inserted respectively into the holes 48a, 48b and is configured as one element of the piezoelectric actuator which stretches and contracts along the longitudinal direction of the axis of the injection pipette 34 in a way that corresponds to the voltage given from the controller 43.

The piezoelectric element 54 is configured to, when an injection voltage is applied from the controller 43, perform the perforation manipulation for inserting the injection capillary 35 into the cell on the base 22, and to make the microadjustment of, when a micro-motion voltage is applied from the controller 43, the position of the injection capillary 35 by getting the screw shaft 50 to make the micro-motion along the longitudinal direction (axial direction) thereof.

Incidentally, on the occasion of setting the injection voltage for the piezoelectric element 54, amplitude and a waveform of the voltage can be adjusted corresponding to a property etc of the manipulation target cell. Further, the cylindrical piezoelectric element is employed in FIG. 36, however, without being limited to this type, the piezoelectric element may take an angular barrel type.

The controller 43, when driving the injection manipulator 16, coarsely drives the X- and Y-axis table 36 and the Z-axis table 38 to position the injection capillary 35 fitted to the tip of the injection pipette 34 in the vicinity of the cell on the base 22 and thereafter conducts the micro-drive of the injection capillary 35 by use of the micro-motion mechanism 44.

The controller 43 in FIG. 35 is configured to include a microcomputer equipped with hardware resources such as a CPU (Central Processing Unit) serving as the arithmetic means and a RAM (Random Access Memory) and a ROM (Read Only Memory) as the storage means, and is configured as a control means of performing a variety of arithmetic operations based on a predetermined program, outputting a drive instruction to the driving devices 40, 42 in accordance with the arithmetic results, and displaying information on the cell image captured by the camera 18 and information on the arithmetic results on the screen of the display unit (the display of the personal computer) 45 including a CRT (Cathode Ray Tube) and a liquid crystal panel.

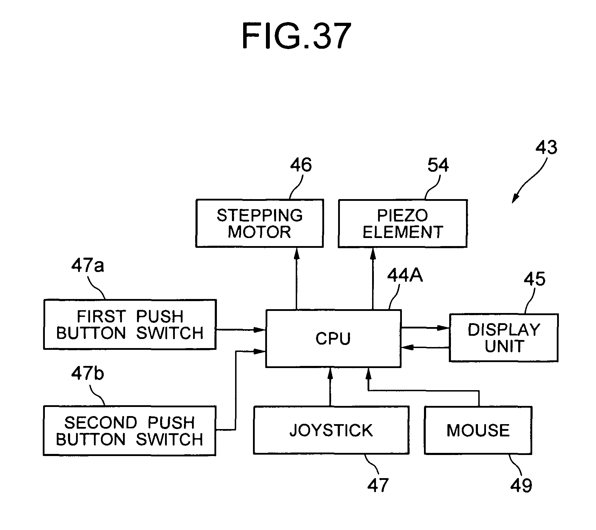

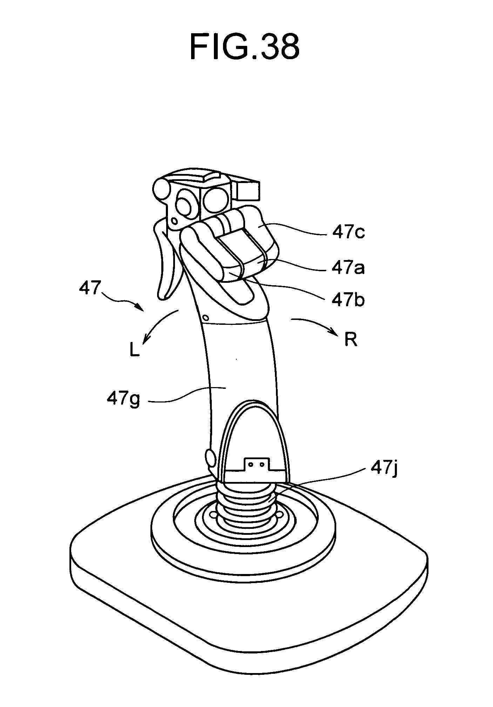

FIG. 37 is a block diagram illustrating main components of the control system of the controller 43 in FIG. 35. FIG. 38 is a perspective view illustrating a specific example of the joystick in FIGS. 35, 37.

Each of the driving devices 40, 42 of the manipulator 16 in FIG. 35 is configured to have, e.g., a built-in stepping motor 46 (FIG. 37), in which rotations of the stepping motor 46 as a coarse-motion motor are converted into linear motions via a linear guide and ball screws. As in FIG. 37, a CPU 44A of the controller 43 instructs the stepping motor 46 to perform driving via a driver (unillustrated) when making the coarse motions, and instructs the piezoelectric element 54 to perform driving via an amplifier (unillustrated) when making the micro-motions.

The changeover of the drive to the coarse-motion and the micro-motion of the manipulator 16 in FIG. 35 involves using the joystick 47 connected to the controller 43 as in FIGS. 1 and 37.

The CPU 44A of the controller 43 in FIG. 37, upon inputting the signal about the manipulating direction from the joystick 47, determines the manipulating direction of the joystick 47, and, for instance, as in FIG. 38, when the body unit (handle) 47e is grasped by the operator and is manipulated to fall down on the right side R from the state where the joystick 47 is in a neutral position while the injection manipulator 16 is stopped, coarsely drives the injection capillary 35 by driving the stepping motor 46.

Further, as in FIG. 38, the joystick 47, with a handle 479 being supported by a spring 47j, has a mechanism to give an operating instruction by rotating the handle 479 in the right and left directions. In FIG. 37, the injector is driven so that the positive (negative) pressure is generated within the glass needle when the handle 479 is turned rightward buts performs the reversed operation when turned on the opposite side.

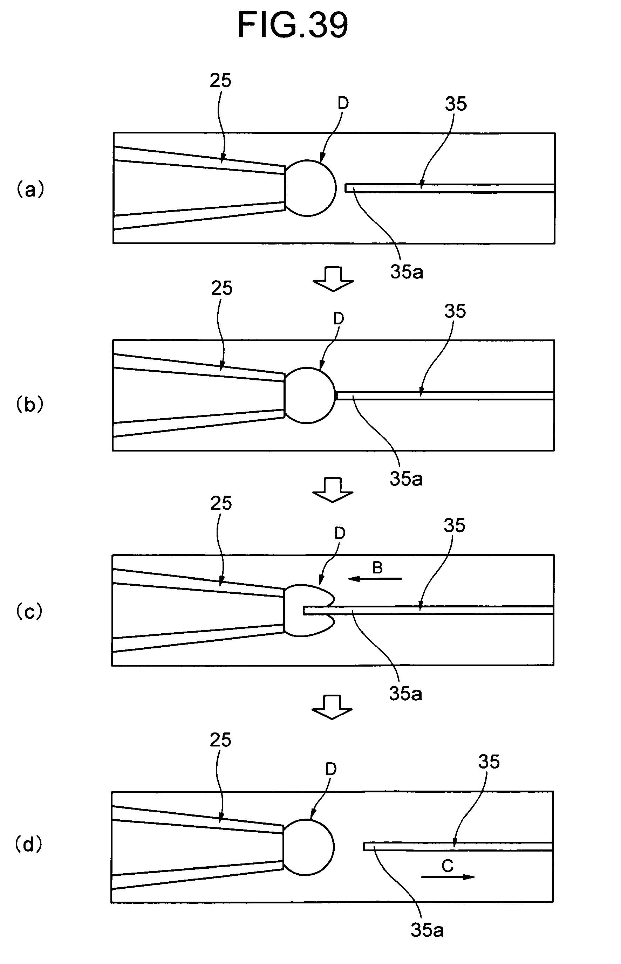

Further, as in FIG. 38, the joystick 47 can be also configured to include first and second push button switches 47a, 47b disposed in the side-by-side relation on the upper portion thereof. In this case, in FIG. 38, when turned ON by pressing the first push button switch 47a, the piezoelectric element 54 is driven, and the injection capillary 35 conducts the perforation manipulation of perforating the cell in a way that makes the minute quantity of movement (micromovement) in the position vicinal to the cell. Moreover, when turned ON by pressing the second push button switch 47b, the stepping motor 46 is driven, and the injection capillary 35 is driven in the retreat direction C (FIG. 39) so as to be removed from the intra-cell position. Furthermore, the injection capillary 35 may also be driven in the retreat direction C by pressing the third push button switch 47c in place of the second push button switch 47b.

As described above, the direction of turning the handle 479 of the joystick 47 and the injector driving direction can be set to facilitate the usage for a user who uses the joystick 47. The controller 43 reads positional information of the handle 479 when turning the handle 479 of the joystick 47, and the positional information is converted into a speed instruction by its being multiplied by a gain, thus driving the motor connected to the injector. Hence, when largely turning the handle 479 of the joystick 47, the injector can be driven at a higher speed. This gain can be set to facilitate the usage for the user. For example, the gain is set small for the unaccustomed user so that the injector is not driven so fast even when largely turning the handle 479 of the joystick 47, thereby making it possible to prevent the malfunction during the manipulation and to make the minute quantity of adjustment (microadjustment).

When necessary for the manipulation of holding the cell and the sperm within the injection glass needle, the cell and the sperm are adhered to the bottom of the Schale as the case may be, and it is therefore required to make the injector speed variable at all times and to quickly change over the negative/positive pressure drives. At this time, the speed can be made variable depending on a magnitude (degree) of how much the handle 479 of the joystick 47 is turned, and the driving direction of the injector is changed over by changing over the turn direction, and hence the handling operation can be attained with high operability. Thus, the manipulator and the injector can be operated by one operation unit (handle), and therefore there is no time-consuming operation to hold the operation unit from one to another as compared with the conventional configuration. Further, the injector can be easily driven by turning the handle of the joystick, and hence the operating difficulty can be avoided by using the handle in a way that sets the handle to make the micro-drive of the injector even by largely turning the handle of the joystick as compared with when manually making the micro-rotation of the handle.

Next, the operations of the manipulator system 10 in FIGS. 35 - 38 will be described with reference to FIGS. 35 - 39. FIG. 39 schematically illustrates the view field of the microscope by use of the microscope unit 12 in FIG. 35 and is an explanatory diagram of respective steps (a) - (d) for the injection into the ovum.

As in FIG. 39(a), the holding manipulator 14 is driven, and the holding capillary 25 holds the ovum D on the base 22, in which state the joystick 47 in FIGS. 37 and 38 is operated toward the right side R, and the stepping motor 46 is driven to make the tip 35a of the injection capillary 35 close to the ovum D.

Next, as in FIG. 39(b), the joystick 47 is operated toward the left side L, and the controller 43 drives the stepping motor 46 to impinge the tip 35a of the injection capillary 35 upon the ovum D.

Subsequently, as in FIG. 39(c), the piezoelectric element 54 is driven by applying the injection voltage from the controller 43 in FIGS. 37, 38 and causes the tip 35a of the injection capillary 35 to perform the perforation manipulation on the basis of a signal waveform of the initialized injection voltage, then the tip 35a of the injection capillary 35 is inserted into the ovum D via the clear zone of the ovum D in an advancing direction B, and a solution containing the sperm is injected into the ovum D from the injection capillary 35.

Note that the perforation manipulation by the piezoelectric element 54 involves, it is preferable, taking such a configuration that the piezoelectric element 54 is continuously driven while pushing the push button switch 47a because of the driving time of the piezoelectric element 54 being different depending on an individual difference between the ova, and is turned OFF when released from the push button switch 47a.

Further, the speed of injecting the solution from the injection capillary 35 can be also made variable by driving the injector on the basis of the magnitude of the force to turn the handle 479 and the speed of turning the handle 479. In this case, it is preferable that the injection speed is decelerated if the handle 479 is turned at a low speed and with a weak force but is accelerated if the handle 479 is turned at a high speed and with a strong force. Moreover, if the operation speed and the operation force of the handle 479 change in the midst of the manipulation, the injection speed can be also made variable corresponding to this change.

Next, for the manipulation after the injection manipulation described above, as in FIG. 39(d), the joystick 47 in FIGS. 37, 38 can also include the second push button switch 47b provided at the upper portion. Upon pushing the second push button switch 47b, the stepping motor 46 is driven to drive the injection pipette 34 along the longitudinal direction of the axis thereof, and the injection capillary 35 is driven in the retreat direction C, thereby removing the injection capillary 35 from within the cell D.

As described above, according to the eighth embodiment in FIGS. 35 - 39, one single joystick 47 is capable of performing the manipulations started with the perforation manipulation by the piezoelectric element 54, the initiation of the injection and ended with removing the injection capillary 35 from the cell (ovum D), there is no necessity of operating the portions other than the joystick 47, and besides the manipulations can be attained only by the joystick 47, thereby facilitating the manipulations on the whole. Further, the initialized manipulation can be stably executed by taking the turn-manipulation, and consequently man-made errors are reduced, and, in addition, every manipulation can be iterated stably.

Moreover, in the case of using the push button switch, in addition to what has been described above, the first and second push button switches 47a, 47b are disposed in the side-by-side relation at the upper portion of the joystick 47 and can therefore be easily pushed consecutively, whereby the perforation manipulation, the injection manipulation and the injection capillary removing manipulation can be carried out consecutively, accurately and easily.

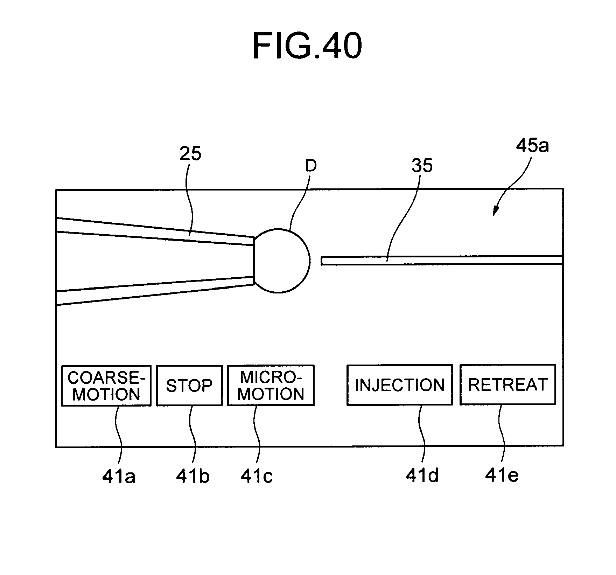

Next, as a substitute for operating the joystick 47 descried above, an available configuration is that the manipulations may be done on the screen of the display unit 45 by use of the mouse 49 in FIG. 35. To be specific, for instance, the image of the view field of the microscope as in FIG. 39 is displayed on the screen 45a of the display unit 45 in FIG. 40, and the push buttons 41a - 41e having the same functions as those of the switches by clicking with the mouse 49 in FIG. 35 are displayed thereon. These push buttons 41a - 41e are operated by the mouse 49, whereby the same manipulations as those in FIGS. 39(a) - 39(d) can be performed.

Namely, the stepping motor 46 is driven by clicking a coarse-motion button 41a displayed on the screen 45a by the mouse 49, and, as in FIG. 39(a), the tip 35a of the injection capillary 35 is made close to the ovum D. Herein, the manipulation may be stopped by clicking the stop button 41b.

Next, the stepping motor 46 is driven by clicking the coarse-motion button 41a, and, as in FIG. 39(b), the tip 35a is impinged upon the ovum D by driving the injection capillary 35.

Subsequently, when clicking the injection button 41d, the piezoelectric element 54 is driven by applying the injection voltage, and, as in FIG. 39(c), the injection capillary 35 conducts the perforation manipulation with its tip 35a and performs injecting.

Next, after the injection manipulation described above, when clicking the retreat button 41e, the stepping motor 46 is driven, and, as in FIG. 39(d), the injection capillary 35 is driven in the retreat direction C and is thus removed from within the cell D.

Note that in FIGS. 37 - 39 and 40, the perforation manipulation, the injection manipulation and the injection capillary removing manipulation are carried out separately by the two push buttons, however, the perforation manipulation/injection manipulation through the injection capillary removing manipulation may automatically consecutively be conducted by pushing the single push button.

As described above, the best mode for carrying out the present invention has been discussed so far, however, the present invention is not limited to those embodiments, and a variety of modifications can be made within the scope of the technical idea of the present invention. For example, the discussion has been made by exemplifying the turn manipulation of the handle 479 and the push button switches 47a, 47b in FIG. 38, however, other push button switches can be equipped with the same functions, and the operator can assign the same functions to other easy-for-operating push button switches.

Further, another available configuration is that a mouse including the push button switches is used by way of the mouse 49 in FIG. 35, the same manipulations of the first and second push button switches 47a, 47b of the joystick 47 are executed by pushing the push button switches attached to the mouse 49. In this case, the changeover to the coarse-motion and the micro-motion may be done by, e.g., the same push buttons 41a, 41b, 41c as those in FIG. 40.

Moreover, a pointing device other than the joystick and the mouse may also be used, for example, a pen tablet etc may be employed, and, if the push buttons are deficient, it is preferable that clickable push buttons are provided on the screen.

### <Ninth Embodiment>

The manipulator system 10 in a ninth embodiment has the same configuration as the configuration in FIG. 35. That is, the manipulator system 10, which is defined as the system for artificially micro-manipulating the micromanipulation target object such as the cell under observation of the microscope, includes the microscope unit 12, the holding manipulator 14 and the injection manipulator 16, in which the manipulators 14, 16 are disposed on the right and left sides of the microscope unit 12. The microscope unit 12 includes the camera 18, the microscope 20 and the base 22, in which the microscope 20 is disposed upwardly of the base 22, and the camera 18 using an imaging element such as a CCD (Charge Coupled Diode) and a CMOS (Complementary Metal Oxide Semiconductor) is connected to the microscope 20. The micromanipulation target object such as the cell can be placed on the base 22, and the cell (unillustrated) on the base 22 is irradiated with the light beam from the microscope 20. When the light beam reflected from the cell on the base 22 enters the microscope 20, an optical image of the cell is enlarged by the microscope 20 and is thereafter captured by the camera 18, and the image captured by the camera 18 is displayed on the display unit 45, whereby the cell can be observed.

Note that the respective units of the manipulator system 10 are the same as those in FIG. 35, and hence their descriptions are omitted. Further, the micro-motion mechanism 44 as the nano-positioner is, though added (built in) to the X- and Y-axis table 36 and the Z-axis table 38, the same as the mechanism depicted in FIG. 36, and therefore its description is omitted.

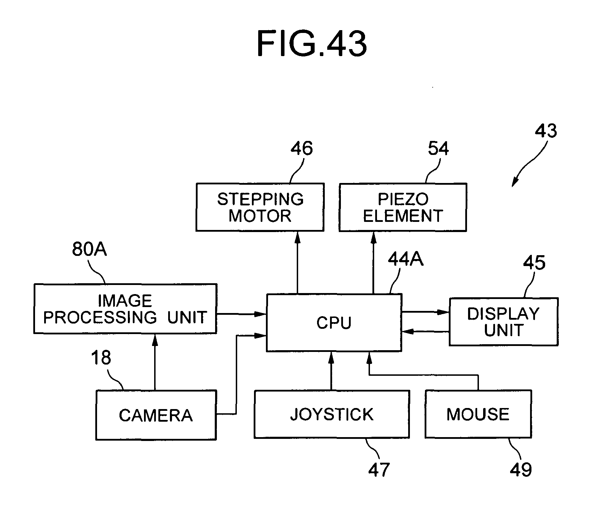

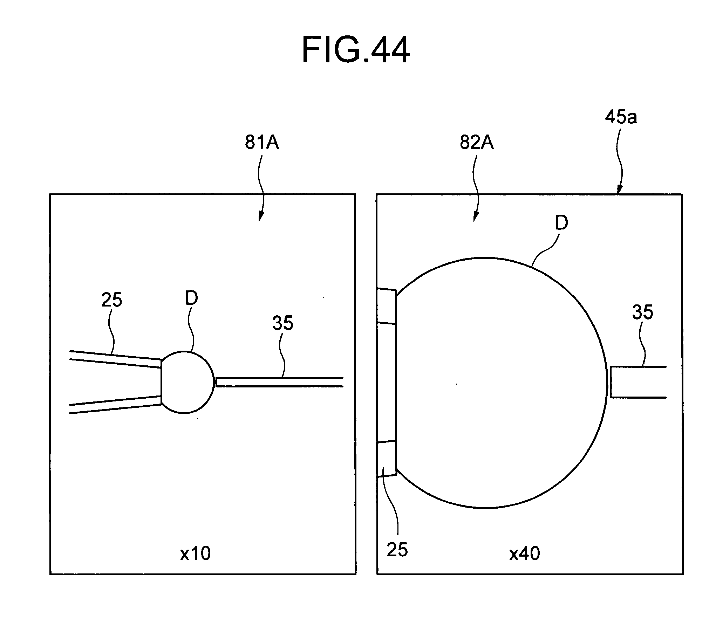

FIG. 43 is a block diagram illustrating main components of the control system of the controller 43 in FIG. 35 according to the ninth embodiment. FIG. 44 is a diagram illustrating an example of sliced screens on the display unit in FIG. 43.

Each of the driving devices 40, 42 of the manipulator 16 in FIG. 35 is configured to have, e.g., the built-in stepping motor 46 (FIG. 37), in which the rotations of the stepping motor 46 are converted into the linear motions via the linear guide and the ball screws, etc. As in FIG. 43, the CPU 44A of the controller 43 instructs the stepping motor 46 to perform driving via the driver (unillustrated) when making the coarse-motions, and instructs the piezoelectric element 54 to perform driving via the amplifier (unillustrated) when making the micro-motions.

An image display apparatus is configured to include the display unit 45, an image processing unit 80A and the CPU 44A which controls the display unit 45 and the image processing unit 80A in FIG. 43. To be specific, the CPU 44A in FIG. 43 controls a screen display mode on the display unit 45, and slices the screen 45a of the display unit 45 into, e.g., two subscreens such as subscreens 81A, 82A as in FIG. 44. The image of the microscope, which is captured by the camera 18 provided in the microscope 20 in FIG. 1, is displayed as the image of the micromanipulation target object such as the cell in the sliced subscreens 81A, 82A, respectively.

The image output from the camera 18 undergoes a variety of image processes in the image processing unit 80A in FIG. 43, however, the microscope image of the micromanipulation target object can be subjected to, e.g., a contracting/enlarging process at a desired magnification. That is, the image processing unit 80A is configured to execute softwarewise the contracting process or the enlarging process of the inputted image on the basis of a predetermined algorithm and to output the contracted or enlarged image.

As in FIG. 44, the microscope image undergoing the enlarging process, i.e., enlarged at a 10-power magnification (x10) for display in the image processing unit 80A is displayed in the subscreen 81A, and the same microscope image enlarged at a 40-power magnification (x40) for display is displayed in the subscreen 82A.

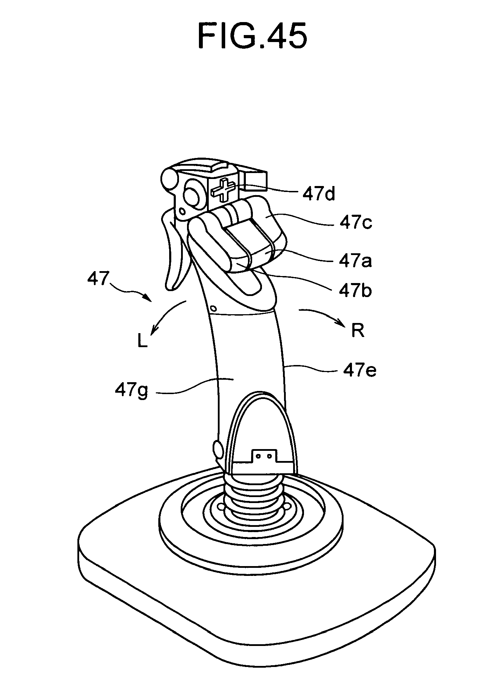

FIG. 45 is a perspective view illustrating a specific example of the joystick 47 in FIG. 43. For instance, as in FIGS. 35 and 43, when the body unit 47e is grasped by the operator and is manipulated on the right side R or the left side L from the state where the joystick 47 is in the neutral position while the injection manipulator 16 is stopped as in FIG. 44, the injection capillary 35 is coarsely driven by driving the stepping motor 46 by use of the joystick 47 connected to the controller 43 as in FIG. 43.

Further, as in FIG. 45, the joystick 47 includes first and second push button switches 47a, 47b disposed in the side-by-side relation on the upper portion thereof, in which when turned ON by pressing the first push button switch 47a, the piezoelectric element 54 is driven, and the injection capillary 35 conducts the perforation manipulation of perforating the cell in a way that makes the minute quantity of movement (micromovement) in the position vicinal to the cell. Moreover, when turned ON by pressing the second push button switch 47b, the stepping motor 46 is driven, and the injection capillary 35 is driven in the retreat direction C (FIG. 39) so as to be removed from the intra-cell position. Furthermore, an instruction to perform this manipulation may be done by turning the handle 479 of the joystick 47.

Incidentally, an available configuration is that the button operation of the second push button switch 47b may be substituted by using a hat switch 47d provided at the upper portion of the joystick 47 as in FIG. 45. Moreover, other push button switches such as a third push button switch 47c neighboring to the push button switch 47a in FIG. 45 can be equipped with the same functions, and the same functions may also be assigned to other push button switches that are easy for the operator to operate.

Next, the operations of the manipulator system 10 in the ninth embodiment will be described with reference to FIGS. 43 - 45 and further FIG. 39.

As in FIG. 39(a), the holding manipulator 14 is driven, and the holding capillary 25 holds the ovum D on the base 22, in which state the joystick 47 in FIGS. 43 and 45 is operated toward the right side R, and the stepping motor 46 is driven to make the tip 35a of the injection capillary 35 close to the ovum D.

Next, as in FIG. 39(b), the joystick 47 is operated toward the left side L, and the controller 43 drives the stepping motor 46 to impinge the tip 35a of the injection capillary 35 upon the ovum D.

Subsequently, as in FIG. 39(c), upon pushing the first push button switch 47a provided at the upper portion of the joystick 47 in FIG. 45, the piezoelectric element 54 is driven by applying the injection voltage from the controller 43 and causes the tip 35a of the injection capillary 35 to perform the perforation manipulation on the basis of the signal waveform of the initialized injection voltage, then the tip 35a of the injection capillary 35 is inserted into the ovum D via the clear zone of the ovum D in the advancing direction B, and the solution containing the sperm is injected into the ovum D from the injection capillary 35.

Note that the perforation manipulation by the piezoelectric element 54 involves, it is preferable, taking such a configuration that the piezoelectric element 54 is continuously driven while pushing the push button switch 47a because of the driving time of the piezoelectric element 54 being different depending on the individual difference between the ova, and is turned OFF when released from the push button switch 47a.

Next, after the injection manipulation described above, as in FIG. 39(d), upon pushing the second push button switch 47b provided at the upper portion of the joystick 47 in FIG. 45, the stepping motor 46 is driven to drive the injection pipette 34 along the longitudinal direction of the axis thereof, and the injection capillary 35 is driven in the retreat direction C, thereby removing the injection capillary 35 from within the cell D.

As described above, according to the ninth embodiment, the manipulations started with the perforation manipulation by the piezoelectric element 54, the initiation of the injection and ended with removing the injection capillary 35 from the cell (ovum D) can be executed simply by pushing the push button switches 47a, 47b, and there is no necessity of operating the lever of the joystick, which facilitates the manipulations. Further, the initialized manipulation can be stably executed by taking the button-operation, and consequently the man-made errors are reduced, and, in addition, every manipulation can be iterated stably.

Moreover, the first and second push button switches 47a, 47b are disposed in the side-by-side relation at the upper portion of the joystick 47 and can therefore be easily pushed consecutively, whereby the perforation manipulation, the injection manipulation and the injection capillary removing manipulation can be carried out consecutively, accurately and easily.

On the occasion of every manipulation in FIGS. 39(a) - 39(d), as in FIG. 44, the low-magnification image and the high-magnification image of the same microscope image are displayed in the subscreens 81A, 82A into which the screen on the display unit 45 is sliced by two, during which every micromanipulation over the cell D can be executed through the high-magnification image while grasping the state of the cell D through the low-magnification image. For example, on the occasion of the manipulation in FIG. 39(b), the low-magnification image and the high-magnification image are displayed in the sliced-by-2 subscreens 81A, 82A as in FIG. 10, the whole cell D is grasped through the low-magnification image in the subscreen 81A by manipulating the joystick 47, and the tip 35a of the injection capillary 35 can impinge on the ovum D while observing the high-magnification image in the subscreen 82A.

As described above, according to the manipulator system in the ninth embodiment, the manipulators 14, 16 manipulate the micro target object such as the cell, on which occasion the microscope images are collected by one single camera 18 and can be aggregated on, e.g., the PC (personal computer). The aggregated microscope images can be displayed at the different display magnifications separately in the two subscreens 81A, 82A on the display unit 45, in which, for instance, the display magnification is 10-power in the subscreen 81A, while the display magnification is 40-power in the subscreen 82A. With this configuration, the micromanipulation can be done through the high-magnification image while grasping the state of the sample under the view field of the microscope through the low-magnification image at all times. Further, it is feasible to omit the time-consuming operation to replace the objective lens of the microscope, and the necessity of the objective lens having the high-magnification is eliminated. Moreover, the microscope may not use the expensive product such as the electrically-driven revolver, and it is therefore feasible to make the contribution to reducing the costs of the whole manipulator system.

As described above, the best mode for carrying out the present invention has been discussed so far, however, the present invention is not limited to those embodiments, and the variety of modifications can be made within the scope of the technical idea of the present invention. For example, the display magnifications in the subscreens 81A, 82A in FIG. 44 can be varied, and, for instance, one display magnification is set at substantially a life-size magnification (1X), while the other can be set at a desired magnification based on a digital zoom. Further, the sliced subscreens on the display unit 45 are not limited to the two subscreens, but multi-sliced subscreens such as 3-sliced subscreens and 4-sliced subscreens may also be available.

### <Tenth Embodiment>

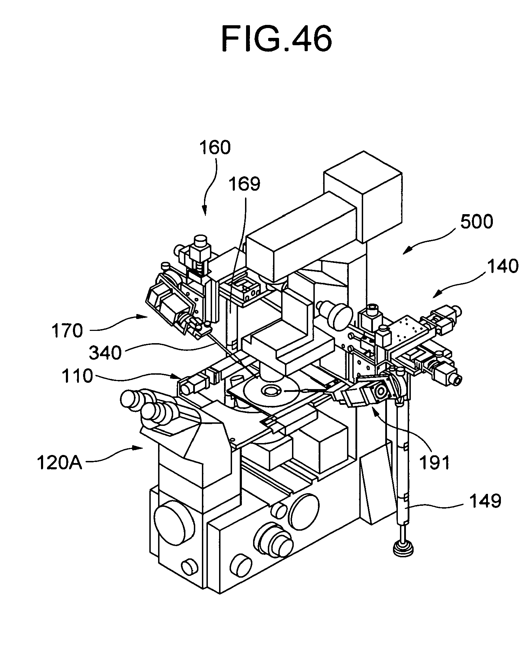

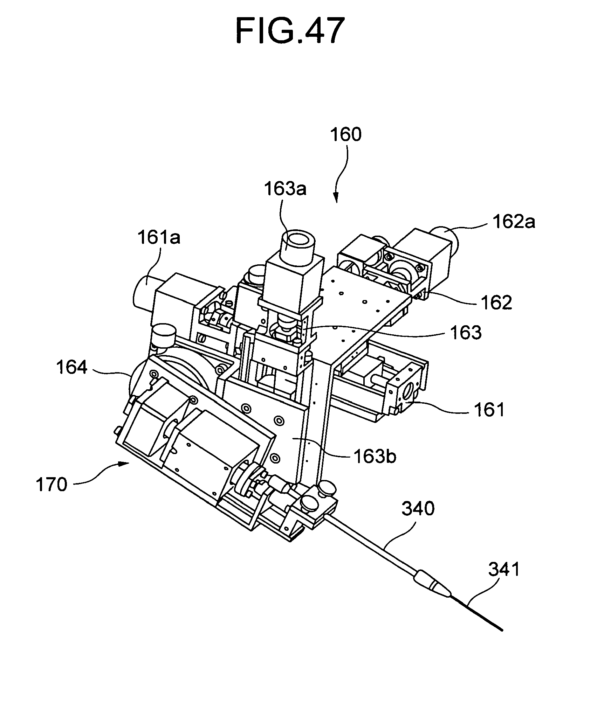

FIG. 46 is a perspective view schematically illustrating a configuration of the manipulator system according to a tenth embodiment. FIG. 47 is a perspective view schematically illustrating a configuration of an electrically-driven triaxial manipulator for injection in FIG. 46.

FIG. 46 depicts a manipulator system 500 into which the manipulator system 10 in FIG. 35 is more materialized. To be specific, as in FIG. 46, the manipulator system 500 according to the tenth embodiment includes an electrically-driven triaxial (XYZ) manipulator 140 for holding, electrically-driven triaxial (XYZ) manipulator 160 for injection, an inverted microscope 120A and an electrically-driven sample stage 110, in which the electrically-driven triaxial manipulators 140, 160 are fitted integrally with the inverted microscope 120A. Note that the electrically-driven triaxial manipulators 140, 160 may also be fitted to build up an integral structure with the sample stage 110, whereby the influence of the vibrations form the outside is hard to receive.

The electrically-driven triaxial manipulator 160 for the injection is fitted with a nut rotary actuator 170 capable of driving the motor and the piezoelectric element so as to cause an injector 340 capable of adjusting the pressure by the electric power to make the reciprocating motions in the axial direction of the installation. A similar nut rotary actuator 191 is also fitted to the electrically-driven triaxial manipulator 140 for holding.

The inverted microscope 120A has an electrically-driven focusing actuator, a revolver unit which changes over the objective lens, and a light source for irradiating the observation target object with the light beam.

Moreover, for improving the stability when installing the electrically-driven triaxial manipulators 140, 160, legs 149, 169 for supporting the electrically-driven triaxial manipulators 140, 160 are installed in the direction of the gravity. The respective legs 149, 169 are disposed at only one portion for the electrically-driven triaxial manipulators 140, 160 and may also be disposed at a plurality of portions.

As in FIG. 47, the electrically-driven triaxial manipulator 160 is constructed by combining three uniaxial actuators 161, 162, 163 in the triaxial (XYZ) directions. Each of the uniaxial actuators 161, 162, 163 is configured to include a stepping motor, a coupling, a BS (ball screw), a guide element and a slider, in which limit switches are installed at both ends in the drive axial direction in order to prevent an overstroke. Further, a configuration is such that the manipulator 160 can be manually manipulated in the respective axial directions with manual knobs 161a, 162a, 163a of the uniaxial actuators 161 - 163 by cutting off the magnetic excitations of the stepping motors of the uniaxial actuators 161 - 163. The electrically-driven triaxial manipulator 140 has the same configuration.

The uniaxial actuator 163 is set for driving in the Z-axis direction, a θ-stage 164 is disposed on the Z-axis slider 163b, and further the nut rotary actuator 170 is disposed on the θ-stage 164. The θ-stage 164 serves to adjust an installation angle of the nut rotary actuator 170 and may be, though being of the manual type, configured as an electrically-driven type. The installation angle of the θ-stage 164 is set coincident with a bending angle of a glass-made injection capillary 341 fitted to the injector 340 or an injection angle.

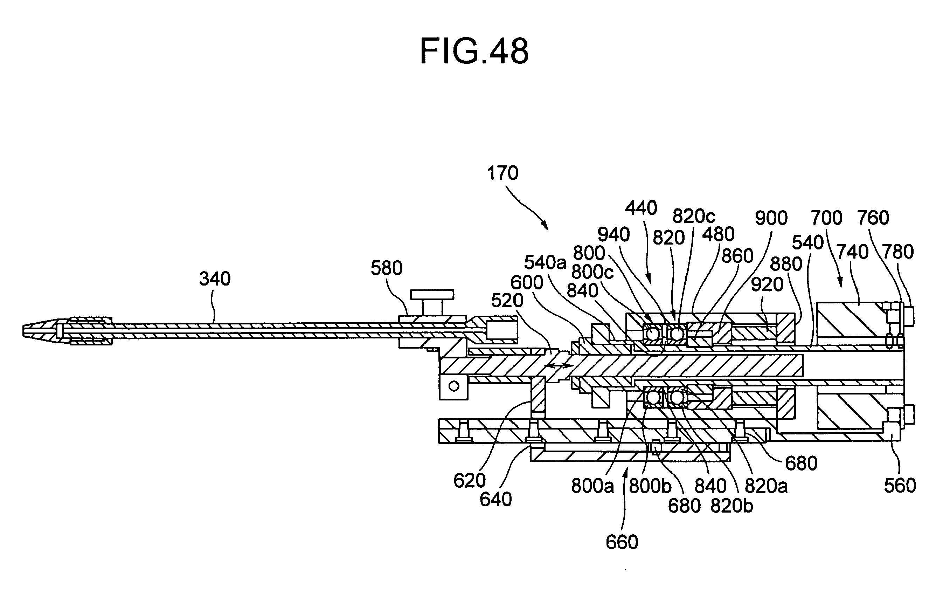

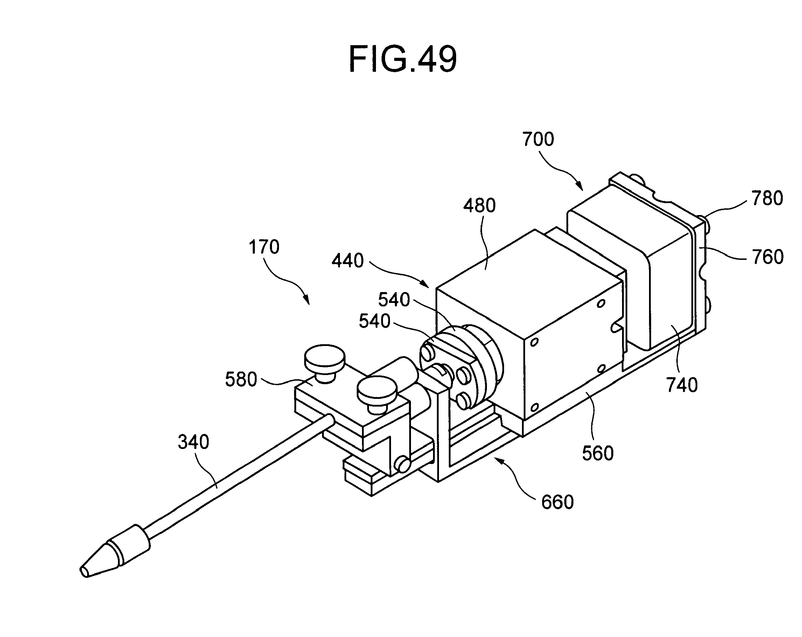

Next, the nut rotary actuator 170 in FIGS. 46 and 47 will be described with reference to FIGS. 48 and 49. FIG. 48 is a sectional view of the nut rotary actuator 170 in FIG. 47 as viewed in the direction parallel with the plane of the θ-stage 164. FIG. 49 is a perspective view of the nut rotary actuator 170 in FIGS. 47 and 48.

As illustrated in FIGS. 48 and 49, the nut rotary actuator 170 includes a housing 480 building up the body as the piezoelectric actuator, a screw shaft 520 having a screw portion on the outer peripheral side and a hollow rotary shaft 540 surrounding the screw shaft 520 are inserted, with the pipette-shaped injector 340 serving as the driving target, into the housing 48 formed substantially in the cylindrical shape. The housing 480, of which the bottom is fixed to a base 560, is configured by way of the micro-motion mechanism and the nano-positioner.

A proximal side of the pipette-shaped injector 340 is connected via a jig 580 to a front end of the screw shaft 520; a ball screw nut (BS nut) 600 as a screw element screwed to the screw portion formed along the outer periphery of the screw shaft 520, is fitted to about a middle of the screw shaft 520; and the slider 620 is connected to between the jig 580 and the screw shaft 520. The slider 620 is disposed in a direction substantially orthogonal to the base 560 and is connected to a linear guide 660 with a notch 640 being interposed therebetween. The linear guide 660 is disposed on a bottom side of the base 560 and is connected via a bearing 680 to the base 560 along the axial direction of the screw shaft 520.

Namely, the linear guide 660 is constructed to reciprocate the slider 620 supporting the front end side of the screw shaft 520 along the base 560 in accordance with the axial movement of the screw shaft 520. On this occasion, a portion, closer to the injector 340 than the BS nut 600, of the screw shaft 520 is slidably supported by the linear guide 660 via the slider 620, and hence the linear motions of the screw shaft 520 can be transferred to the injector 340.

The BS nut 600 is fixed to a stepped portion 540a of one end side (front end side) of the rotary shaft 540 in the axial direction, screwed to the screw portion formed along the outer periphery of the screw shaft 520, and therefore supports, without any restrictions, the screw shaft 520 making the reciprocating motions (linear motions) along the axial direction thereof. That is, the BS nut 600 is constructed as the element for converting the rotary motions of the rotary shaft 540 into the linear motions of the screw shaft 520.

The other end side of the rotary shaft 540 in the axial direction is connected to a rotary portion within a hollow motor 700. On a bottom side of a housing 740 of the hollow motor 700, a bolt 780 is fixed via a rubber washer 760 defined as an elastic member to the base 560. When the hollow motor 700 is driven, the rotary shaft 540 rotates, the rotary motions of the rotary shaft 540 are transferred to the screw shaft 520 via the BS nut 600, and the screw shaft 520 makes the linear motions along the axial direction thereof.

On the other hand, bearings 800, 820 are accommodated with an inner race spacer 840 being interposed therebetween adjacently to the stepped portion 540a of the rotary shaft 540. The bearings 800, 820 include inner races 800a, 820a, outer races 800b, 820b and balls 800c, 820c inserted in between the inner races and the outer races, in which the inner races 800a, 820a are fitted to the outer peripheral surface of the rotary shaft 540, and the outer races 800b, 820b are fitted to the inner peripheral surface of the housing 480, thus rotatably supporting the rotary shaft 540. The bearings 800, 820 are fixed, with the inner race spacer 840 being interposed therebetween, to the rotary shaft 540 by a lock nut 860. The bearing 800 abuts on the stepped portion 540a and an annular spacer 900 within the housing 480, thereby regulating the movement of the rotary shaft 540 in the axial direction. An annular piezoelectric element 920 and an annular spacer 900 are press-fitted in between the outer race 820b of the bearing 800 and a cover 880 of the housing 480.

Further, the bearings 800, 820 and the piezoelectric element 920 are given a preload by adjusting a length of the spacer 900 and closing the cover 880. To be specific, when adjusting the length of the spacer 900 and closing the cover 880, a fastening force corresponding to the position thereof acts, then the preload as a pressing force acting in the axial direction is applied to the outer races 800b, 820b of the bearing 800, and simultaneously the preload is also applied to the piezoelectric element 920. The predetermined preloads are thereby applied to the bearings 800, 820 and the piezoelectric element 920, and a gap 940 between the outer races of the bearings 800, 820 is formed as a distance between the outer races in the axial direction.

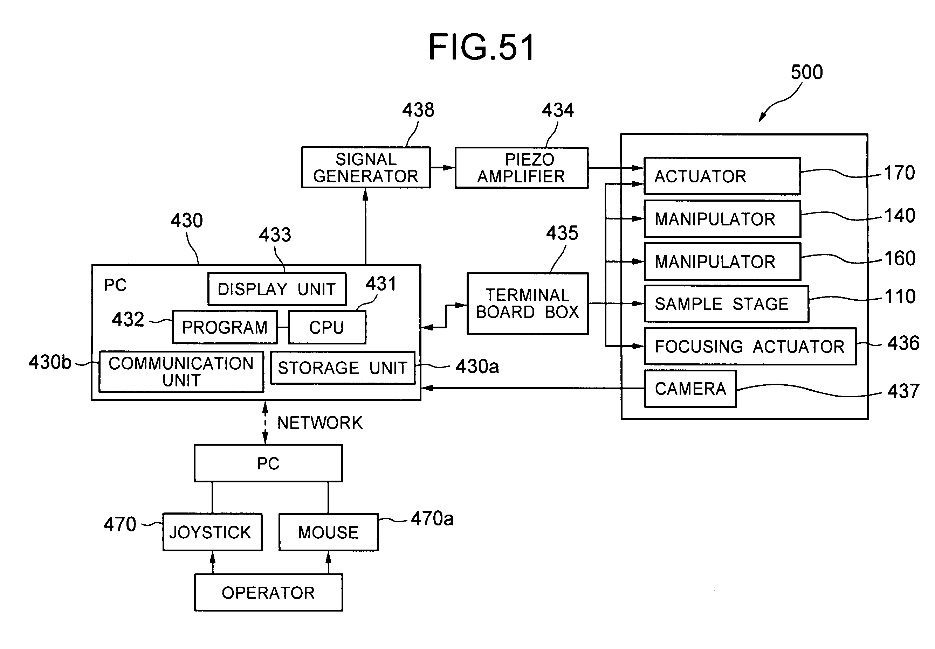

The piezoelectric element 920 is connected to a personal computer (PC) 430 (see FIG. 51) serving as the controller via a lead wire (unillustrated) and is configured as one element of the piezoelectric actuator which stretches and contracts along the longitudinal direction (the axial direction) of the rotary shaft 540 in a way that corresponds to a voltage given from the PC 430. Namely, the piezoelectric element 920 is configured to stretch and contract along the axial direction of the rotary shaft 540 in response to an applied voltage from the PC 430, thereby making the micromovement of the rotary shaft 540 along the axial direction. When the rotary shaft 540 makes the micromovement along the axial direction, this micromovement is transferred to the injector 340 via the screw shaft 520, and it follows that the microadjustment of the position of the injector 340 is made.

As described above, in the nut rotary actuator 170, the hollow motor 700 converts the rotary motions of the BS nut 600 into the linear motions of the screw shaft 520 to move the screw shaft 520 linearly, however, the injector 340 fitted to the screw shaft 520 has a rotation preventive function of preventing injector 340 itself from being rotated by the linear guide 660 when driving the hollow motor 700. Therefore, the injector 340 is enabled to make the linear reciprocating motions by driving the hollow motor 700.

The nut rotary actuator 170 in FIGS. 48 and 49 has a function of driving and setting the injector 340 at the central portion of the view field of the microscope by driving the hollow motor 700 and retreating from the central portion of the view field of the microscope, and can assist the glass capillary 341 (FIG. 47) fitted to the tip of the injector 340 to perforate the cell (ovum) by driving the piezoelectric element 920.

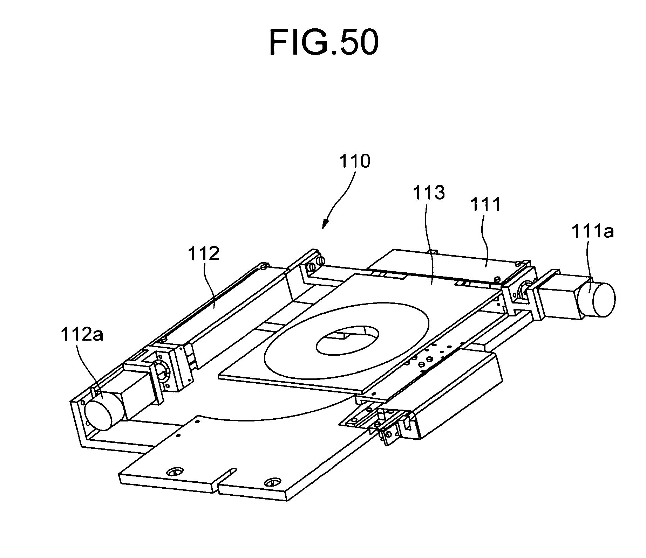

Next, the sample stage 110 will be described with reference to FIG. 50. FIG. 50 is a perspective view illustrating the sample stage 110 in FIG. 46. As in FIG. 50, the sample stage 110 is configured so that two uniaxial actuators 111, 112 are disposed in biaxial directions to move a sample plate 113 in the biaxial directions, the sample stage 110 being secured to the inverted microscope 120A in FIG. 46. Manual knobs 11a, 112a are fitted to ends of motor shafts of the uniaxial actuators 111, 112 for driving the sample stage 110, thereby enabling the manual manipulations to be done by cutting off the magnetic excitation of the respective motors.

Next, the personal computer serving as the controller for controlling the manipulator system 500 in FIG. 46 will be described by referring to FIG. 51. FIG. 51 is an explanatory block diagram of main components of the PC-based control system in the manipulator system 500 in FIGS. 46 - 50.

The PC (personal computer) 430 in FIG. 51 includes a CPU (Central Processing Unit) 431 which executes a variety of control operations, a program 432 stored in the storage device and read when using the manipulator system 500, a display unit 433 configured to include a liquid crystal panel, a CRT, etc, a storage unit 430a capable of storing the microscope images on a recording medium such as a hard disk and an optical disc, and a communication unit 430b serving as a communication interface with the outside via a network such as the Internet. Further, a joystick 470 and a mouse 470a each operated by the operator are input means to another PC connectable to the PC 430 via the network. In the PC 430, the CPU 431 controls the respective components of the manipulator system 500 on the basis of operations of the program 432 and manipulation signals related to the respective manipulations of the joystick 470 and the mouse 470a, which are received by the communication unit 430b from the outside via the network.

Specifically, the PC 430 drives a signal generator 438 and further drives a piezoelectric element 920 built up by a piezo element of the nut rotary actuator 170 through a piezo amplifier 434 on the basis of the signal of the signal generator 438. Moreover, the PC 430 is electrically connected via a terminal board box 435 respectively to the nut rotary actuator 170, the electrically-driven triaxial manipulators 140, 160, the sample stage 110 and the focusing actuator 436 that rotates the handle of the microscope 120A by the electric power, whereby the hollow motor 700 of the nut rotary actuator 170, the uniaxial actuators 161 - 163 of the electrically-driven triaxial manipulator 160, the uniaxial actuators 111, 112 of the sample stage 110 and the focusing actuator 436 are driven respectively. Further, with respect to the microscope 120A, the revolver unit of the objective lens and a light quantity adjusting unit of the light source may be electrically driven.

Furthermore, the manipulator 160 includes a syringe motor which adjusts a pressure of the injector 340, and the drive of this syringe motor is similarly controlled, thereby enabling the pressure of the syringe to be adjusted. Moreover, a camera 437 constructed to include an imaging element is disposed in the microscope 120A, and the microscope image captured by the camera 437 is displayed on the display unit 433 of the PC 430.

Further, the holding manipulator 140, though being similarly driven, includes the syringe motor which adjusts the pressure (negative pressure) of the holding capillary, and the drive of this motor is similarly controlled, whereby the pressure (negative pressure) of the syringe can be adjusted.

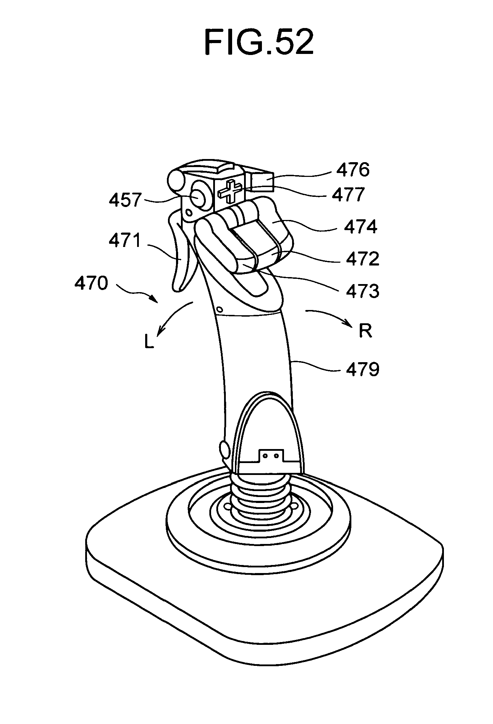

Next, the joystick in FIG. 51 will be described with reference to FIG. 52. FIG. 52 is a perspective view illustrating an example of the joystick in FIG. 51.

The manipulator system 500 described above is operated by using at least two joysticks 470. The joystick 470 provided with the handle 479 and the plurality of buttons 471 - 477 as illustrated in FIG. 52 is used by way of one example.

The manipulations exemplified in the following Table 1 can be executed by the handle 479 and the plurality of buttons 471 - 477 of the joystick 470 in FIG. 52 in the manipulator system 500. The handle 479 of the joystick 470 on the holding side is tilted (fallen down) in the right direction R and the left direction L with the result that the manipulators 140, 160 can be driven in the X- and Y-axis directions, and is rotated (turned) with the result that the manipulators 140, 160 can be driven in the Z-axis direction. Further, the injection joystick 470 can, similarly to the first embodiment, control the injection manipulation by turning the handle 479. Note that in the Table 1, "⇔" of a 4-way hat switch 477 represents the two switches in the right and left directions, and similarly "↓↑" represents the two switches in the up and down directions. Moreover, "negative pressure +" and "pressure +" each indicate an increase in absolute value of the pressure of each syringe motor, while "negative pressure -" and "pressure -" each indicate a decrease in absolute value of the pressure. "Micromovement drive Z +, Z-" indicates an increase and a decrease in moving quantity in the Z-axis direction.

**Table 1**

| | Holding side | Injection side |
|---|---|---|
| XY-axis drive | Fall down handle | Fall down handle |
| Z-axis drive | Turn handle | Turn handle |
| Button 471 | XY manipulation ON/OFF | XY manipulation ON/OFF |
| Button 472 | Ovum replacing manipulation | piezoelectric element drive ON/OFF |
| Button 473 | Holding negative pressure + | Injector pressure + |
| Button 474 | Holding negative pressure - | Injector pressure - |
| Button 475 | Micromovement drive Z+ | Micromovement drive Z+ |
| Button 476 | Micromovement drive Z- | Micromovement drive Z- |
| Hat switch 477⇔ | Ovum rotating manipulation | X-axis micromovement |
| Hat switch 477↓↑ | Focusing of microscope | Y-axis micromovement |

Note that the layout for the respective manipulations of the handle 479 and the plurality of buttons 471 - 477 as in the Table 1 can be properly changed to facilitate the usage for the operator. Further, on the occasion of driving the piezoelectric element 920 for the cell manipulation, such a possibility exists that there arises a necessity of driving the piezoelectric element 920 by use of a plurality of parameters, however, in this case a measure corresponding to this is to add the similar buttons.

Moreover, the joystick 470 for use may be of such a type (a speed instruction type) that the speed is adjusted corresponding to a degree of how much the handle 479 is fallen down (tilted) and the manipulators 140, 160 stop being driven when released, and may also be of such a type (a position control type) that the manipulators 140, 160 are driven to a degree corresponding to how much the handle 479 is fallen down. Moreover, the interface to be used for the manipulation described above may involve employing, e.g., a two-dimensional or three-dimensional mouse provided with the plurality of buttons as the mouse 470a in FIG. 51 other than the joystick.

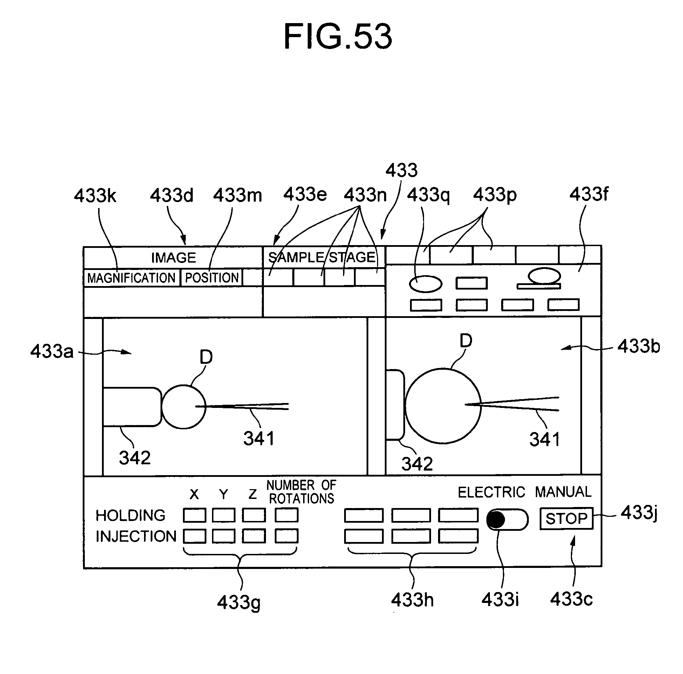

Next, a controller screen displayed on the display unit 433 of the PC 430 will be described with reference to FIG. 53. FIG. 53 is a view illustrating one example of the controller screen displayed on the display unit 433 of the PC 430 in FIG. 51.

The microscope images captured by the camera 437 similarly to FIG. 44 are displayed in at least two screens of the controller screen on the display unit 433 of the PC 430, in which, for instance, as in FIG. 53, the microscope images can be displayed in a first display screen 433a at a standard magnification and in a second display screen 433b at a zoom magnification, respectively. In the example of FIG. 53, a state where the ovum D is manipulated by the manipulator system 500, then held under the negative pressure by the holding glass-made capillary 342 and perforated by the injection capillary 341 provided at the tip 35a of the injector 341, is displayed in the first display screen 433a at the standard magnification and in the second display screen 433b at the zoom magnification. With this display mode, when referring to the microscope image at the low magnification and the microscope image at the high magnification in the same way as in FIG. 10, there is no necessity of changing the display magnification of the microscope image, the quick manipulation process can be executed by the manipulator system 500, and the micromanipulation can be performed through the image at the zoom magnification while gasping the state of the sample such as the cell (ovum) under the microscope through the image at the standard magnification at all times.

As depicted in FIG. 53, the first display screen 433a and the second display screen 433b are laid on the left and right sides of approximately the central area of the controller screen on the display unit 433, an manipulation state display panel 433c is laid on the lower side, and an image manipulation panel 433d, a sample stage manipulation panel 433e and a manipulator manipulation panel 433f are laid on the upper side, which can be respectively manipulated by the mouse 470a.

The actual XYZ position coordinates of the manipulators 140, 160 are displayed in display windows 433g on the manipulation state display panel 433c; further there are arranged display windows 433h from which it can be recognized which button is pressed when manipulating the buttons of the joystick 470, whereby the manipulation state can be grasped while seeing the image; and an electric/manual changeover unit 433i and a pause button 433j of the manipulators 140, 160 are arranged.

Moreover, an image magnification menu 433k and an image display position menu 433m in the first and second display screens 433a, 433b are arranged on the image manipulation panel 433d, thereby enabling the operator to adjust the image magnification and the display position. Further, the microscope images can be stored in the storage unit 430a by use of the mouse 470a on the controller screen, and moving pictures can be also stored by pressing the button on the controller screen.

Further, in addition to a menu 433n for adjusting a drive parameter of the sample stage 110, a button enabled to perform the operations such as conducting the XY drive and returning to the origin is disposed on the sample stage manipulation panel 433e. The sample stage 110 can be driven by manipulating the button while seeing the microscope images on the display screens 433a, 433b. For example, the button remains pushed, during which the sample stage 110 can be moved in the +X direction.

Furthermore, a menu 433p for adjusting the drive parameters of the manipulators 140, 160 is provided on the manipulator manipulation panel 433f, and the operator can use this menu by setting a desired parameter. Further, a button 433q used for driving the nut rotary actuator 170 in FIGS. 47 - 49 is disposed on the manipulator manipulation panel 433f. The nut rotary actuator 170 is driven at the preset stroke by pressing this button 433q, and the injector can thereby be set in the central area of the microscope and be retreated.

Note that the nut rotary actuator 170 and the sample stage 110 can be, as described above, driven by manipulating the buttons on the controller screen in FIG. 53 and may also be driven by the joystick 470 etc.

According to the conventional manipulator system as disclosed in Patent document 4, the joystick etc is installed in the installing location of the microscope, the operator manipulates while looking through an eyepiece, however, since the joystick in the manipulation such as this has to be manipulated without the visual observation, the skilled technique is needed, however, by contrast, according to the manipulator system 500 described above, it is feasible to manipulate the joystick 470 with the visual observation while seeing the controller screen on the display unit 433 and to use the manipulator system 500 easily and precisely because the manipulation state of the joystick 470 is displayed also on the controller screen.

### <Eleventh Embodiment>

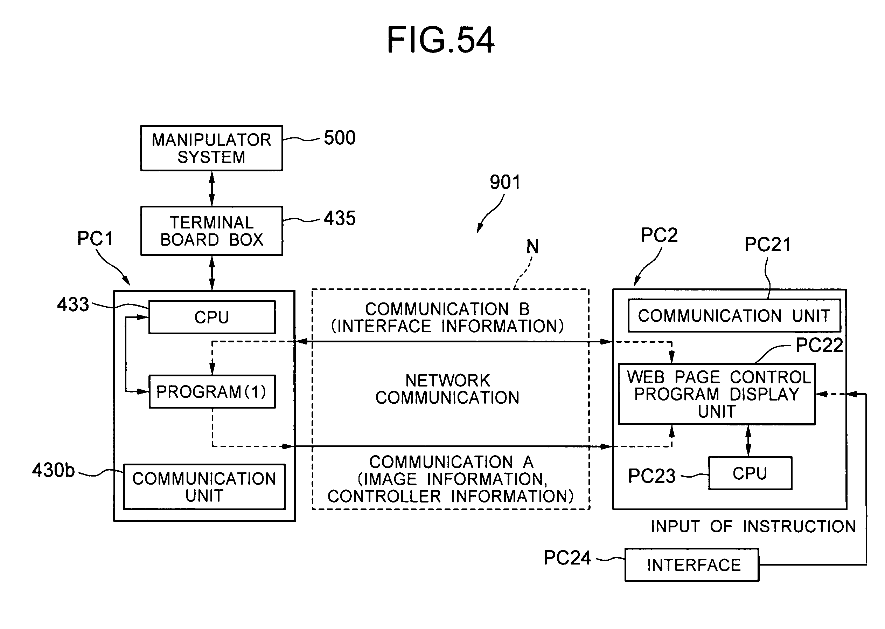

Next, a remote-controllable manipulator system according to an eleventh embodiment will be described with reference to FIG. 54. FIG. 54 is an explanatory conceptual diagram of the manipulator system that is remote-controllable via the network according to the eleventh embodiment.

As illustrated in FIG. 54, a manipulator system 901 according to the eleventh embodiment is configured to make the manipulator system 500 remote-controllable through the network communications.

In the manipulator system 901, the manipulator system 500 and a personal computer PC1 serving as the controller are connected to respective connectors of the terminal board box 435. The PC1 may be the same as PC 430 in FIG. 51 but is preinstalled with a program (1) for controlling the manipulator system 500.

Further, in the manipulator system 901, as in FIG. 54, a personal computer PC2 for the remote control is separately prepared and is made connectable to a network N together with the PC1. The network N may be the Internet and may also be a network established in a dedicated line or a specified area.

The personal computer PC2 for the remote control includes a communication unit PC21 serving as a communication interface with the outside via the network N such as the Internet, a display unit PC22 configured to include the liquid crystal pane, the CRT, etc and capable of displaying the microscope images and the control screen as a control program in the form of a Web page, and a central processing unit (CPU) PC23 which performs the variety of control operations, in which an interface PC24 operated by the operator is connected as an instruction input means.

The personal computer PC2, which is connected via the network N to the PC1, receives image information and controller information transmitted from the PC1 through a communication A in FIG. 54, displays the microscope images and the control program screen on the display unit PC22, and transmits interface information inputted from the interface PC24 to the PC1 through a communication B, and the PC1 operates the manipulator system 500 on the basis of the received interface information.

The interface PC24 may be, e.g., the joystick 470 (FIGS. 51 and 52) and the mouse 470a (FIG. 17), and, in the case of the joystick 470, the same manipulations as those given in the Table 1 described above can be assigned to the handle 479 and the plurality of buttons 471 - 477 in FIG. 18.

The remote control in the manipulator system 901 in FIG. 54 will be described. To start with, the manipulations can be executed by setting the injection capillary 341 (FIGS. 47 and 53), the holding capillary 342 (FIG. 53) and the Schale containing the sample that are all required for the manipulations of the manipulators in the manipulator system 500 in FIG. 46.

Next, the PC1 and the PC2 are booted and connected to each other via the network N, and the PC1 in FIG. 54 starts up the program (1) for driving the manipulator system 500. In order to remote-control the started program (1) itself, when the controller information is transmitted to the PC2 via the network N from the PC1, the control program screen taking the form of the Web page is displayed on the display unit PC22 of the PC2. Moreover, the information on the microscope image captured by the camera 437 is transmitted to the PC2 via the network N from the PC1 and displayed on the display unit PC22. With the configuration such as this, when executing the program (1), the manipulator system 500 can be controlled by the instruction input signal given from the interface PC24 connected to the PC2, and the program (1) running on the PC1 is displayed and is set controllable within the Web page opened on the PC2, thereby enabling all the manipulations of the manipulator system 500 to be executed on the PC2. Thus, the PC2 can remote-control the manipulator system 500. Note that the control program screen (controller screen) of the display unit PC22 of the PC2 may take the layout of the screen display as in FIG. 53, however, the embodiment is not limited to the example in FIG. 53.

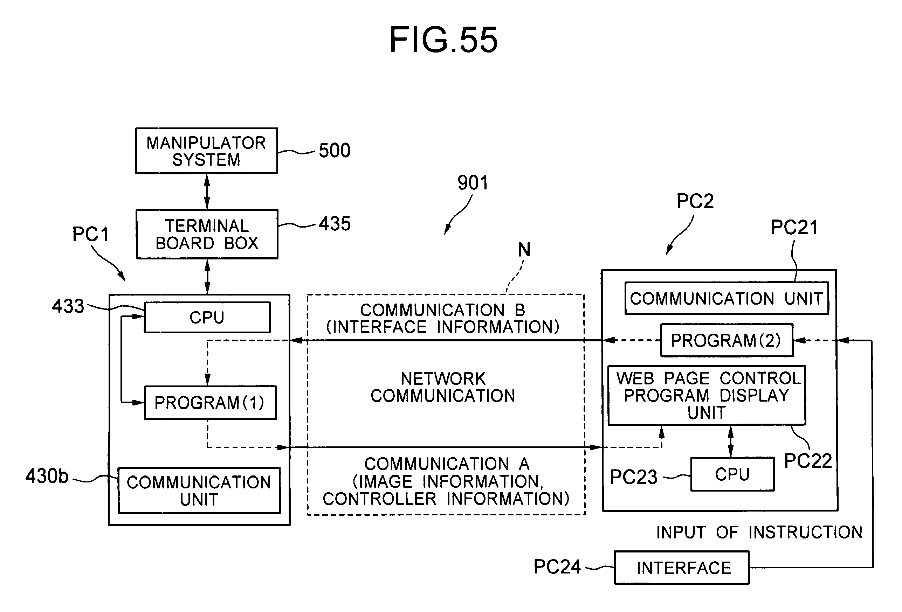

A modified example of FIG. 54 will be described with reference to FIG. 55. As in FIG. 55, the PC2 is preinstalled with a program (2) for controlling the manipulator system 500 by a signal given from the interface PC24, and inputs, upon starting up the program (2), the instruction input signal from the interface PC24, at which time the program (2) transmits the interface information to the PC1, and the program (1) on the PC1 reads the interface information transmitted from the program (2) via the network N, whereby all the manipulations of the manipulator system 500 can be executed on the PC2.

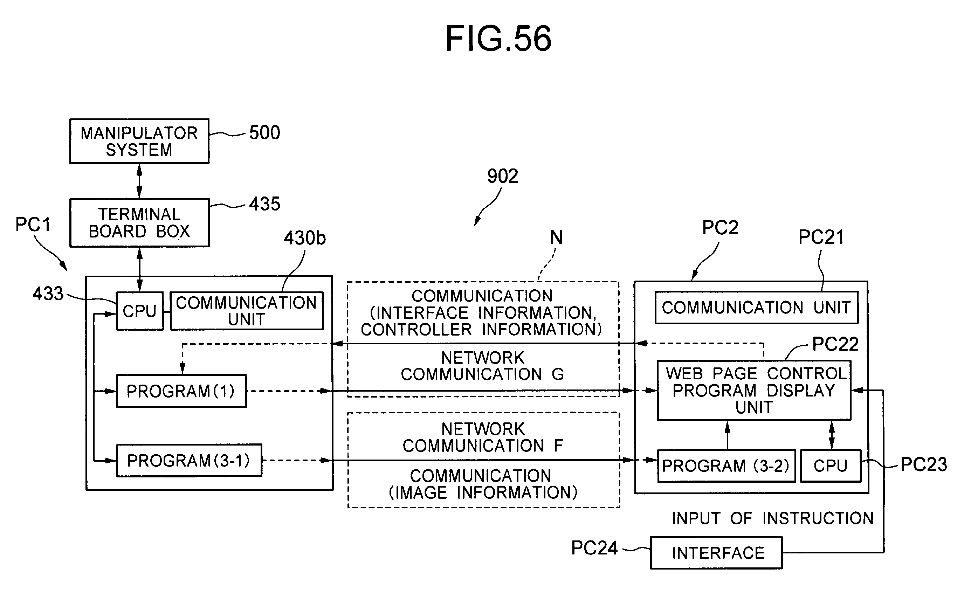

Next, another example of the remote-controllable manipulator system according to the eleventh embodiment will be described with reference to FIG. 56. FIG. 56 is an explanatory conceptual diagram of the manipulator system that is remote-controllable via the network according to the eleventh embodiment.

A manipulator system 902 depicted in FIG. 56 is configured to perform, as compared with FIG. 54, the communications based on another program for the image information communications. To be specific, FIG. 54 shows the configuration of incorporating the program for displaying the microscope images sent from the microscope into the program (1), and hence, on the occasion of forwarding the image information by displaying the control screen (the control program screen) based on the program (1) in the form of the Web page and conducting the control on the control screen, a data capacity (data size) for the communication increases depending on a network communication method etc. Such being the case, as in FIG. 56, ports for the image information communications are installed separately at the PC1 and the PC2, and the image information communications are performed through a network communication F by use of a program (3-1) installed into the PC1 and a program (3-2) installed into the PC2. Further, the interface information communication from the PC2 to the PC1 and the controller information communication from the PC1 to the PC2 are performed through a network communication G similarly to FIG. 54.

According to the manipulator system 902 in FIG. 54, the PC2 remote-controls the manipulator system 500, on which occasion the image information communications are smoothly performed, and a time-lag in the communications when manipulating the manipulator can be reduced.

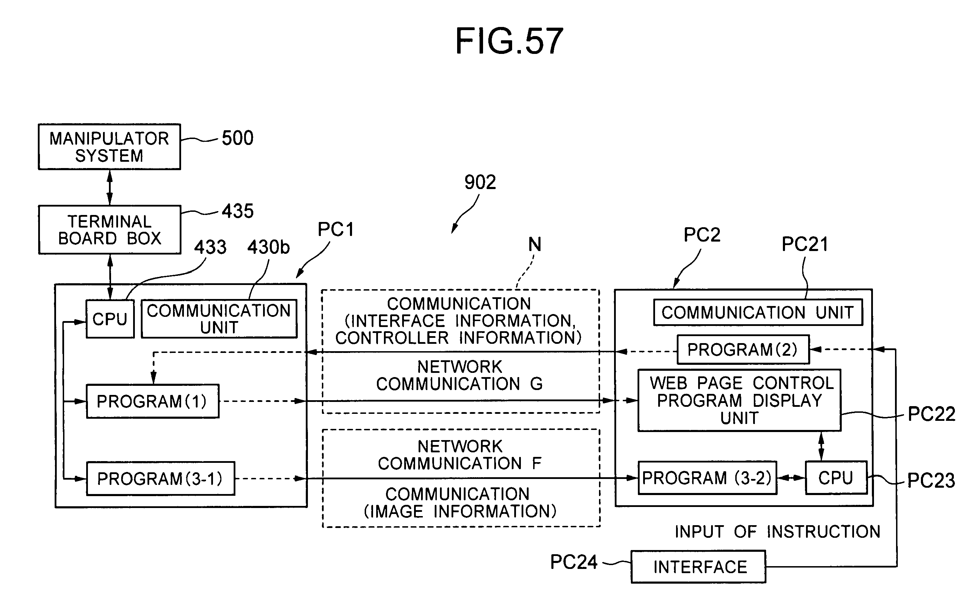

A modified example in FIG. 56 will be described with reference to FIG. 57. The example in FIG. 57 is that the PC2 in FIG. 56 is installed with the program (2) for controlling the manipulator system 500 by the signal given from the interface PC24 similarly to FIG. 55. Another example of the eleventh embodiment is that the program for the image information communications may be inserted into the program (2) in FIG. 55 and thus be used, whereby it is feasible to reduce a load on the operations on the Web page for driving the manipulator system 500.

As described above, according to the manipulator systems 901, 902 in FIGS. 54 - 57, the manipulator system 500 can be remote-controlled; in the case of using the manipulator system 500 within a clean bench, the operator has therefore no necessity of manipulating by putting an upper limb into the clean bench; further the operator has no necessity of conducting the injection manipulation by wearing a clean suite if required to perform the manipulations in a clean room; and consequently the load on the operator can be reduced. Moreover, even in the case of conducting the manipulations by using the manipulator system 500 under the restricted environment, the manipulator system 500 can be employed even under the restricted environment by remote-controlling the manipulator system 500. Furthermore, even in the case of being distanced far, if the PC1 and the PC2 can be connected to the network, the remote control can be done.

Moreover, even if the skilled technician does not exist nearby the manipulator system 500; the injection manipulation can be conducted; the operator is not required to exist at the location where the manipulator system 500 is installed; and another person only prepares the injection capillary 341, the holding capillary 342 and the Schale R containing the sample, whereby the manipulator system 500 can be manipulated.

### <Twelfth Embodiment>

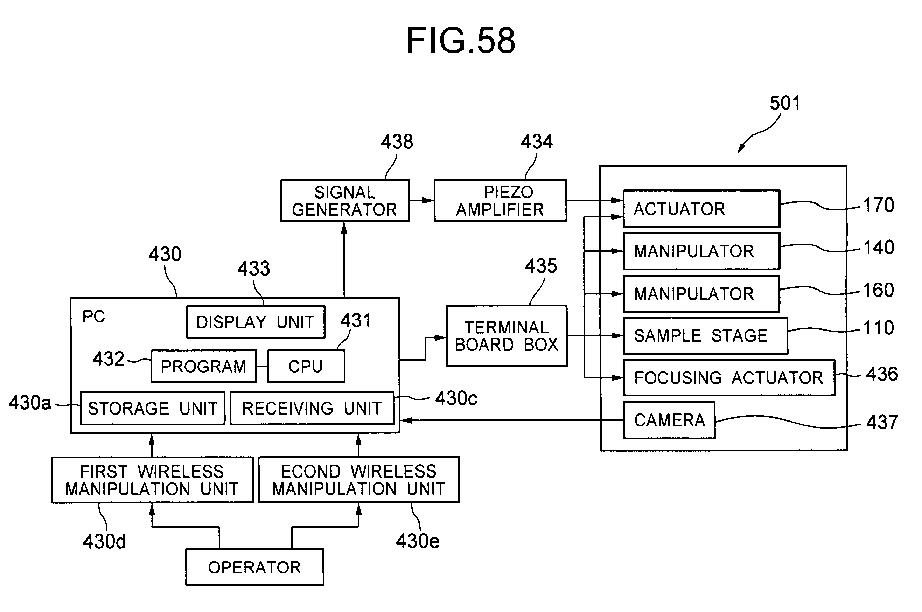

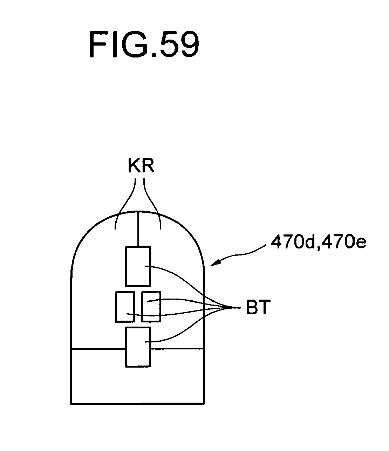

FIG. 58 is an explanatory block diagram of the main components of the control system of the manipulator system according to a twelfth embodiment. FIG. 59 is a plan view illustrating an example of a wireless interface usable in the manipulator system in FIG. 58.

The manipulator system according to the twelfth embodiment has the same configuration as that in FIGS. 46 - 50, however, the wireless interface is used as a means of manipulating the manipulator. That is, as in FIG. 58, a manipulator system 501 according to the twelfth embodiment includes a first wireless manipulation unit 430d that wirelessly transmits a manipulation signal for manipulating mainly the injection capillary manipulator 160, and a second wireless manipulation unit 430e that wirelessly transmits the manipulation signal for manipulating mainly the holding capillary manipulator 140. The personal computer 430 includes a receiving unit 430c which receives the manipulation signals from the first wireless manipulation unit 430d and the second wireless manipulation unit 430e, and controls, based on these received manipulation signals, the respective units of the manipulator system 501. These wireless manipulation units 430d, 430e wirelessly transmit the manipulation signals as carried on radio waves and infrared rays.

The first wireless manipulation unit 430d and the second wireless manipulation unit 430e involve using, e.g., a wireless pointer and a wireless interface integral with the mouse as in FIG. 59. The wireless interface in FIG. 59 has a mouse function and a pointer function and is equipped with a click portion KR and a plurality of button portions BT that are manually operated, in which the mouse function works when used on the desktop, and the pointer function works even when operated in the air. The wireless manipulation unit functions through an optical sensor when the mouse function works and can be manipulated as a gyro sensor etc in the wireless interface functions when operated in the air. When using the manipulators 140, 160, the personal computer 430 receives and detects the manipulation signals that are manually generated by the pointer function, thus manipulating the manipulators 140, 160. In the case of driving the sample stage 110, the wireless interface in FIG. 59 is placed on the desktop and manipulated by using the mouse function. Other actuators and injectors in the manipulator system 501 are operated by using the plurality of button portions BT.

The personal computer 430 detects a usage status of the wireless interface in FIG. 59, determines which mode (on the desktop or in the air) the wireless interface is operated in, further recognizes a pointer position based on the pointer function and drives the manipulator system 501 in accordance with the recognized position. The operator puts the pointer on the image displayed on the display unit 433, and operates the pointer while arbitrarily moving the pointer.

Incidentally, there is a possibility that the malfunction is brought about when detecting a minute motion of the pointer, and hence it is preferable to operate the pointer in a way that enables the manipulator system 501 to be driven only while pressing the button in the wireless interface when operated. Further, a variety of manipulations in the manipulator system 501 can be attained by increasing the number of the button portions BT according to the necessity in the wireless interface in FIG. 59. Still further, the wireless interface in FIG. 59 is one example, and interfaces taking other configurations and types are usable irrespective of the configuration and the type of the interface.

The first wireless manipulation unit 430d and the second wireless manipulation unit 430e may be configured by use of the single wireless interface in FIG. 59, in which case the injection capillary manipulator 160 may be driven when the wireless interface in FIG. 59 is operated in the air, and the holding capillary manipulator 140 may be driven when operated on the desktop (and vice versa).

If the first wireless manipulation unit 430d and the second wireless manipulation unit 430e are configured by use of the two wireless interfaces, the respective wireless interfaces are used for the injection and for the holding and may also be used interchangeably, in which case the manipulator may be driven when used in the air, and the actuator of the sample stage 110 etc may be driven when used on the desktop (and vice versa).

Further, on the occasion of projecting the microscope image on the display unit 433, displaying the two types of microscope images at the standard magnification and at the zoom magnification as in FIGS. 44 and 53 and performing the manipulation by putting the pointer on each image, a speed gain of the manipulator system with respect to each image may be set. As a result, the drive of the manipulator can be manipulated more minutely when putting the pointer on the image at the zoom magnification than driving the manipulator when putting the pointer on the image at the standard magnification.

According to the twelfth embodiment, the operator can manipulate the manipulator system 501 in the easy-to-manipulate posture and position while seeing the microscope image projected on the display unit 433, thereby enabling the load on the operator to be reduced. Moreover, there is no necessity of manipulating nearby the microscope 120A, the vibrations propagated to the microscope when the operator conducts the manipulation can be reduced, and an adverse effect in the microscope 120A due to the vibrations can be restrained.

It is to be noted that the present invention is not limited to the embodiments described in the present specification, and it is apparent to the person skilled in the art from the embodiments described in the present specification and from the technical idea that present invention embraces other embodiments and modified examples.

Moreover, the joystick 47, 147, 470 in the embodiments may each take a wireless structure.

Furthermore, the capillary, the glass capillary and the injection capillary in the embodiments may be of the same type and may also be of different types. Similarly, the capillary and the holding capillary in the embodiments may be of the same type and may also be of different types. In addition, the micro target object and the micromanipulation target object may be of the same type and may also be of different types.

Further, as a matter of course, any two or more of the first through twelfth embodiments may be combined.

### [Description of the Reference Numerals and Symbols]

10... manipulator system, 12... microscope unit, 14... holding manipulator, manipulator, 16... injection manipulator, manipulator, 18... camera, 20... microscope, 25... holding capillary, capillary, 29... syringe pump, 30, 32... driving device, 35... injection capillary, capillary, 39... injection pump, 40, 42... driving device, 43... personal computer, controller, 45... display unit, 46... control unit, 47... joystick, 70... motor, 92... piezoelectric element, 104...template image creation requirement/non-requirement button, 110, 111... template image, D... ovum, cell, D1... already-manipulated ovum, D2... not-yet-manipulated ovum, d... nucleus, 120... manipulator system, 121... sample stage, 125... microscope unit, 126... light source unit, 143... personal computer, controller, 147... joystick, 47h... lever, B1 - B3... plural culture mediums, R... Schale, 130... microelectrode, 150... switch operation unit

## Claims

1. A manipulator system comprising:
microscope means observing a micromanipulation target object;
a pair of manipulators being electrically drivable in X-, Y- and Z-axis three directions for manipulating the micromanipulation target object;
a sample stage receiving a placement of the micromanipulation target object and being electrically drivable in X-Y axis plane directions;
control means controlling the drive of the manipulators and the drive of the sample stage; and
manipulation means driving the manipulators and the sample stage via the control means,
wherein a manipulation tool is fitted to the manipulator,
the control means gets stored with positional information of the manipulation tool with respect to a plurality of regions set for the micromanipulation target object, and
at least one of relative movements between the regions of the manipulation tool by the sample stage and/or the manipulator is automatically conducted based on the stored positional information.

2. A manipulator system comprising:
microscope means observing a micromanipulation target object;
a pair of manipulators being electrically drivable in X-, Y- and Z-axis three directions for manipulating the micromanipulation target object;
a sample stage receiving a placement of the micromanipulation target object and being electrically drivable in X-Y axis plane directions;
control means controlling the drive of the manipulators and the drive of the sample stage; and
manipulation means driving the manipulators and the sample stage via the control means,
wherein a manipulation tool is fitted to the manipulator,
the control means gets stored with positional information of the manipulation tool with respect to a plurality of regions set for the micromanipulation target object, and
relative movements between the regions of the manipulation tool by the sample stage and/or the manipulator are automatically conducted based on the stored positional information.

3. The manipulator system according to claim 1 or 2, wherein when the manipulation makes the relative movement, the sample stage makes the relative movement between the regions, while the manipulator retreats the manipulation tool.

4. The manipulator system according to any one of claims 1 to 3, wherein the positional information is stored by manipulating the manipulation means.

5. A manipulation method of a micromanipulation target object, executed by using the manipulator system according to any one of claims 1 to 4, comprising:
moving a manipulation tool fitted to a manipulator automatically between a plurality of culture mediums provided for the micromanipulation target object;
manipulating the manipulation tool in the culture medium after being moved; and
returning thereafter the manipulation tool automatically to the original culture medium.

6. A manipulator system comprising:
microscope means observing a micromanipulation target object;
a pair of manipulators being electrically drivable in X-, Y- and Z-axis three directions for manipulating the micromanipulation target object;
control means controlling the drive of the manipulators; and
manipulation means driving the manipulators via the control means,
wherein the control means gets stored with positional information of a manipulation tool when the manipulation tool fitted to the manipulator performs a first manipulation over the micromanipulation target object for a manipulation conducted afterward by the manipulation tool.

7. The manipulator system according to claim 6, wherein the control means automatically controls the movement for a second manipulation of the manipulation tool and focusing of the microscope means after the movement.

8. The manipulator system according to claim 7, wherein the control means executes, after the second manipulation, the control so that the manipulation tool automatically returns to the first manipulation position on the basis of the stored positional information and performs focusing of the microscope means.

9. A manipulation method of a micromanipulation target object, executed by using the manipulator system according to any one of claims 6 to 8, comprising:
perforating a clear zone of an ovum as a micromanipulation target object with a tip of a manipulation tool fitted to a manipulator;
automatically returning thereafter the manipulation tool to a clear zone perforating position after the manipulation tool has moved and conducted a sampling manipulation of a sperm; and
performing an injection manipulation of the sperm.

10. A manipulator system comprising:
microscope means observing a micromanipulation target object;
a pair of manipulators being electrically drivable in X-, Y- and Z-axis three directions for manipulating the micromanipulation target object;
control means controlling the drive of the manipulators; and
manipulation means driving the manipulators via the control means,
wherein an electrode means for perforating the micromanipulation target object is disposed at the tip of the manipulation tool fitted to the manipulator.

11. The manipulator system according to claim 10, wherein a microelectrode and an injection capillary are disposed in a side-by-side relation as the electrode means at the tip of the manipulation tool.

12. A manipulation method of a micromanipulation target object, executed by use of the manipulator system according to claim 11, comprising:
perforating a clear zone of an ovum as a micromanipulation target object with a microelectrode disposed at the tip of the manipulation tool fitted to the manipulator; and
performing thereafter the injection manipulation of a sperm by the injection capillary disposed in the side-by-side relation with the microelectrode.

13. A manipulator system comprising:
microscope means observing a micromanipulation target object;
a pair of manipulators being electrically drivable in X-, Y- and Z-axis three directions for manipulating the micromanipulation target object;
a sample stage receiving a placement of the micromanipulation target object and being electrically drivable in X-Y axis plane directions;
control means controlling the drive of the manipulators and the drive of the sample stage; and
manipulation means driving the manipulators and the sample stage via the control means,
wherein the control means controls the drive of the manipulator and the drive of the sample stage so as to automatically make a movement to a replacing position for replacing the capillary provided at the tip of the manipulation tool fitted to the manipulator and a movement of the capillary to under a view field of the microscope.

14. The manipulator system according to claim 13, wherein a switch operation unit is disposed for the sequence manipulation in the vicinity of the microscope means.

15. The manipulator system according to claim 1, 2, 6, 10 or 13, wherein the manipulator has a structure of a nano-positioner and can conduct the injection into the micro target object by performing a micro-motion of the capillary provided at the tip of the manipulation tool,
the manipulation means includes a manipulation unit manipulated by an operator for instructing the control means to perform the motion of the capillary, and
the manipulation unit includes a turn manipulation unit which turns at least a portion of the manipulation unit, and the capillary performs at least a part of the injection manipulation by turning the turn manipulation unit.

16. The manipulator system according to claim 15, wherein the injection manipulation of the capillary includes an operation of perforating the micro target object, an operation of injection into the micro target object and an operation of removing the capillary from the micro target object.

17. The manipulator system according to claim 15 or 16, wherein at least one turn manipulation unit is provided, and
the operation of injection into the micro target object and the operation of removing the capillary from the micro target object are conducted by manipulating the turn manipulation unit and a different manipulation unit, separately.

18. The manipulator system according to claim 1, 2, 6, 10 or 13, wherein the manipulator has a structure of a nano-positioner and can conduct the injection into the micro target object by performing a micro-motion of the capillary provided at the tip of the manipulation tool,
the manipulation means includes a manipulation unit manipulated by an operator for instructing the control means to perform the motion of the capillary, and
the manipulation unit includes a turn manipulation unit which turns at least a portion of the manipulation unit, and the operation of the injection into the micro target object is performed by turning the turn manipulation unit.

19. The manipulator system according to any one of claims 15 to 18, wherein the turn manipulation unit is disposed in the vicinity of the manipulation unit.

20. The manipulator system according to any one of claims 15 to 19, wherein the manipulator includes a coarse-motion unit which coarsely drives the capillary and a micro-motion unit which minutely drives the capillary, and
the control means changes over the coarse-motion and the micro-motion of the capillary on the basis of the manipulation of the manipulation unit.

21. A manipulation method of a micromanipulation target object, executed by use of the manipulator system according to any one of claims 15 to 20, comprising:
performing an injection manipulation.
